# EUROPEAN PATENT APPLICATION

(11) **EP 4 386 020 A1**
(43) Date of publication of application: **19.06.2024**
(21) Application number: 22212899.3
(22) Date of filing: 12.12.2022
(51) Int. Cl.: C08F 283/02, C08F 283/06, C08L 51/08

(54) **BIODEGRADABLE GRAFT POLYMERS FOR DYE TRANSFER INHIBITION**

(71) Applicant: BASF SE, 67056 Ludwigshafen am Rhein (DE)
(72) Inventor: The designation of the inventor has not yet been filed
(74) Representative: BASF IP Association

(57) **Abstract**

Graft polymers, their preparation and use such as in cleaning compositions, wherein the graft polymers comprise as polymer backbone (A) a polyalkylene oxide ester polymer with a weight average molecular weight Mw of 500 to 50 000 g/mol, comprising 10 to 560 ether groups and 2 to 51 ester groups, which are interconnected with alkylene groups, which is significantly better biodegradable than conventional polyalkylene oxide polymers, and polymeric side chains grafted onto the polymer backbone A, wherein said polymeric sidechains (B) are obtainable by co-polymerization of at least one monomer selected from (B1), and (B2), with the monomers (B1) being at least one vinyl ester monomer, (B2) with (B2a) and optionally (B2b), with (B2a) at least one olefinically unsaturated amine-containing monomer, preferably being 1-vinylimidazole or its derivatives, and optional (B2b) at least one further nitrogen-containing monomer, being preferably a vinyllactame-monomer.

The graft polymer is preferably employed as dye transfer inhibitor, more preferably in laundry compositions.

## Description

The present invention relates to novel graft polymers comprising a polymer backbone (A) as a graft base having polymeric sidechains (B) grafted thereon, their production, and their use as dye transfer inhibitors. Further, the present invention relates also to the use of such a graft polymer within fabric and home care products, and the use of such graft polymers for inhibiting the dye transfer in laundry applications. This invention also relates to fabric and home care products as such containing such a graft polymer.

Such graft polymers for use in dye transfer inhibition are not yet known.

The polymer backbone (A) is a polyalkylene oxide ester polymer ("PAG-ester" polymer) comprising as building blocks i) diols of polyalkylene oxides ("PAG"), ii) di-carbonic acids of PAG and/or iii) mono-carbonic acid-mono-ols of PAG (all mentioned hydroxy-groups and carboxyl groups of the compounds i), ii) and iii) mentioned before being the end-groups of PAG), wherein when only i) and iii) are present at least two internal ester groups in the PAG-ester polymer are present, such polymer backbone preferably having a weight average molecular weight Mw of 500 to 50 000 g/mol and a polydispersity PD of 2 to 6, comprising 10 to 560 ether groups and 2 to 51 ester groups, which are interconnected with alkylene groups, and wherein further low molecular weight di-carbonic acids may be contained in addition to the compounds iii).

The polymer backbone (A) may also be described as polyalkylene oxide ester polymer ("PAG-ester" polymer) comprising as building blocks i) diols of polyalkylene oxides ("PAG"), ii) di-carbonic acids of PAG and/or iii) mono-carbonic acid-mono-ols of PAG (all mentioned hydroxy-groups and carboxyl groups of the compounds i), ii) and iii) mentioned before being the end-groups of PAG), wherein when only i) and iii) are present at least two internal ester groups in the PAG-ester polymer are present, wherein further low molecular weight di-carbonic acids may be contained in addition to the compounds ii).

The polymeric sidechains (B) attached on the polymer backbone (A) are obtainable by polymerization of at least one monomer being selected from i) vinyl ester monomer (B1), and further monomer(s) (B2), with the monomers B2 comprising at least one monomer selected from nitrogen-containing monomers, preferably amine-containing monomer, and most preferably vinyl imidazole. As the graft polymers of the invention based on such PAG-ester-polymer show a significantly better biodegradation than conventional graft polymers based on conventional polyalkylene oxide polymers. The present invention further relates to a process for obtaining such a graft polymer, the process is preferably carried out by free-radical polymerization.

Furthermore, the present invention relates to the use of such a graft polymer within fabric care and home care products, and the use of such graft polymers for inhibiting the dye transfer in laundry applications.

This invention also relates to fabric and home care products as such containing such a graft polymer. Such graft polymers for use in dye transfer inhibition are not yet known.

### Background

Due to the climate change, one of the most important targets of the detergent and cleaning (D&C) industry today is to significantly lower the CO2 emission per wash, by improving e.g. cold water conditions by improving the cleaning efficiency at low temperatures of below 40, 30 or 20 or even colder, to lower the amounts of chemicals employed per wash, increasing the weight-efficiency of the cleaning technologies, introducing bio-derived components etc. Hence, one important target of the D&C industry is the need for biodegradable ingredients, to improve the sustainability of the cleaning formulations (and especially the laundry and dish wash formulations) and to avoid the accumulation of non-degradable compounds in the ecosystem. Hence, there is a need to provide compounds being bio-degradable and still having at least the same performance as already known but not bio-degradable compounds, such biodegradation as measured under defined conditions within 28 days as to be required by many users especially in the field of detergents, and as being a future requirement by applicable legislation in several countries and regions of the world.

Polyalkylene oxides are important polymers with a wide range of applications. They are, inter alia, used as solvents, consistency enhancer, emulsifier, dispersants, protective colloids, plasticizers, release agents as well as ingredients or raw materials in the production of adhesives and diverse polymers such as graft polymers. Besides various technical applications, they are, for example, also used in a variety of consumer products such as in cosmetics or washing and cleaning agents.

They also have been extensively used as basis to produce graft polymers as further exemplified below.

Various countries have already introduced initiatives to ban microplastics especially in cosmetic products. Beyond this ban of insoluble microplastic there is an intense dialog on future requirements for soluble polymers used in consumer products. It is therefore highly desirable to identify better biodegradable ingredients for such applications. Even radically produced graft polymers with a polyethylene glycol backbone show only limited biodegradation in wastewater if the polyethylene glycol backbone is within the molecular weight range mentioned above, and particularly if the molecular weight is above a few thousands g/mol.

Whereas low molecular weight polyethylene oxide with M_{w} of 600 g/mol is easily biodegradable, polyethylene oxide with M_{w} of 6000 g/mol is only poorly biodegradable. BASF's safety data sheet for Pluriol^{®} E 600, revised version 2.0, dated 05. January 2021, affirms for polyethylene glycol with M_{w} = 600 g/mol a DOC value (dissolved organic carbon) measured according to OECD 301A of > 70%. In contrast to that, the biodegradability of polyethylene glycol with M_{w} = 6000 g/mol is mentioned in BASF's safety data sheet for Pluriol^{®} E 6000 Pellet, revised version 2.0, dated 10. August 2018, to be only poor, showing only 10-20% CO₂ formation relative to the theoretical value (60 d) according to OECD 301B.

The classical polyalkylene oxides contain polymer chains of oxyalkylene groups with OH groups at both ends. However, there are also known in the state of the art polyalkylene oxides with functionalized end groups, which show specific properties and allow specific application.

When laundering fabrics, dye transfer can cause challenges such as that dyes from one portion of a fabric may become suspended in a wash liquor and may then deposit on a different portion of the fabric, or on a different fabric altogether. Transfer of such dyes (known as "fugitive dyes") can cause dye graying and discoloration of fabrics, especially of those of a light or white color.

Certain polymers, generally known as dye transfer inhibitor/inhibition polymers ("DTI"-polymers; "DTI" also used for "dye transfer inhibition"), have traditionally been used in laundry compositions to address the dye transfer problem. Such polymers include poly-1-vinylpyrrolidone (PVP), poly(vinylpyridine-N-oxide) (PVNO), poly-1-vinylpyrrolidone-co-1-vinylimidazole (PVPVI), and polyvinylpyrrolidone (vinylpyridine-N-oxide (PVPVNO) polymers, which have typically included relatively high levels of 1-vinyl pyrrolidone ("VP"). These traditional DTI polymers are quite effective at inhibiting the transfer of direct dyes, but are not biodegradable due to their carbon-carbon-backbone, which cannot be attacked successfully by microbes.

Copolymers of 1-vinylimidazole and 1-vinylpyrrolidone and their use as efficient dye transfer inhibitor (DTI) in laundry application (liquid, gel-like and solid colour care detergents) are well known (such as "Sokalan^{®} HP 56" by BASF) and are regarded as "gold-standard". Those polymers show an excellent dye transfer inhibition at very low amounts, but are - as well as all the before mentioned other known DTI-polymers - not biodegradable in any significant amount as they also have a carbon-carbon-bonded polymer backbone chain.

However, biodegradation of such polymers for use in detergent applications is highly desirable, as a certain amount of consumer products containing such polymers is rinsed away after their use and may, if not biodegraded or otherwise removed in the sewage treatment plant, end up in the river or sea.

It is therefore highly desirable to identify better biodegradable ingredients for such applications.

Various further attempts have already been made to provide DTI-polymers of similar performance as the copolymers 1-vinylimidazole and 1-vinylpyrrolidone, but none has achieved a similar performance in DTI or/neither a useful bio-degradability.

### Object of Invention

It was recognized that the graft polymers based on such conventional polyalkylene oxides show a surprisingly low biodegradation, which is often very much lower than the expected biodegradation percentage which is calculated on the biodegradation of the pure polyalkylene oxides.

The graft polymers being based on such conventional polyalkylene oxides commonly show a decrease in biodegradation compared to the unmodified polyakylene oxides and unmodified polyalkylene glycols, as the degree of modification of polyalkylene oxides (often polyalkylene oxides with two hydroxy-end groups are employed, thus such polyakylene oxides with hydroxy-groups being named commonly "polyalkylene glycols") with polymerizable monomers by radical grafting onto such backbones increases (i.e. the number of side chains on the backbone increases). This is sometimes attributed to the blocking of the biodegradation mechanism, as it seems that the polyalkylene oxides/glycols are degraded starting from their respective end group then following the polymer chain along. Thus, any additional branching on a carbon-atom of the backbone - which occurs when a polymeric side chain is grafted onto such backbone - impedes and possibly completely stops degradation. As a result, it is suggested that the higher the degree of grafting (i.e. the more side chains are attached to the backbone) the lower is the biodegradation percentage of such graft polymer. Unfortunately it is also commonly observed that with higher degree of branching the performance increases in the desired applications, as only with a higher amount of side chains the chemical structure of the backbone is changed enough that the new graft polymer exerts its specific properties compared to the separated properties of the unmodified backbone in simple mixture with the (unattached/ungrafted) homopolymer which would make up the side chain of the graft polymer. Hence, the difficulty of combining the conflicting properties of a suitable graft polymer with superior application performance with the biodegradation percentage of the unmodified backbone (i.e. an unmodified polyalkylene oxide/glycol) has not been met up to date.

Hence, there was a need to improve the biodegradation of such graft polymers based on polyalkylene oxides by improving the biodegradability of the graft base and keeping the general structure of the graft polymer and thus maintaining the application performance or even improve it.

Thus, the present invention concerns the improvement of the biodegradability of the graft base and the provision of graft polymers based on such improved graft bases such that the graft polymers themselves show an improved biodegradation over similar graft polymers based on "standard" polyalkylene oxide-polymers but with comparable or even improved performance in the target application of inhibiting the transfer of dyes within cleaning of fabrics.

It has been found that the polymer backbones of the type "polyalkylene oxide ester polymers" as disclosed in the unpublished patent application PCT/EP2022/065984 can serve as suitable backbones for the production of graft polymers comprising significant amounts of N-containing monomers, specifically amine-containing monomers, and most preferably of vinylimidazole as monomer, which exhibit commercially suitable dye transfer inhibition properties. Hence, the present invention makes use of those polymer backbones of PCT/EP2022/065984.

A process to produce the graft polymers based on such polyalkylene oxide ester polymers has been also found, with the graft polymer preferably having an improved biodegradability compared to graft polymers based on known polyalkylene oxide-type polymers but still having a suitable DTI-performance.

Moreover, the novel graft polymers can be used in many applications and areas, such as as DTI in the field of detergent applications.

### Prior art on graft polymers on polylakylene oxides

WO 2007/138053 discloses amphiphilic graft polymers based on water-soluble polyalkylene oxides (A) as a graft base and side chains formed by polymerization of a vinyl ester component (B), said polymers having an average of < one graft site per 50 alkylene oxide units and mean molar masses M of from 3 000 to 100 000. However, WO 2007/138053 does not describe any backbone material based on block copolymers. Furthermore, WO 2007/138053 does not contain any disclosure in respect of the biodegradability (also named "biodegradation") of the respective graft polymers disclosed therein.

Y. Zhang et al. J. Coll. Inter. Sci 2005, 285, 80, relates to the synthesis and characterization of specific grafted polymers based on a Pluronic^{™}-type backbone. Pluronic polyethylene oxide)-b-poly(propylene oxide)-b-poly(ethylene oxide) (PEO-PPO-PEO) block copolymers are grafted with poly(vinyl pyrrolidone) by free radical polymerization of vinyl pyrrolidone with simultaneous chain transfer to the Pluronic in dioxane. However, Y. Zhang does not disclose that polymeric sidechains of the respective graft polymer are based on vinyl ester monomers. Furthermore, Y. Zhang does not have any disclosure in respect of the biodegradability of the graft polymers disclosed therein. Y. Zhang also does not contain any disclosure about the use of such graft polymer within fabric and home care products.

WO 03/042262 relates to graft polymers comprising (A) a polymer graft skeleton with no mono-ethylenic unsaturated units and (B) polymer sidechains formed from co-polymers of two different mono-ethylenic unsaturated monomers (B1) and (B2), each comprising a nitrogen-containing heterocycle, whereby the proportion of the sidechains (B) amounts to 35 to 55 wt.-% of the total polymer. However, the graft polymers according to WO 03/042262 are not based on vinyl ester monomers within the respective polymer sidechains grafted onto the backbone. Beyond that, WO 03/042262 does not have any disclosure in connection with the biodegradability of the graft polymers disclosed therein. The performance of those polymers in DTI is acceptable but still far from the gold-standard.

US-A 5,318,719 relates to a novel class of biodegradable water-soluble graft copolymers having building, anti-filming, dispersing and threshold crystal inhibiting properties comprising (a) an acid functional monomer and optionally (b) other water-soluble, monoethylenically unsaturated monomers copolymerizable with (a) grafted to a biodegradable substrate comprising polyalkylene oxides and/or polyalkoxylated materials. However, US-A 5,318,719 does not disclose the use of a block copolymer backbone within the respective graft polymers. Furthermore, the respective sidechain of said graft polymers mandatorily comprises a high amount of acid-functional monomers such as acrylic acid or methacrylic acid. Such type of acid monomers are not useful within the context of the present invention.

Further graft-polymers on polyethylene glycols and polyalkylene glycols are also know from WO00-18375, which employs PEGs which are modified by radical polymerization using vinyl acetate but also claims the use of further monomers such as vinylpyrrolidone, vinylimidazole, vinylcaprolactam and (meth)acrylic acid. In preferred embodiments and also exemplified are PEGs grafted with vinyl acetate which are then hydrolyzed to obtain a "polyvinylalcohol-modified" PEG, with the main use being as a pharmaceutical coating, pharmaceutical binder polymer or film-forming for dosage forms.

The use of such graft polymers similar to those of WO00-18375 but made up from polyalkylene glycols as backbone and vinylpyrrolidone and vinyl acetate as grafted monomers (with no hydrolyzation of the vinyl acetate after polymerization) in detergents are known from US 2019-0390142 A1.

US6867262B1 discloses graft polymers of at least a vinyllactams, preferably vinylcaprolactam, on polyalkylene glycol, a polyether or a polymer having at least one heteroatom in the main chain, optionally also including a vinyl ester as grafted monomer, for use in the inhibition of gas hydrate formations within pipelines in the oil fields.

US A 5,318,719 relates to a class of biodegradable water-soluble graft copolymers having building, anti-filming, dispersing and threshold crystal inhibiting properties comprising (a) an acid functional monomer and optionally (b) other water-soluble, monoethylenically unsaturated monomers copolymerizable with (a) grafted to a biodegradable substrate comprising polyalkylene oxides and/or polyalkoxylated materials. However, US-A 5,318,719 does employ for the production of the side chains of said graft polymers mandatorily a high amount of acid-functional monomers such as acrylic acid or methacrylic acid. Such type of acid monomers are not useful within the context of the present invention, as they would disturb the DTI-action of the amine-(imidazole) groups and lactam groups.

WO2007051742A1 discloses a process for preparing graft polymers of the type polyethylene glycol grafted with vinyllactams and smaller amounts of vinyl acetate for various uses, as potentially biodegradable gas hydrate inhibitors within oil field applications, and as detergent additive. Biodegradation was said to be achieved but no values are disclosed.

From WO91/19778 it is known to use graft polymers in detergent, with the graft polymers being obtained by grafting of monoethylenically carboxylic acids as grafted monomers onto backbones such as alkylene glycols, poly alkylene glycols, polytetrahydrofurane, glycerine, polyglycerine, or reaction products of the before mentioned compounds with polyvalent carboxylic acids or polyvalent isocyanates.

WO2007138054A1 discloses graft polymers of vinyl acetate on PEG for use in detergents.

US 2019/0390142 relates to fabric care compositions that include a graft copolymer, which may be composed of (a) a polyalkylene oxide, such as polyethylene oxide (PEG); (b) N-vinylpyrrolidone (VP); and (c) a vinyl ester, such as vinyl acetate. However, US 2019/0390142 does not disclose further Nitrogen-containing monomers such as vinylimidazole. Also, the amounts of backbone and monomers employed and the intended uses differ.

WO 2007/138053 discloses amphiphilic graft polymers based on water-soluble polyalkylene oxides (A) as a graft base and side chains formed by polymerization of a vinyl ester component (B), said polymers having an average of less than one graft site per 50 alkylene oxide units and mean molar masses M of from 3 000 to 100 000. However, WO 2007/138053 does not contain any disclosure in respect of the biodegradability of the respective graft polymers disclosed therein nor does it disclose the use of vinylimidazole not vinyllactams nor any high amounts of nitrogen-containing monomers.

WO2020/005476 discloses a fabric care composition comprising a graft copolymer and a so-called treatment adjunct, the graft copolymer comprising a polyalkylene oxide as backbone based on ethylene oxide, propylene oxide, or butylene oxide, preferably poly ethylene oxide, and N-vinylpyrrolidone and vinyl ester as grafted side chains on the backbone and with backbone and both monomers in a certain ratio. Vinylimidazole is not disclosed as a monomer. However, DTI is mentioned as target application of the inventive fabric care composition; the explicit use of the graft polymer as such as DTI-polymer is not explicitly disclosed besides a "belief' that if the molecular weight of the graft base, e.g. polyethylene glycol, is relatively low, there may be a performance decrease in dye transfer inhibition, but also that when the molecular weight is too high, the polymer may not remain suspended in solution and/or may deposit on treated fabrics. DTI-performance seems to be attributed to the specific combinations of compounds claimed but not the graft polymer as such alone, even more so, further "treatment adjuncts" mentioned as preferred ingredients are the known DTI-polymers as mentioned above as general state of the art known to a skilled person.

WO2020/264077 discloses cleaning compositions containing a combination of enzymes with a polymer such scomposition being suitable for removal of stains from soiled material.

This publication discloses a so-called "suspension graft copolymer" which is selected from the group consisting of poly (vinylacetate)-g-poly (ethylene glycol), poly(vinylpyrrolidone)-poly(vinyl acetate)-g-poly(ethylene glycol), and combinations thereof, and thus does not include vinylimidazole as monomer. Moreover, specifically claimed is that besides that suspension graft polymer typical known dye transfer inhibitor-polymers (those mentioned above as general state of the art known to a skilled person) are comprised in the claimed fabric cleaning compositions.

WO0018375 discloses pharmaceutical compositions comprising a graft polymers obtained by polymerization of at least one vinyl ester of aliphatic C1-C24-carboxylic acids in the presence of polyethers, with the vinyl ester preferably being vinyl acetate. In the most preferred version the graft polymer is prepared from grafting vinyl acetate on PEG of Mw 6000 g/mol and thereafter hydrolyzing the vinyl acetate to the alcohol (which would then resemblea polymer being obtained from the hypothetical monomer "vinlyalcohol"). Main use is the formation of coatings and films on solid pharmaceutical dosage forms such as tablets etc.

Also claimed in WO0018375 however is a polymer being obtained by polymerization of at least one vinyl ester of aliphatic C1-C6-carboxylic acids in the presence of polyethers with at least one monomer selected from the group of c1) C1-C6-alkyl esters of monoethylenically unsaturated C3-C8-carboxylic acids; c4) N-vinylpyrrolidone, N-vinylimidazole, N-vinylcaprolactam; c5) (meth)acrylic acid.

Also claimed in WO0018375 is a polymer wherein, in addition to the vinyl esters, at least one other monomer c) selected from the group ofc1) C1-C24-alkyl esters of monoethylenically unsaturated C3-C8-carboxylic acids; c2) C1-C24-hydroxyalkyl esters of monoethylenically unsaturated C3-C8-carboxylic acids; c3) C1-C24-alkyl vinyl ethers; c4) N-vinyllactams; c5) monoethylenically unsaturated C3-C8-carboxylic acids is used for the polymerization.

Further claimed in WO0018375 is also a polymer wherein, in addition to the vinyl esters, at least one other monomer c) selected from the group ofc1) C1-C6-alkyl esters of monoethylenically unsaturated C3-C8-carboxylic acids; c4) N-vinylpyrrolidone, N-vinylimidazole, N-vinylcaprolactam; c5) (meth)acrylic acid is used for the polymerization.

As polymer backbones in WO0018375 polyethers having a number average molecular weight in the range below 500000, preferably in the range from 300 to 100000, particularly preferably in the range from 500 to 20000, very particularly preferably in the range from 800 to 15000 g/mol are disclosed. It is further mentioned a advantageous to use homopolymers of ethylene oxide or copolymers with an ethylene oxide content of from 40 to 99% by weight and thus a content of ethylene oxide units in the ethylene oxide polymers preferably being employed from 40 to 100 mol %. Suitable as comonomers for these copolymers are said to be propylene oxide, butylene oxide and/or isobutylene oxide, with suitable examples being said to be copolymers of ethylene oxide and propylene oxide, copolymers of ethylene oxide and butylene oxide, and copolymers of ethylene oxide, propylene oxide and at least one butylene oxide. The ethylene oxide content in the copolymers is stated to be preferably from 40 to 99 mol %, the propylene oxide content from 1 to 60 mol % and the butylene oxide content in the copolymers from 1 to 30 mol %. Not only straight-chain but also branched homo- or copolymers are said to be usale as grafting base for the grafting.

Exemplified however are in WO0018375 only PEG 6000 and 9000, a "polyethylene glycol/polypropylene glycol block copolymer" (with average molecular weight "about 8000") and "polyglycerol" (with average molecular weight "2200") (all in g/mol). Five examples only employ vinyl acetate, and only one example employs vinylacetate and methyl methacrylate as monomers. No other monomers are exemplified. All examples employ as final step the hydrolysis of the polymerized vinyl acetate monomer.

Hence, no polymer is being produced and characterized in WO0018375 containing non-hydrolyzed vinyl acetate and the further required monomers as claimed in the present invention.

Also, no specific graft polymer is being disclosed nor claimed in WO0018375 being made from polyalkylene oxide polymers as polymer backbone and - as monomers for the grafted side chains - vinyl esters and vinyl imidazole and optionally vinyl pyrrolidone, as vinylpyrrolidone and vinylimidazole are mentioned in a list of at least 5 different monomers (one of it being a Markush group) but are not highlighted nor exemplified in any way. The disclosure as such focuses on different compositions comprising only PEGs, grafted with vinyl acetate and then hydrolyzed to vinyl alcohols for use a film-forming polymers in pharmaceutical applications.

Also not disclosed in WO0018375 is the use of such polymers as disclosed herein for detergent and cleaning or fabric care applications, and specifically not for use as DTI-polymers. No such application or uses are mentioned at all in this disclosure.

US 2019/390142 A1 does not disclose graft-polymers comprising vinyl imidazole as monomer, nor any other amine-containing monomer as required by the present invention. Also, the use of the graft polymers of this disclosure for inhibition of the transfer of dyes during washing is not disclosed. The only mentioned vinylimidazol-containing polymers being employed as dye transfer inhibitors within the disclosed compositions are the known copolymers of vinylimidazol and vinylpyrrolidone such as Sokalan HP 56, i.e. standard linear copolymers of those two monomers.

WO2020/264077 A1 similarly does not disclose any graft polymers comprising vinylimidazole or any other amine-containing monomers such as the ones required by the present invention. Also, the use of the graft polymers consisting of polyethylene glycol, vinyl acetate and vinyl pyrrolidone (i.e. a vinyl lactame) as dye transfer inhibitpors is not disclosed as well.

US2008/255326 discloses a process for preparing a graft polymer comprising a polyalkylene oxide polymer as a graft base, such as poly ethylene glycol, a vinyl ester such as vinyl acetate, and a vinyllactame such as vinyl pyrrolidone, both to be grafted onto the poly alkylene oxide-backbone, and optionally a monomer from a third category ("monomer c)") in amounts of zero to up to 10 (ten) weight percent based on the total amount of the graft monomers (with preferred ranges being 0 to 5 and more preferably 0 to 2 and most preferred "zero", i.e. not being present at all), with the total amount of graft monomers adding up to 100 weight percent, and the amount of all graft monomers being 10 to 95 weight percent based on the total weight of the resulting graft polymer. As optional "monomer c)" among many other entries also vinyl imidazole is listed. However, vinyl imidazole is nowhere preferred over the other monomers c), but is just one group within a list spreading over eight paragraphs of potentially employed monomers c). In the most preferred list of monomers c) vinyl imidazole is included, but this list consists of 13 monomers of totally different chemical structures and functionalities, from amides, to sulfonic acids to acrylic esters. It is also not in any way specifically highlighted for any special property it may impart to the graft polymer, nor it is mentioned in the disclosure as such that the graft polymer may be used for cleaning purposes, nor that it may be specifically usable as dye transfer inhibitor. This application is not mentioned at all in this disclosure, as it focusses on the production process of graft polymers and the application of such graft polymers for gas hydrate inhibition, which is a technical application of such polymers in the area of off-shore oil production, where those polymers are injected into the pipeline right at an oil drilling platform offshore. This has nothing to do with cleaning and interactions of a polymer with dyes within a cleaning process.

Unpublished patent application PCT/EP2021/053446 relates to graft polymers comprising a block copolymer backbone (A) as a graft base having polymeric sidechains (B) grafted thereon. The polymeric sidechains (B) are obtainable by polymerization of at least one vinyl ester monomer (B1) and optionally N-vinylpyrrolidone as optional further monomer (B2). Most preferably, the block copolymer backbone (A) is a triblock copolymer of polyethylene oxide (PEG) and polypropylene oxide (PPG). The invention further relates to the use of such a graft polymer within, for example, fabric and home care products. However, besides the only as "optional" included monomer vinylpyrrolidone and the required vinyl ester monomer, no other monomers are to be included, specifically no vinylimidazole-monomer. The application as a DTI is also not mentioned.

US 2019/0390142 relates to fabric care compositions that include a graft copolymer, which may include (a) a polyalkylene oxide, such as polyethylene oxide (PEG); (b) N-vinylpyrrolidone (VP); and (c) a vinyl ester, such as vinyl acetate. However, US 2019/0390142 does not disclose further Nitrogen-containing monomers such as vinyl-imidazole. Beyond that, US 2019/0390142 does not have any disclosure in connection with the biodegradability of the graft polymers disclosed therein. Backbones according to the present invention are not disclosed.

Unpublished PCT/EP2022/072400 discloses graftpolymers of vinylacetate, vinylimidazole and vinylpyrrolidone on polyether backbones for DTI applications. Backbones according to the present invention are not disclosed.

The polymer backbones employed in this present invention are disclosed in the unpublished patent application PCT/EP2022/065984. The present invention makes use of those polymer backbones. Graft polymers are not disclosed therein.

Similar graft polymers as those of the present invention are known from unpublished patent application PCT/EP2022/065983, which employs the biodegradable polyalkylene oxide-ester polymers from the unpublished patent application PCT/EP2022/065984 mentioned before; those graft polymers however do not contain the monomers (B2), i.e. not contain at least one monomer selected from nitrogen-containing monomers, preferably amine-containing monomer, and most preferably vinyl imidazole, as required by this present invention. Likewise, the graft polymers of PCT/EP2022/065983 have not been tested for dye transfer inhibition, nor is their use as dye transfer inhibitors disclosed nor suggested; however, those polymers might actually exhibit some dye transfer inhibition activity due to the optional presence of N-vinyllactams such as vinylpyrrolidone as monomer. As the amounts of those N-vinyllactams are low and no monomer (B2) as required by the present invention is included in such polymers of that patent application, the performance of those polymers when tested as dye transfer inhibitors would be much lower than those polymers of this present invention.

### Definitions

The polyalkylene oxide ester polymers as disclosed in the unpublished patent application PCT/EP2022/065984 are herein also termed "PAG-ester (polymer)".

Throughout this description, the term "inventive compound" may be used instead of the "inventive (graft) polymer" and "(graft) polymer of this (present) invention", meaning those graft polymers being disclosed herein as invention, defined by their structure and/or their process to produce and/or obtainable by the process defined herein.

The terms "polymer backbone", "graft base" and "PAG-ester" and "PAG-ester polymer" are used herein interchangingly, all meaning the "polyalkylene oxide ester" as disclosed in the parallel-filed EP-application number EP21180239.2 and detailed herein as well, which serve as graft base ("first structural unit of the graft polymer") for the graft polymers of this present invention.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. When used herein the term "comprising" can be substituted with the term "containing" or "including" or sometimes when used herein with the term "having".

When used herein, "consisting of" excludes any element, step, or ingredient not specified in the claim element. When used herein, "consisting essentially of" does not exclude materials or steps that do not materially affect the basic and novel characteristics of the claim.

In each instance herein any of the terms "comprising", "consisting essentially of" and "consisting of" may be replaced with either of the other two terms. "Comprising" may be replaced in a preferred embodiment with "consisting essentially of" and both may be replaced by "consisting of" in an even more preferred embodiment.

The compositions of the present disclosure can "comprise" (i.e. contain other ingredients), "consist essentially of" (comprise mainly or almost only the mentioned ingredients and other ingredients in only very minor amounts, mainly only as impurities), or "consist of" (i.e. contain only the mentioned ingredients and in addition may contain only impurities not avoidable in an technical environment, preferably only the ingredients) the components of the present disclosure.

Similarly, the terms "substantially free of...." or" substantially free from..." or "(containing/comprising) essentially no...." may be used herein; this means that the indicated material is at the very minimum not deliberately added to the composition to form part of it, or, preferably, is not present at analytically detectable levels. It is meant to include compositions whereby the indicated material is present only as an impurity in one of the other materials deliberately included. The indicated material may be present, if at all, at a level of less than 1 %, or even less than 0.1 %, or even more less than 0.01 %, or even 0%, by weight of the composition.

Generally, as used herein, the term "obtainable by" means that corresponding products do not necessarily have to be produced (i.e. obtained) by the corresponding method or process de-scribed in the respective specific context, but also products are comprised which exhibit all features of a product produced (obtained) by said corresponding method or process, wherein said products were actually not produced (obtained) by such method or process. However, the term "obtainable by" also comprises the more limiting term "obtained by", i.e. products which were actually produced (obtained) by a method or process described in the respective specific context.

When used herein any definition requiring a compound or a substituent of a compound to consist of "at least a number of carbon atoms", number of carbon atoms refers to the total number of carbon atoms in said compound or substituent of a compound. For example for a substituent disclosed as "alkyl ether with at least 8 carbon atoms comprising alkylene oxide groups", the total number of at least 8 carbon atoms needs to be the sum of the number of carbon atoms of the alkyl moiety and the number of carbon atoms of the alkylene oxide moieties.

All such terms not specifically defined have their ordinary meaning as known in the field of organic chemistry.

As used herein, the articles "a" and "an" when used in a claim or an embodiment, are understood to mean one or more of what is claimed or described. As used herein, the terms "include(s)" and "including" are meant to be non-limiting, and thus encompass more than the specific item mentioned after those words.

The term "about" as used herein encompasses the exact number "X" mentioned as e.g. "about X%" etc., and small variations of X, including from minus 5 to plus 5 % deviation from X (with X for this calculation set to 100%), preferably from minus 2 to plus 2 %, more preferably from minus 1 to plus 1 %, even more preferably from minus 0,5 to plus 0,5 % and smaller variations. Of course if the value X given itself is already "100%" (such as for purity etc.) then the term "about" clearly can and thus does only mean deviations thereof which are smaller than "100".

The term "free of water" means that the composition contains no more than 5 wt.-% of water based on the total amount of solvent, in another embodiment no more than 1 wt.-% of water based on the total amount of solvent, in a further embodiment the solvent contains no water at all.

All temperatures herein are in degrees Celsius (°C) unless otherwise indicated. Unless otherwise specified, all measurements herein are conducted at 20°C and under the atmospheric pressure.

In all embodiments of the present disclosure, all percentages are by weight of the total composition, unless specifically stated otherwise. All ratios are weight ratios, unless specifically stated otherwise. The phrase "fabric care composition" is meant to include compositions and formulations designed for treating fabric. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, unit dose formulation, delayed delivery formulation, detergent contained on or in a porous substrate or nonwoven sheet, and other suitable forms that may be apparent to one skilled in the art in view of the teachings herein and detailed herein below when describing the compositions. Such compositions may be used as a pre-laundering treatment, a post- laundering treatment, or may be added during the rinse or wash cycle of the laundering operation, and as further detailed herein below when describing the use and application of the inventive and compositions comprising such COMPOUND.

Unless otherwise noted, all component or composition levels are in reference to the active portion of that component or composition, and are exclusive of impurities, for example, residual solvents or byproducts, which may be present in commercially available sources of such components or compositions.

### Detailed description of invention

The definitions and their preferences given within the "Definition"-section before are included as part of this invention as described herein below.

The specific embodiments as described throughout this disclosure are encompassed by the present invention as part of this invention; the various further options being disclosed in this present specification as "optional", "preferred", "more preferred", "even more preferred" or "most preferred" (or "preferably" etc.) options of a specific embodiment may be individually and independently (unless such independent selection is not possible by virtue of the nature of that feature or if such independent selection is explicitly excluded) selected and then combined within any of the other embodiments (where other such options and preferences can be also selected individually and independently unless such independent selection is not possible by virtue of the nature of that feature or if such independent selection is explicitly excluded), with each and any and all such possible combinations being included as part of this invention as individual embodiments.

### Graft Polymer

The present invention encompasses a graft polymer comprising a polymer backbone as graft base as a first structural unit and polymeric side chains as a second structural unit.

The first structural unit of the graft polymer is a polymer backbone used as a graft base for the inventive graft polymer, wherein said polymer backbone (A) is a polyalkylene oxide ester polymer ("PAG-ester (polymer)") as disclosed in the unpublished patent application PCT/EP2022/065984 and further described herein below.

The object of this present invention is achieved by a graft polymer comprising
(A) a polymer backbone as a graft base (first structural unit of the graft polymer), wherein said polymer backbone (A) is obtainable by condensation comprising
   i) diols of poly alkylene oxides (PAG),
   ii) di-carboxylic acids of PAG, and/or
   iii) mono-carbonic acid mono-ols of PAG

   wherein either at least a compound selected from iii) is present, or - when only i) and ii) are present - at least two internal ester-groups are present, and
   with the PAG being obtained by polymerization of at least one monomer being selected from 1,2-alkylene oxides such as ethylene oxide, 1,2-propylene oxide, 1,2-butylene oxide, 2,3-butylene oxide, 1 ,2-pentene oxide or 2,3-pentene oxide; from 1 ,4-diols or their cyclic or oligomeric analogs, or the PAG being based on polymeric ethers of such 1,4-diols; from 1,6-diols or their cyclic or oligomeric analogs, or the PAG being based on polymeric ethers of such 1 ,6-diols; or any of their mixtures in any ratio, either as blocks of certain polymeric units, or as statistical polymeric structures, or a polymers comprising one or more homo-blocks of a certain monomer and one or more statistical blocks comprising more than one monomer, and any combination thereof such as polymers having several different blocks of different monomers, or blocks of two different monomers, blocks of statistical mixtures of two or more monomers etc.,
   and optionally other non-polymeric di-carboxylic acid compounds which may be present in addition to compound ii),
      and
(B) polymeric sidechains grafted onto the polymer backbone (second structural unit of the graft polymer), wherein said polymeric sidechains (B) are obtainable by polymerization of
   (B1) at least one monomer being selected from vinyl ester monomers and
   (B2a) at least one nitrogen-containing monomer having hat least one primary and/or at least one secondary amine group, and optionally (B2b) at least one further nitrogen-containing monomer being different to (B2a).

In an alternative embodiment, the graft polymer based on PAG-ester is a graft polymer comprising
(A) a polymer backbone as a graft base, wherein said polymer backbone (A) is a
   polyalkylene oxide ester polymer with a weight average molecular weight M_{w} of 500 to 50 000 g/mol and a polydispersity PD of 2 to 6, comprising 10 to 560 ether groups and 2 to 51 ester groups, which are interconnected with alkylene groups, which contains 1 to 51 structural elements of the general formula (I) 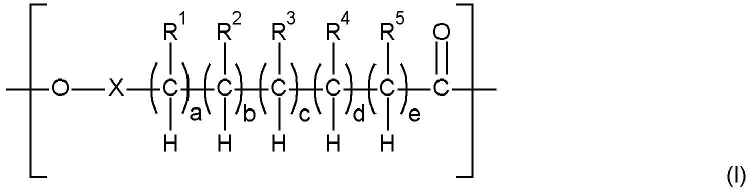 in which
   - the -O- unit at the left side is bound to a -CO- unit of an adjacent unit of the polymer, forming an ester unit,
   - the -CO- unit at the right side is bound to a -O- unit of an adjacent unit of the polymer, forming a further ester unit,
   - R¹, R², R³, R⁴, R⁵ represent independent of each other a hydrogen atom or a C₁₋₁₂ alkyl group,
   - a, b, c, d, e represent independent of each other an integer of 0 or 1, whereas the sum of a to e is 1 to 5, and
   - X represents a polyalkylene oxide unit with 4 to 100 alkylene oxide units, whereby the alkylene oxide units contain independent of each other 2 to 6 carbon atoms in the direct chain between two -O- units, whereby each of the carbon atoms in the direct chain between two -O- units contain independent of each other either two hydrogen atoms, or one hydrogen atom and one C₁₋₁₂ alkyl group,
      and
(B) polymeric sidechains grafted onto the polymer backbone (second structural unit of the graft polymer), wherein said polymeric sidechains (B) are obtainable by polymerization of
   (B1) at least one monomer being selected from vinyl ester monomers and
   (B2a) at least one nitrogen-containing monomer having hat least one primary and/or at least one secondary amine group, and optionally (B2b) at least one further nitrogen-containing monomer being different to (B2a).

### PAG-Ester as Graft Base: Structure and Properties

The polyalkylene oxide ester (PAG-ester) used as polymer backbone of the invention is characterized by its weight average molecular weight M_{w}, its polydispersity PD, its number of ether groups, its number of ester groups, and the existence of at least one structural element (I).

The weight average molecular weight M_{w} of the polyalkylene oxide ester polymer used as polymer backbone of the invention is 500 to 50 000 g/mol. M_{w} includes the mass of individual chains, which contributes to the overall molecular weight of the polymer and considers that bigger molecules contain more mass than smaller molecules. It is determined by size exclusion chromatography (SEC) in a liquid-solid phase and detection by differential light refraction against a reference cell, whereas the unit is calibrated with a polymer of known molecular weight. M_{w} is then calculated by computational methods based on the course of the curve of the chromatogram. Such a method is well known in the art. The weight average molecular weight M_{w} is preferably ≥ 750 g/mol, more preferably ≥ 1000 g/mol, particularly preferably ≥ 2000 g/mol, very particularly preferably ≥ 3000 g/mol and most preferably ≥ 4000 g/mol, and preferably ≤ 45 000 g/mol, more preferably ≤ 40 000 g/mol, particularly preferably ≤ 35 000 g/mol, very particularly preferably ≤ 25 000 g/mol and most preferably ≤ 15 000 g/mol.

Since the weight average molecular weight M_{w} is only a mean value of the molecular weight without information on the distribution of the molar weights of the individual molecules, the polyalkylene oxide ester polymer used as polymer backbone of the invention is further specified by the polydispersity PD. The polydispersity PD is defined as M_{w}/Mₙ, whereas Mₙ is the number average molecular weight specifying the ordinary arithmetic mean or average of the molecular weights of the individual molecules. The polyalkylene oxide ester polymer of the invention has a polydispersity PD of 2 to 6, preferably ≥ 2.5 and more preferably ≥ 3, and preferably ≤ 5.

The number average molecular weight Mₙ is preferably 250 to 20 000 g/mol, more preferably ≥ 500 g/mol and particularly preferably ≥ 1000 g/mol, and more preferably ≤ 15 000 g/mol and particularly preferably ≤ 10 000 g/mol.

Biodegradability is the ability of organic substances to be broken down into simpler substances through the action of enzymes from microorganisms. The degradation process consumes oxygen and produces carbon dioxide. Both can be measured by certain tests. Worldwide accepted tests have been published in the OECD 301 guideline for testing of chemicals. Depending on the specific test method, dissolved organic carbon (DOC), carbon dioxide evolution or the oxygen consumption is measured over time during the degradation under standardized conditions.

Based on OECD measurements, the polyalkylene oxide ester polymer as used in this invention as polymer backbone A of the invention can usually be biodegraded by 70 to 90% within one month, even with a weight average molecular weight Mw of 20 000 g/mol, whereas conventional polyalkylene oxide polymers only reach values of less than 20% or even less than 10%.

### Detailed structure of PAG-ester

The polymer backbone (A) of the inventive graft polymer is a polyalkylene oxide ester polymer ("PAG-ester" polymer) comprising as building blocks i) diols of polyalkylene oxides ("PAG"), ii) di-carbonic acids of PAG and/or iii) mono-carbonic acid-mono-ols of PAG (all mentioned hydroxy-groups and carboxyl groups of the compounds i), ii) and iii) mentioned before being the end-groups of PAG), wherein when only i) and iii) are present at least two internal ester groups in the PAG-ester polymer are present, such polymer backbone preferably having a weight average molecular weight Mw of 500 to 50 000 g/mol and a polydispersity PD of 2 to 6, comprising 10 to 560 ether groups and 2 to 51 ester groups, which are interconnected with alkylene groups, and wherein further low molecular weight di-carbonic acids may be contained in addition to the compounds iii).

The polymer backbone (A) may also be described as polyalkylene oxide ester polymer ("PAG-ester" polymer) comprising as building blocks i) diols of polyalkylene oxides ("PAG"), ii) di-carbonic acids of PAG and/or iii) mono-carbonic acid-mono-ols of PAG (all mentioned hydroxy-groups and carboxyl groups of the compounds i), ii) and iii) mentioned before being the end-groups of PAG), wherein when only i) and iii) are present at least two internal ester groups in the PAG-ester polymer are present, wherein further low molecular weight di-carbonic acids may be contained in addition to the compounds ii).

The PAG-ester comprises at least one, preferably at least two, and more preferably and least three different polymer subunits linked by covalent ester-bonds, such structure formed by any of the following three options:
In one embodiment, the two compounds forming the ester-bond by condensation are
i) mono-ol mono-carbonic acid of poly alkylene oxide (PAG) with
ii) itself, respectively;

in another embodiment, the two compounds forming the ester-bond by condensation are
i) di-ol of poly alkylene oxide (PAG) with
ii) PAG containing two carbonic acids as end-group, i.e. a carbonic acid-group at both ends of the PEG (or PAG, respectively);

in a third embodiment, a mixture of both embodiments before is employed, i.e. a condensation of
i) mono-ol mono-carbonic acid of poly alkylene oxide (PAG) with
ii) di-ol of poly alkylene oxide (PAG) and
iii) PAG containing two carbonic acids as end-group, i.e. a carbonic acid-group at both ends of the PEG (or PAG, respectively).

The third embodiment can be exemplified by using mixtures containing all three required compounds, i.e. mono-ol mono-carbonic acid of polyalkylene oxide (PAG), di-ol of poly alkylene oxide (PAG) and PAG- di carbonic acid. Such mixtures can be prepared e.g in one step by partial oxidation of PAG-Diols by incomplete oxidation, i.e. the oxidation is stopped after some hours to obtain directly a mixture containing those three components.

On the other hand, it is of course also possible to obtain the PAG-ester from mixtures which are specifically composed by adding the required starting materials.

Preferably, the synthetic route of the third embodiment is the preferred option for obtaining the PAG-ester for use as backbone to obtain the graft polymers of the present invention.

Further, it is of course possible and encompassed by this present invention, that more than one specific PAG-polymer is employed in the reactions of the previous three embodiments: Hence it is also possible in all three embodiments defined before that for example PEG and another PAG are employed as the "PAG"-part, such that for example diols of PEG are combined with di-acids of a PAG other than PEG, or monol-mono-acids of PEG with monool-mono-acids of PAG other than PEG, or mixtures of monool-mono-acid of PEG with monol-mono-acid of PAG other than PEG and di-acid of PAG other than PEG and/or PEG etc. All thinkable combinations are of course possible and are meant to be encompassed by the concept of the present invention, thus enabling to tune the hydrophilicity/hydrophobicity of the resulting polymer backbone and thus providing a further variable to tune the properties of the desired graft polymers using such PAG-ester polymer backbones.

"PAG" as used herein are polyakylene oxide-polymers of any type as defined herein; however, only when "PAG" is used in direct comparison to "PEG" (i.e. a PAG prepared solely from ethylene oxide, which is commonly known as "PEG", denoting pure ethylene oxide-homo polymers) only than "PAG" is intended to mean another PAG not being PEG.

Such PAGs not being PEG could be derived from propylene oxide, butylene oxide or higher alkylene oxides up to C10, or mixtures of two or more of C2- to C10-alkylene oxides, such as for example mixtures of ethylene oxide and propylene oxide.

PAG could consists of just one alkylene oxide-monomer-type, or of two, three, four or more different alkylene oxide-monomer-types, and thus could be for example of block copolymers of two or more alkylene oxides, e.g. polymers of ethylene oxide and propylene oxide, either as block polymers or random polymers, or polymers comprising mixed structures of block units (with each block being a homo-block or a random block itself) and statistical /random parts.

A "two-block" PAG has two distinct blocks (polymer subunits), whereas "triblock" PAG have, by consequence, three distinct blocks (polymer subunits) and so on. The number of individual blocks within such block copolymers is not limited, by consequence, a "n-block copolymer" comprises n distinct blocks (polymer subunits). Within the individual blocks (polymer subunits) the size/length of such a block may vary. The smallest length/size of a block is based on two individual monomers (as a minimum).

In case the PAG employed for the oxidation to produce the PAG-Ester polymers to be used as graft base is made up from more than one different monomer (single monomeric unit), then the polymer chain of PAG may be in the form of blocks with a block of a first single monomeric unit attached to a block of a second single monomeric unit which is different to the first monomeric unit; such polymeric chains may contain more than two blocks such as three, four, five or more blocks, all such blocks and block structures being obtainable by standard means. Instead of blocks of a single monomeric unit each block may also be made up from more than one monomeric unit with the monomers being statistically distributed within one such specific block; of course it is also possible to obtain by standard means combinations of blocks made up from single monomeric units with blocks being made up by more than one single monomeric unit; all such thinkable combinations of the before mentioned possibilities are in principle possible and obtainable by standard means; preferred structures are - due to their ease of obtaining them - a PAG being made up from a single monomeric unit, or prepared by a statistical mixture of more than one monomeric unit, or prepared as two or three blocks or more - with up to three blocks being preferred and only up to two blocks being even more preferred - preferably with the two or more blocks being made up each from just one single monomeric unit per block.

Although the intention during producing for example a PAG being made up of a two-block-structure with two different single monomeric units and each block intended to be a homo-polymeric block of a different single monomeric unit, such blocks may nevertheless contain "dirty structures": it is understood by a person of skill that due to residing unreacted monomers used for polymerizing the first block there will be no sharp border between the two blocks, but the beginning of the second block my contain a "dirty" structure, i.e. may contain a few of the monomeric units used for the first block which did not react during the time allowed for such first block-polymerisation, but reacting only when the second monomeric unit to be polymerized has been added to the reaction zone. Such dirty structures are obtained when the reaction of the first monomeric unit leading to the first block of the shell is not stopped and the reaction vessel is not emptied from unreacted first monomeric unit, but the reaction is continued after (only almost) "completion" of the polymerization of the first block by adding the second monomeric unit and continue polymerization without a break and without a cleaning in between. For commercial reasons, it is preferred to continue polymerization without break/cleaning, and thus preferable structures will contain such dirty structures. In another embodiment it is preferred that no dirty structures are contained.

Overall, it is important that the PAG employed for the oxidation has HO-CH₂- end-groups or, as only those are oxidizable to carboxylic groups.

A preferred embodiment of the present invention relates to a graft polymer comprising
(A) a PAG-ester polymer backbone as a graft base, wherein said PAG-ester polymer backbone (A) is obtainable by condensation of
   i) diols of poly alkylene oxide (PAG-Diol or PAG-DO) with
   ii) PAG containing di-carbonic acids as end-group (PAG-DC);
   the PAG can individually be obtained by polymerization of at least one monomer selected from the group of ethylene oxide, 1,2-propylene oxide, 1,2-butylene oxide, 2,3-butylene oxide, 1,2-pentene oxide, 2,3-pentene oxide or C5- to C10-alkylene oxides, preferably C2 to C4, more preferably C2 and C3, and most preferably only C2; and
(B) polymeric sidechains grafted onto the PAG-ester polymer backbone, wherein said polymeric sidechains (B) are obtainable by polymerization of at least one monomer being selected from i) vinyl ester monomer (B1) and ii) further monomers (B2).

Another preferred embodiment of the present invention relates to a graft polymer comprising
(A) a PAG-ester polymer backbone as a graft base, wherein said PAG-ester polymer backbone (A) is obtainable by condensation of
   i) mono-ol mono-carbonic acid of poly alkylene oxide (PAG-MC), with
   ii) diols of poly alkylene oxide (PAG-DO) and
   iii) PAG containing di-carbonic acids as end-group (PAG-DC); each PAG can individually be obtained by polymerization of at least one monomer selected from the group of ethylene oxide, 1,2-propylene oxide, 1,2-butylene oxide, 2,3-butylene oxide, 1,2-pentene oxide, 2,3-pentene oxide or C5- to C10-alkylene oxides, preferably C2 to C4, more preferably C2 and C3, and most preferably only C2; and
(B) polymeric sidechains grafted onto the PAG-ester polymer backbone, wherein said polymeric sidechains (B) are obtainable by polymerization of at least one monomer being selected from i) vinyl ester monomer (B1) and ii) further monomers (B2).

Another preferred embodiment of the present invention relates to a graft polymer comprising
(A) a PAG-ester polymer backbone as a graft base, wherein said PAG-ester polymer backbone (A) is obtainable by condensation of
   i) mono-ol mono-carbonic acid of poly alkylene oxide (PAG-MC);
   the PAG can individually be obtained by polymerization of at least one monomer selected from the group of ethylene oxide, 1,2-propylene oxide, 1,2-butylene oxide, 2,3-butylene oxide, 1,2-pentene oxide, 2,3-pentene oxide or C5- to C10-alkylene oxides, preferably C2 to C4, more preferably C2 and C3, and most preferably only C2; and
(B) polymeric sidechains grafted onto the PAG-ester polymer backbone, wherein said polymeric sidechains (B) are obtainable by polymerization of at least one monomer being selected from i) vinyl ester monomer, preferably vinyl acetate, (B1) and ii) further monomers (B2).

For the three preferred embodiments before is also possible and thus encompassed in the present invention to obtain structures of the polymer backbone by choosing among the following starting material: PAG(1)-diols, PAG(2)-di carbonic acids, PAG(3)-mono-ol-mono-carbonic acids wherein PAG(1), PAG(2) and PAG(3) are different poly alkylene oxides; e.g. PAG(1) may be a pure PEG, PAG(2) may be an EO-PO-polymer and PAG(3) may be an EO-butylene oxide-polymer. Of course, each PAG may be chosen individually as being composed by any amount and - if more than one alkylene oxide is chosen for a PAG - of any ratio of C2- to C12- alkylene oxides.

Generally, and specifically for the previously defined three preferred embodiments, the ratio of the polymer backbone (A) versus the polymeric side chains (B) within the graft polymers according to the present invention is not limited to specific values. Any ratio known to a person skilled in the art can be employed. However, it is understood that the graft polymers comprise more than 0.2% by weight of the polymeric sidechains (B) (in relation to the total weight of the graft polymer). Preferably the graft polymers comprise more than 1% by weight of the polymeric sidechains (B) (in relation to the total weight of the graft polymer). More preferably, graft polymers comprise 20 to 95% by weight of the block copolymer backbone (A) and 5 to 80% by weight of the polymeric sidechains (B) (in relation to the total weight of the graft polymer).

Preferably, and specifically for the previously defined three preferred embodiments, the graft polymer comprises 40 to 85% by weight, more preferably 50 to 80% by weight, even more preferably 55 to 75% by weight of the PAG-polymer backbone, preferably the PEG-polymer (A), and preferably 15 to 60% by weight, more preferably 20 to 50 % by weight, even more preferably-20 to 50% by weight, even more preferably 25 to 45% by weight of the polymeric sidechains (B) (in relation to the total weight of the graft polymer).

In a preferred embodiment, the PAGs employed based essentially on ethylene oxide, such as PEGs.

In a more preferred embodiment, the PAG as employed for preparing the PAG-ester polymer (via the three compounds mono-ol-mono-carbonic acid of PAG, the PAG-di carbonic acid and the PAG-diol) are based on more than 70 weight percent, even more preferably on more than 90 weight percent of ethylene oxide, and most preferably is a homo-poly ethylene oxide, i.e. is "PEG", such that the PAG-ester polymer employed for preparing the graft polymer of the invention is purely based on PEG only and no other alkylene oxide within PAG.

The graft polymer according to the present invention may have any molecular weight known to a person skilled in the art. However, it is preferred that the graft polymer has a weight average molecular weight M_{w} of from 1 000 to 500 000 g/mol, preferably from 2 000 to 200 000 g/mol, more preferably from 5 000 to 100 000 g/mol, even more preferably from 7 500 to 50 000 g/mol, with the various lower ends of course being possible to combine also with the various upper ends, such as 1000 to 50000 g/mol, 5000 to 50000 g/mol, 2000 to 50000 g/mol etc, all such combination being encompassed by this present invention.

The graft polymers according to the present invention preferably have a low polydispersity of not more than 6. It is preferred that the graft polymer has a polydispersity M_{w}/Mₙ of < 4, preferably < 3,5, more preferably < 3, and most preferably in the range from 1.2 to 2,5 (with M_{w} = weight average molecular weight and Mₙ = number average molecular weight; with polydispersity being without unit [^{g}/ₘₒₗ / ^{g}/ₘₒₗ]). The respective values of M_{w} and/or Mₙ can be determined as described within the experimental section below.

The polymer backbone (A) contained within the graft polymer according to the present invention may either be capped or not capped (uncapped) at the respective end-groups of the backbone. By consequence, within the present invention, it is possible that the polymer backbone (A) is optionally capped at one or both end-groups, preferably the polymer backbone (A) is not capped at both end-groups or, if the polymer backbone (A) is capped, the capping is done preferably by C₁-C₂₅-alkyl groups, which are linked to the backbone chain as ether group or within an ester-group, depending on the actual end-group pf the PAG employed. Such capping may be done using known means, and typically is done before the grafting polymerization is performed.

The PAG-polymers can contain different levels of the hydrophilic ethylene glycol-unit which influences the overall properties of the graft polymer, especially the solubility in water.

Generally, it is observed that higher EO-contents lead to a higher hydrophilicity and thus to a higher solubility in water.

Also, higher EO-contents also lead to higher biodegradation.

Hence, it is preferred in this invention to have medium to high, and more preferably high EO-contents in case a high hydrophilicity is desired.

In another embodiment, the structure of the PAG-ester for use as graft base for the graft polymers of the invention is a polyalkylene oxide ester polymer with a weight average molecular weight Mw of 500 to 50 000 g/mol and a polydispersity PD of 2 to 6, comprising 10 to 560 ether groups and 2 to 51 ester groups, which are interconnected with alkylene groups, which contains 1 to 51 structural elements of the general formula (I) 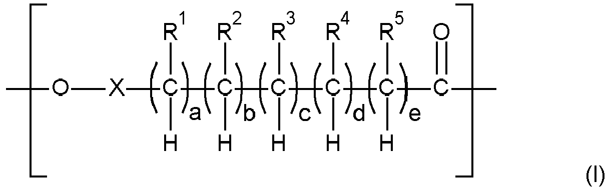 in which
- the -O- unit at the left side is bound to a -CO- unit of an adjacent unit of the polymer, forming an ester unit,
- the -CO- unit at the right side is bound to a -O- unit of an adjacent unit of the polymer, forming a further ester unit,
- R¹, R², R³, R⁴, R⁵ represent independent of each other a hydrogen atom or a C₁₋₁₂ alkyl group,
- a, b, c, d, e represent independent of each other an integer of 0 or 1, whereas the sum of a to e is 1 to 5, and
- X represents a polyalkylene oxide unit with 4 to 100 alkylene oxide units, whereby the alkylene oxide units contain independent of each other 2 to 6 carbon atoms in the direct chain between two -O- units, whereby each of the carbon atoms in the direct chain between two -O- units contain independent of each other either two hydrogen atoms, or one hydrogen atom and one C₁₋₁₂ alkyl group.

The crucial characteristic of the polyalkylene oxide ester polymer used in the invention, which surprisingly enables a high biodegradability, is the existence of ester groups within the polyalkylene oxide polymer chain. Polyalkylene oxide units, which as such are at least fairly biodegradable, and ester groups are linked to each other. Since the polyalkylene oxide units itself alternately contain ether groups and alkylene groups, the polyalkylene oxide ester polymer can also be described as a polymer containing ether groups and ester groups, which are interconnected with alkylene groups. For the sake of good order, it is pointed out that the term "polyalkylene oxide" does not embrace acetal or ketal units in which one carbon atom is interlinked with two ether groups, such as -O-CH2-O-. This is consistent with the common use of the term polyalkylene oxide and known by the person skilled in the art.

In the context of this document, the term "ether group" specifies a -O- unit, which is on both sides bound to carbon atoms which, independent of one other, have an oxidation state of -2, -1 or 0, and which are further bound to hydrogen atoms or other carbon atoms, such as for example -2 for a methyl group, -1 for an unsubstituted alkylene group or 0 for an alpha alkyl substituted alkylene group. In analogy to that, the term "ester group" specifies a -CO- unit which is at one side bound to a carbon atom, which has an oxidation state of -3, -2, -1 or 0, such as for example -3 for a methyl group, -2 for an unsubstituted alkylene group further bound to another carbon atom in the polymer chain, -1 for an alpha alkyl substituted alkylene group further bound to another carbon atom in the polymer chain or for an unsubstituted alkylene group further bound to an -O- group, or 0 for an alpha alkyl substituted alkylene group further bound to an -O- group, and at the other side to a -O- unit which in turn is at the opposite side bound to a carbon atom with an oxidation state of -2, -1 or 0.

Specifically, the polyalkylene oxide ester polymer as used in the invention contains 10 to 560 ether groups and 2 to 51 ester groups, which are interconnected with alkylene groups, wherein it contains 1 to 51 structural elements of the general formula (I) 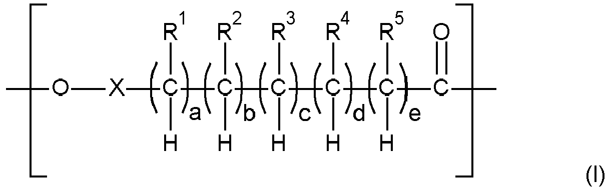 in which
- the -O- unit at the left side is bound to a -CO- unit of an adjacent unit of the polymer, forming an ester unit,
- the -CO- unit at the right side is bound to a -O- unit of an adjacent unit of the polymer, forming a further ester unit,
- R¹, R², R³, R⁴, R⁵ represent independent of each other a hydrogen atom or a C₁₋₁₂ alkyl group,
- a, b, c, d, e represent independent of each other an integer of 0 or 1, whereas the sum of a to e is 1 to 5, and
- X represents a polyalkylene oxide unit with 4 to 100 alkylene oxide units, whereby the alkylene oxide units contain independent of each other 2 to 6 carbon atoms in the direct chain between two -O- units, whereby each of the carbon atoms in the direct chain between two -O- units contain independent of each other either two hydrogen atoms, or one hydrogen atom and one C₁₋₁₂ alkyl group.

The number of the ether groups specified above as 10 to 560 and the number of the ester groups specified above as 2 to 51 relate to the individual polyalkylene oxide ester polymer molecules. Due to the polydispersity PD, the number of the ether groups and ester groups of the specific polyalkylene oxide ester polymer molecules, which constitute the polyalkylene oxide ester polymer with the weight average molecular weight M_{w} of 500 to 50 000 g/mol and the polydispersity PD of 2 to 6, show an individual distribution. Consequently, the polyalkylene oxide ester polymer typically contains polyalkylene oxide ester polymer molecules with different numbers of ester groups and ether groups. Based on the weight average molecular weight M_{w}, the polydispersity PD of the polyalkylene oxide ester polymer and the ratio of the ether groups and ester groups, which can be analytically determined with the knowledge of the person skilled in the art, the average numbers of ether groups and ester groups of the polyalkylene oxide ester polymer can be determined.

The adjacent units of the polymer bound to the -O- unit at the left, and the -CO- unit at the right side of formula (I) contain further alkylene, ether and ester groups, or form together with the mentioned -O- and -CO- units ester groups, respectively, in a number to form a polyalkylene oxide ester polymer, which contains a total number of ether groups and ester groups within the specified range.

The end groups of the polyalkylene oxide ester polymer can principally be any end groups which are suitable for forming the ends of such a polymer. Examples of suitable end groups are -OH, -COOH, primary, secondary or tertiary amine groups, branched or linear alkyl groups, aralkyl groups, aromatic groups, hydroxyalkyl groups, carbonyl groups, carboxyl groups, carboxylic acid ester groups, amide groups, urethan groups, carbamide groups, xanthogenate groups, dithiocarbamate groups or carbamate groups. However, -OH, -COOH, carboxyl groups, hydroxyalkyl groups and alkyl groups are typically preferred, especially -OH and -COOH.

The radicals R¹, R², R³, R⁴, R⁵ in formula (I) represent independent of each other a hydrogen atom or a C₁₋₁₂ alkyl group. The alkyl groups can be linear or in case of C₃₋₁₂ alkyl be linear or branched. Preferred C₁₋₁₂ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, R², R³, R⁴ and R⁵ represent a hydrogen atom, and R¹ a hydrogen atom or a C₁₋₁₂ alkyl group. More preferably, R¹ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices a, b, c, d, e represent independent of each other an integer of 0 or 1, whereas the sum of a to e is 1 to 5. Preferably, a, b, c are 1, and d, e are 0. More preferably, a is 1, and b, c, d, e are 0.

A specifically preferred structural element based on formula (I) is the element of the general formula (Ia) 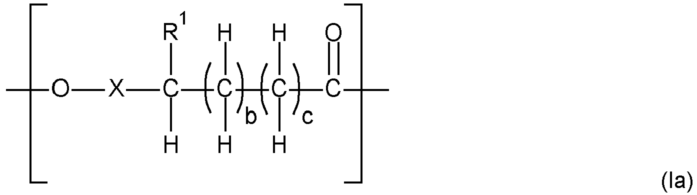 in which
- R¹ represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- b, c represent an integer of 0 or 1, whereas the sum of b to c is 0 or 2.

A further specifically preferred structural element based on formula (Ia) is the element of the general formula (Ib) 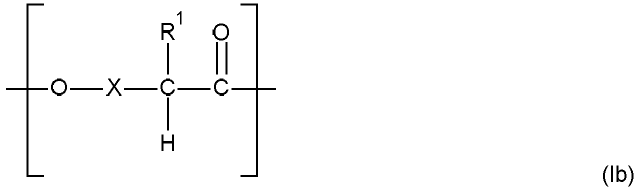 in which
- R¹ represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The unit X in formula (I) represents a polyalkylene oxide unit with 4 to 100 alkylene oxide units, whereby the alkylene oxide units contain independent of each other 2 to 6 carbon atoms in the direct chain between two -O- units, which can also be denoted as a C₂₋₆ alkylene unit, whereby each of the carbon atoms in the direct chain between two -O- units contain independent of each other either two hydrogen atoms, or one hydrogen atom and one C₁₋₁₂ alkyl group. The preferred unit X can be expressed by the general formula (Ic) 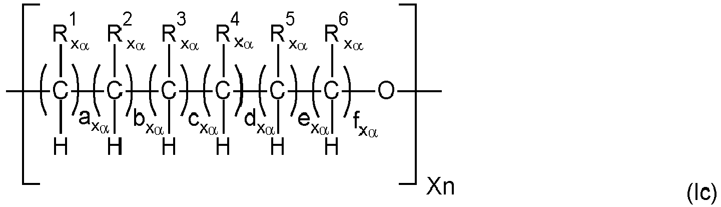 in which
- α represents an index from 1 to Xn specifying the running count for each repeating unit,
- R¹_{xα}, R²_{xα}, R³_{xα}, R⁴_{xα}, R⁵_{xα}, R⁶_{xα}, represent independent of each other, and under consideration that a is a running count for each repeating unit, a hydrogen atom or a C₁₋₁₂ alkyl group,
- a_{xα}, b_{xα}, c_{xα}, d_{xα}, e_{xα}, f_{xα} represent independent of each other, and under consideration that α is a running count for each repeating unit, an integer of 0 or 1, whereas the sum of a_{xα} to f_{xα}, is 2 to 6, and
- Xn represents an integer of 4 to 100.

The small letter x in the radicals, as for example in R¹_{xα}, and in the indices, as for example in a_{xα}, indicate that they refer to unit X. The same is indicated by the capital letter X in the number of the repeating units Xn. Furthermore, the small letter α in the radicals, as for example in R¹_{xα}, and in the indices, as for example in a_{xα}, specify that each of the radicals and indices have their own sub-number, indicating that the radicals and indices may vary from one alkylene oxide unit to the other within a polyalkylene oxide unit X. For example, radical R¹ₓ₁ of the alkylene oxide unit with the running count 1 may be a hydrogen atom, whereas R¹ₓ₂ of the alkylene oxide unit with the running count 2 may be methyl group, and so on. Similarly and also to be understood as an example, the index cₓ₁ of the alkylene oxide unit with the running count 1 may be 0, whereas cₓ₂ of the alkylene oxide unit with the running count 2 may be 1, and so on.

The C₁₋₁₂ alkyl group in the radicals R¹_{xα}, R²_{xα}, R³_{xα}, R⁴_{xα}, R⁵_{xα}, R⁶_{xα} in formula (Ic) can be linear or in case of C₃₋₁₂ alkyl be linear or branched. Preferred C₁₋₁₂ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, R²_{xα}, R³_{xα}, R⁴_{xα}, R⁵_{xα} and R⁶_{xα} represent a hydrogen atom, and R¹_{xα} a hydrogen atom or a C₁₋₁₂ alkyl group. More preferably, R¹_{xα} represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices aₓₐ, b_{xα}, c_{xα}, d_{xα}, e_{xα}, f_{xα}, represent independent of each other an integer of 0 or 1, whereas the sum of a_{xα}, to f_{xα}, is 2 to 6. Preferably, a_{xα}, b_{xα}, c_{xα}, f_{xα}, are 1, and d_{xα}, e_{xα}, are 0. More preferably, a_{xα}, f_{xα} are 1, and b_{xα}, c_{xα}, d_{xα}, e_{xα} are 0.

A specifically preferred unit X is the unit of the general formula (Id) 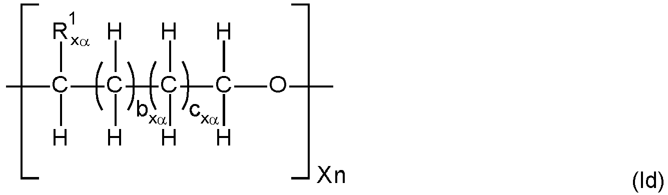 in which
- R¹_{xα} represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- b_{xα}, c_{xα} represent an integer of 0 or 1, whereas the sum of b to c is 0 or 2, and
- Xn represents an integer of 4 to 100.

A further specifically preferred unit X based on formula (Id) is the unit of the general formula (le) 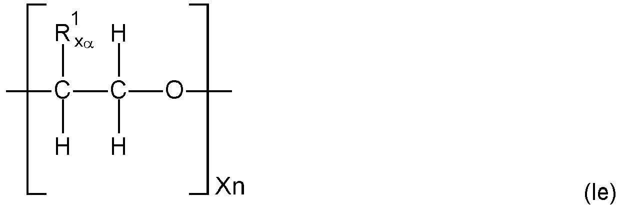 in which
- R¹_{xα} represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- Xn represents an integer of 4 to 100.

The number of the repeating units Xn in formula (Ic) is an integer of 4 to 100. It is preferably ≥ 5, more preferably ≥ 8 and particularly preferably ≥ 10, and preferably ≤ 75 and more preferably ≤ 50.

It is explicitly emphasized that the alkylene oxide units in unit X can be the same with unit X, or differ from each other, in terms of different radicals R¹_{xα} to R⁶_{xα} and in terms of different indices a_{xα} to f_{xα}. This is already clearly indicated by the index xα in formula (Ic), specifying sub-numbers for each radical, as for example in R¹_{xα}, and for each index, as for example in a_{xα}, based on the running count for each repeating unit.

Moreover, it is explicitly emphasized that in the polyalkylene oxide ester polymer also each structural element (I), if more than one element (I) is present, may be identical to one or more of the others, or may differ from one or more of the others.

The different parts of the structural element (I) such as the radicals, indices and unit X including their general and preferred values have already been described above. The following paragraphs relate to preferred specific combinations of these parts.

Particularly preferred is a polyalkylene oxide ester polymer containing the structural element (I), in which
- R¹ represents a hydrogen atom or a methyl group,
- R², R³ represent a hydrogen atom,
- d, e are 0,
- a is 1,
- b, c represent an integer of 0 or 1, whereas the sum of b to c is 0 or 2, and
- X represents a polyalkylene oxide unit with 4 to 100 alkylene oxide units, whereby the alkylene oxide units are independent of each other and contain 2 or 4 carbon atoms in the direct chain between two ether groups, whereby in each alkylene oxide unit, and independent of each other, one of the carbon atoms in α-position to an -O- unit contain either two hydrogen atoms, or one hydrogen atom and one methyl group, and the other one or three carbon atoms contain two hydrogen atoms each, whereby each -O- unit carries not more than one methyl group carrying carbon atom in α-position.

This particularly relates to a respective polymer in which the structural element (I) is solely formed by C₂-units, solely formed by C₄-units or formed by a mixture thereof. Each C₂₋ and C₄₋unit may either carry only hydrogen atoms, or hydrogen atoms and one methyl group. If a methyl group in a C₂₋ or C₄₋unit is present, it is bound at a carbon atom in α-position to an -O- unit, whereby each -O- unit carries in its α-position not more than one methyl group carrying carbon atom.

Such elements are typically based on ethylene oxide monomers, propylene oxide monomers, tetrahydrofuran monomers or mixtures thereof. In case of propylene oxide based -CHCH₃-CH₂-O- and tetrahydrofuran based -CH₂-CH₂-CH₂-CH₂-O- units within formula (I), it may be advantageous if the structural element (I) contains at the border region of element (I) one or more C₂₋based units without methyl groups. This can be easily achieved by firstly polymerizing propylene oxide or tetrahydrofuran and later stop the addition of propylene oxide and tetrahydrofuran, respectively, and supply ethylene oxide to finish the polymerization, leading to C₂₋based units at both end sides. The obtained polyalkylene oxides can then be processed as described further down to form the structural unit (I) in the polyalkylene oxide ester polymer. Due to the mentioned production process, ethylene oxide is co-polymerized with propylene oxide and tetrahydrofuran, respectively, causing an irregular structure in the border region in which -CHCH₃-CH₂-O- and -CH₂-CH₂-CH₂-CH₂-O- units, respectively, alternate with -CH₂-CH₂-O- units, so that the transition from -CHCH₃-CH₂-O- and -CH₂-CH₂-CH₂-CH₂-O- units, respectively, to -CH₂-CH₂-O- units might not be sharp. Such effect is well known in the art and the respective alternating structure also often called "dirty structures".

Another particularly preferred polyalkylene oxide ester polymer contains the structural element (I), in which
- R¹ represents a hydrogen atom or a methyl group,
- b, c, d, e are 0,
- a is 1, and
- X represents a polyalkylene oxide unit with 4 to 100 alkylene oxide units, whereby the alkylene oxide units are independent of each other and contain 2 carbon atoms in the direct chain between two ether groups, whereby in each alkylene oxide unit, and independent of each other, one of the carbon atoms in α-position to an -O- unit contain either two hydrogen atoms, or one hydrogen atom and one methyl group, and the other carbon atom two hydrogen atoms, whereby each -O- unit carries not more than one methyl group carrying carbon atom in α-position.

This particularly relates to a respective polymer in which the structural element (I) is solely formed by C₂-units based on ethylene oxide and propylene oxide.

Although particularly for a polyalkylene oxide ester polymer with a lower weight average molecular weight M_{w} such as below 1000 g/mol the polymer may alternatively have a cyclic structure, it generally has a non-cyclic structure.

Particularly preferred are the following non-cyclic polyalkylene oxide ester polymers, whereby their radicals and indices relate to the formulas (I) and (Ic):

| | | | |
|---|---|---|---|
| A) | M_{w} [g/mol] | is | 500 to 50 000 |
| | number of ether groups | is | 10 to 560 |
| | number of ester groups | is | 2 to 51 |
| | a | is | 1 |
| | R¹ | is | H |
| | b, c, d, e | are | 0 |
| | a_{xα}, f_{xα} | are | 1 |
| | R¹_{xα}, R⁶_{xα} | are | H |
| | b_{xα}, c_{xα}, d_{xα}, e_{xα} | are | 0 |
| | Xn | is | 4 to 100 |
| | | | |
| B) | M_{w} [g/mol] | is | 500 to 50 000 |
| | number of ether groups | is | 10 to 560 |
| | number of ester groups | is | 2 to 51 |
| | a | is | 1 |
| | R¹ | is | H |
| | b, c, d, e | are | 0 |
| | a_{xα}, f_{xα} | are | 1 |
| | R¹_{xα} | is | H or methyl |
| | R⁶_{xα} | is | H |
| | b_{xα}, c_{xα}, d_{xα}, e_{xα} | are | 0 |
| | Xn | is | 4 to 100 |
| | | | |
| C) | M_{w} [g/mol] | is | 500 to 50 000 |
| | number of ether groups | is | 10 to 560 |
| | number of ester groups | is | 2 to 51 |
| | a | is | 1 |
| | R¹ | is | H |
| | b, c, d, e | are | 0 |
| | a_{xα}, f_{xα} | are | 1 |
| | R¹_{xα} | is | H or ethyl |
| | R⁶_{xα} | is | H |
| | b_{xα}, c_{xα} | are | either both 0 or both 1 |
| | R²_{xα}, R³_{xα} | are | H |
| | d_{xα}, e_{xα} | are | 0 |
| | Xn | is | 4 to 100 |
| D) | M_{w} [g/mol] | is | 500 to 50 000 |
| | number of ether groups | is | 10 to 560 |
| | number of ester groups | is | 2 to 51 |
| | a, b, c | are | 1 |
| | R¹, R², R³ | are | H |
| | d, e | are | 0 |
| | a_{xα}, b_{xα}, c_{xα}, f_{xα} | are | 1 |
| | R¹_{xα}, R²_{xα}, R³_{xα}, R⁶_{xα} | are | H |
| | d_{xα}, e_{xα} | are | 0 |
| | Xn | is | 4 to 100 |

Regarding the polyalkylene oxide ester polymers mentioned under B) above, the radicals R¹_{xα} at or near the two borders of the X unit are preferably H, whereas the radicals R¹_{xα} in the rest of unit X are preferably methyl. This is based on the preparation of such elements, which typically start with a polymerization of propylene oxide on which at the end ethylene oxide is co-polymerized.

Regarding the polyalkylene oxide ester polymers mentioned under C) above, the indices b_{xα} and c_{xα} at or near the two borders of the X unit are preferably 0, whereas the indices b_{xα} and c_{xα} in the rest of unit X are preferably 1. This is based on the preparation of such elements, which typically start with a polymerization of 1,2-butylen oxide on which at the end ethylene oxide is co-polymerized.

As already mentioned before, the polyalkylene oxide ester polymer of the invention comprises 10 to 560 ether groups and 2 to 51 ester groups, wherein it contains 1 to 51 structural elements of formula (I). For the avoidance of doubt, it is emphasized that the amount of the ether and ester groups mentioned above refer to the whole polyalkylene oxide ester polymer, including the respective groups present in the structural elements of formula (I). The polyalkylene oxide ester polymer contains preferably ≥ 15, more preferably ≥ 20 and particularly preferably ≥ 30, and preferably ≤ 500, more preferably ≤ 400 and particularly preferably ≤ 350 ether groups. It contains preferably ≥ 3, more preferably ≥ 4 and particularly preferably ≥ 5, and preferably ≤ 41, more preferably ≤ 31, particularly preferably ≤ 21 and very particularly preferably ≤ 15 ester groups.

The ratio of the number of the ether groups to the number of the ester groups is preferably 4 to 100, more preferably ≥ 5, particularly preferably ≥ 10 and very particularly preferably ≥ 15, and preferably ≤ 75, more preferably ≤ 50, particularly preferably ≤ 40 and very particularly preferably ≤ 35.

The number of the structural elements (I) in the polyalkylene oxide ester polymer is 1 to 51, preferably ≥ 2, more preferably ≥ 3, particularly preferably ≥ 4 and very particularly preferably ≥ 5, and preferably ≤ 41, more preferably ≤ 31, particularly preferably ≤ 21, very particularly preferably ≤ 15 and most preferably ≤ 9.

The polyalkylene oxide ester polymer can be completely formed by the structural elements (I) plus respective end groups at both ends, containing one or more further alkylene oxide elements, or one or more other structural elements. Preferably, the polyalkylene oxide ester polymer contains further alkylene oxide elements with -O- units and -CO- units at the edges of these elements, forming ester groups together with -CO- units and -O- units of other elements.

Structural elements which form ester groups together with structural element (I) or with other structural elements contain either at least one -O- unit or at least one -CO- unit at one end side of such a structural element. -O- unit and -CO- unit then formally form an ester unit. Structural elements of such further alkylene oxide units preferably contain either two -CO- units or two -O- units at the end of such structural elements. Since an ester group formally requires one -O- unit and one -CO- unit, the number of the structural elements with -O- unit and one -CO- unit at their end shall advantageously be balanced.

As already mentioned above, polyalkylene oxide ester polymer which additionally contain such further structural elements beside structural element (I) are preferred. Specifically, a polyalkylene oxide ester polymer is preferred, which, in addition to structural element (I), further contains 1 to 25 structural elements of the general formula (II) 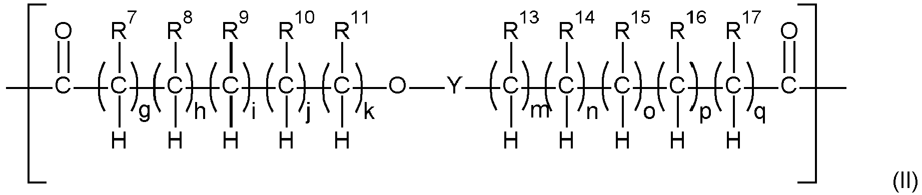 in which
- the -CO- unit at the left side is bound to a -O- unit of an adjacent unit of the polymer, forming an ester unit,
- the -CO- unit at the right side is bound to a -O- unit of an adjacent unit of the polymer, forming a further ester unit,
- R⁷, R⁸, R⁹, R¹⁰, R¹¹, R¹³, R¹⁴, R¹⁵, R¹⁶, R¹⁷ represent independently of each other a hydrogen atom or a C₁₋₁₂ alkyl group,
- g, h, i, j, k, m, n, o, p, q represent independent of each other an integer of 0 or 1, whereas the sum of g to k is 1 to 5, and the sum of m to q is 1 to 5, and
- Y represents a polyalkylene oxide unit with 0 to 99 alkylene oxide units, whereby the alkylene oxide units contain independent of each other 2 to 6 carbon atoms in the direct chain between two ether groups, whereby each of the carbon atoms in the direct chain between two ether groups contain independent of each other either two hydrogen atoms, or one hydrogen atom and one C₁₋₁₂ alkyl group,

and polyalkylene oxide units of the general formula (III) in a number suitable to form ester bonds with the -CO- units of the structural elements of the formulas (I) and (II) 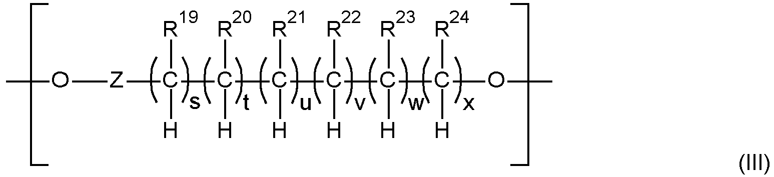 in which
   - the -O- unit at the left side is bound to a -CO- unit of an adjacent unit of the polymer, forming an ester unit,
   - the -O- unit at the right side is bound to a -CO- unit of an adjacent unit of the polymer, forming a further ester unit,
   - R¹⁹, R²⁰, R²¹, R²², R²³, R²⁴ represent independently of each other a hydrogen atom or a C₁₋₁₂ alkyl group,
   - s, t, u, v, w, x represent independent of each other an integer of 0 or 1, whereas the sum of s to x is 2 to 6, and
   - Z represents a polyalkylene oxide unit with 0 to 100 alkylene oxide units, whereby the alkylene oxide units are independent of each other and contain 2 to 6 carbon atoms in the direct chain between two ether groups, whereby each of the carbon atoms in the direct chain between two ether groups contain independent of each other either two hydrogen atoms, or one hydrogen atom and one C₁₋₁₂ alkyl group,
with the proviso that, together with the structural elements of the formula (I), the total number of ester groups does not exceed the maximum number of ester groups specified for the polyalkylene oxide ester polymer.

Each side of the structural element (II) can, for example, be bound to the -O- unit containing side of the structural element (I), to the structural element (III), to an -O- unit containing side of any other polyalkylene oxide, or to another structural element of the polymer which is not represented by any of the structural elements (I), (II) or (III). It is, of course, also possible that one end side of (II) is bound to an end group of the polyalkylene oxide ester polymer. Likewise, each side of the structural element (III) can, for example, be bound to the -CO- unit containing side of the structural element (I), to the structural element (II), to an -CO- unit containing side of any other polyalkylene oxide, or to another structural element of the polymer which is not represented by any of the structural elements (I), (II) or (III). It is, of course, also possible that one end side of (III) is bound to an end group of the polyalkylene oxide ester polymer.

The radicals R⁷, R⁸, R⁹, R¹⁰, R¹¹, R¹³, R¹⁴, R¹⁵, R¹⁶, R¹⁷ in formula (II) represent independent of each other a hydrogen atom or a C₁₋₁₂ alkyl group. The alkyl groups can be linear or in case of C₃₋₁₂ alkyl be linear or branched. Preferred C₁₋₁₂ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, R⁷, R⁸, R⁹, R¹⁰, R¹¹, R¹⁴, R¹⁵, R¹⁶, R¹⁷ represent a hydrogen atom, and R¹³ a hydrogen atom or a C₁₋₁₂ alkyl group. More preferably, R¹³ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices g, h, i, j, k, m, n, o, p, q in formula (II) represent independent of each other an integer of 0 or 1, whereas the sum of g to k is 1 to 5 and the sum of m to q is 1 to 5. Preferably, i, j, k, m, n, o are 1, and g, h, p, q are 0. More preferably, k, m are 1, and g, h, i, j, n, o, p, q are 0.

A specifically preferred structural element based on formula (II) is the element of the general formula (IIa) 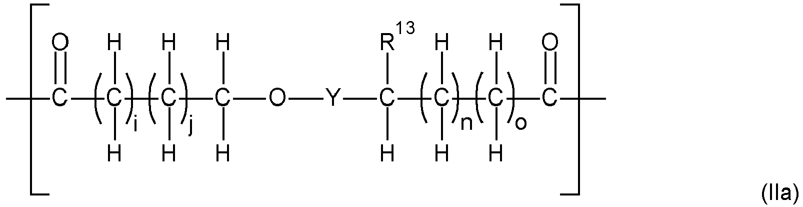 in which
- R¹³ represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- i, j, n, o represent an integer of 0 or 1, whereas the sum of i to j is 0 or 2 and the sum of n to o is 0 or 2.

A further specifically preferred structural element based on formula (Ila) is the element of the general formula (IIb) 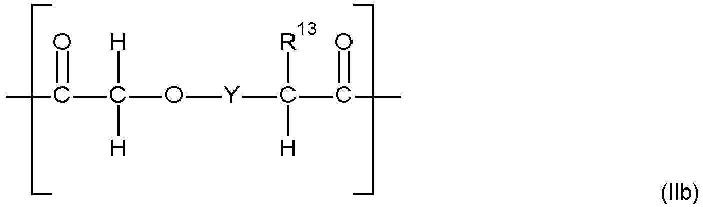 in which
- R¹³ represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The unitY in formula (II) represents a polyalkylene oxide unit with 0 to 99 alkylene oxide units, whereby the alkylene oxide units contain independent of each other 2 to 6 carbon atoms in the direct chain between two -O- units, which can also be denoted as a C₂₋₆ alkylene unit, whereby each of the carbon atoms in the direct chain between two -O- units contain independent of each other either two hydrogen atoms, or one hydrogen atom and one C₁₋₁₂ alkyl group.

The preferred unit Y can be expressed by the general formula (IIc) 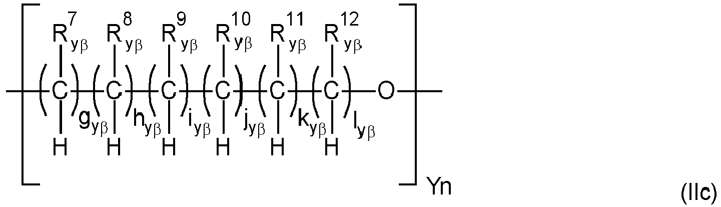 in which
- β represents an index from 1 to Yn specifying the running count for each repeating unit,
- R⁷_{yβ}, R⁸_{yβ}, R⁹_{yβ}, R¹⁰_{yβ}, R¹¹_{yβ}, R¹²_{yβ} represent independent of each other, and under consideration that β is a running count for each repeating unit, a hydrogen atom or a C₁₋₁₂ alkyl group,
- g_{yβ}, h_{yβ}, i_{yβ}, j_{yβ}, k_{yβ}, l_{yβ} represent independent of each other, and under consideration that β is a running count for each repeating unit, an integer of 0 or 1, whereas the sum of g_{yβ} to l_{yβ} is 2 to 6, and
- Yn represents an integer of 0 to 99.

The small letter y in the radicals in formula (IIc), as for example in R⁷_{yβ}, and in the indices, as for example in g_{yβ}, indicate that they refer to unit Y. The same is indicated by the capital letter Y in the number of the repeating units Yn. Furthermore, the small letter β in the radicals, as for example in R⁷_{yβ}, and in the indices, as for example in g_{yβ}, specify that each of the radicals and indices have their own sub-number, indicating that the radicals and indices may vary from one alkylene oxide unit to the other within a polyalkylene oxide unit Y. For example, radical R⁷_{y1} of the alkylene oxide unit with the running count 1 may be a hydrogen atom, whereas R⁷_{y2} of the alkylene oxide unit with the running count 2 may be methyl group, and so on. Similarly and also to be understood as an example, the index i_{y1} of the alkylene oxide unit with the running count 1 may be 0, whereas i_{y2} of the alkylene oxide unit with the running count 2 may be 1, and so on.

The C₁₋₁₂ alkyl group in the radicals R⁷_{yβ}, R⁸_{yβ}, R⁹_{yβ}, R¹⁰_{yβ}, R¹¹_{yβ}, R¹²_{yβ} in formula (IIc) can be linear or in case of C₃₋₁₂ alkyl be linear or branched. Preferred C₁₋₁₂ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, R⁸_{yβ}, R⁹_{yβ}, R¹⁰_{yβ}, R¹¹_{yβ}, R¹²_{yβ} represent a hydrogen atom, and R⁷_{yβ} a hydrogen atom or a C₁₋₁₂ alkyl group. More preferably, R⁷_{yβ} represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices g_{yβ}, h_{yβ}, i_{yβ}, j_{yβ}, k_{yβ}, l_{yβ} in formula (!!c) represent independent of each other an integer of 0 or 1, whereas the sum of g_{yβ} to l_{yβ} is 2 to 6. Preferably, g_{yβ}, h_{yβ}, i_{yβ}, l_{yβ} are 1, and j_{yβ}, k_{yβ} are 0. More preferably, g_{yβ}, l_{yβ} are 1, and h_{yβ}, i_{yβ}, j_{yβ}, k_{yβ} are 0.

A specifically preferred unit Y is the unit of the general formula (Ild) 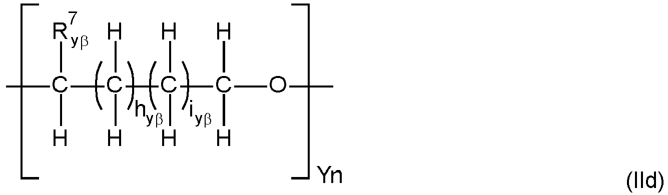 in which
- R⁷_{yβ} represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- h_{yβ}, i_{yβ} represent an integer of 0 or 1, whereas the sum of h_{yβ} to i_{yβ} is 0 or 2, and
- Yn represents an integer of 0 to 99.

A further specifically preferred unit Y based on formula (Ild) is the unit of the general formula (IIe) 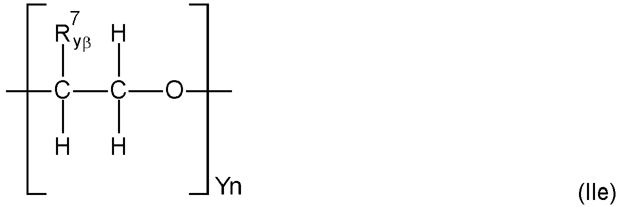 in which
- R⁷_{yβ} represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- Yn represents an integer of 0 to 99.

The number of the repeating units Yn in formula (IIc) is an integer of 0 to 99. It is preferably ≥ 1, more preferably ≥ 3, particularly preferably ≥ 7 and very particularly preferably ≥ 9, and preferably ≤ 74 and more preferably ≤ 49.

It is explicitly emphasized that the alkylene oxide units in unit Y can be the same within unit Y or differ from each other, in terms of different radicals R⁷_{yβ} to R¹²_{yβ} and in terms of different indices g_{yβ} to I_{yβ}. This is already clearly indicated by the indexes yβ in formula (IIc) specifying sub-numbers for each radical, as for example in R⁷_{yβ}, and for each index, as for example in g_{yβ}, based on the running count for each repeating unit.

Moreover, it is explicitly emphasized that in the polyalkylene oxide ester polymer also each structural element (II), if more than one element (II) is present, can be identical to one or more of the others, or can differ from one or more of the others.

The radicals R¹⁹, R²⁰, R²¹, R²², R²³, R²⁴ in formula (III) represent independent of each other a hydrogen atom or a C₁₋₁₂ alkyl group. The alkyl groups can be linear or in case of C₃₋₁₂ alkyl be linear or branched. Preferred C₁₋₁₂ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, R¹⁹, R²⁰, R²¹, R²², R²³, R²⁴ in formula (III) represent a hydrogen atom, and R¹⁹ a hydrogen atom or a C₁₋₁₂ alkyl group. More preferably, R¹⁹ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices s, t, u, v, w, x in formula (III) represent independent of each other an integer of 0 or 1, whereas the sum of s to x is 2 to 6. Preferably, s, t, u, x are 1, and v, w are 0. More preferably, s, x are 1, and t, u, v, ware 0.

A specifically preferred structural element based on formula (III) is the element of the general formula (IIIa) 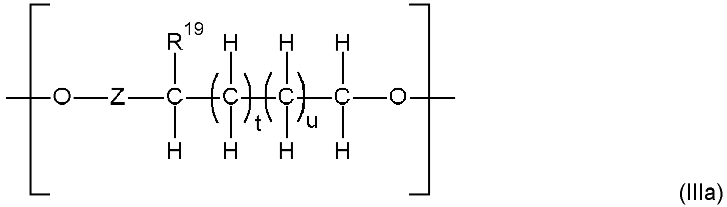 in which
- R¹⁹ represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- t, u represent an integer of 0 or 1, whereas the sum of t to u is 0 or 2.

A further specifically preferred structural element based on formula (IIIa) is the element of the general formula (Illb) 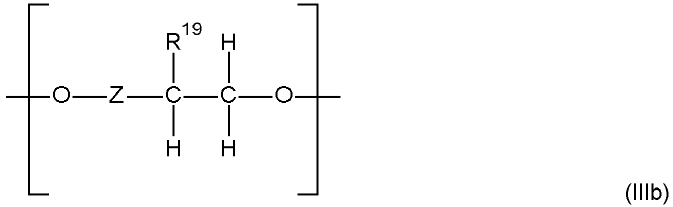 in which
- R¹⁹ represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The unit Z in formula (III) represents a polyalkylene oxide unit with 0 to 100 alkylene oxide units, whereby the alkylene oxide units contain independent of each other 2 to 6 carbon atoms in the direct chain between two -O- units, which can also be denoted as a C₂₋₆ alkylene unit, whereby each of the carbon atoms in the direct chain between two -O- units contain independent of each other either two hydrogen atoms, or one hydrogen atom and one C₁₋₁₂ alkyl group.

The preferred unit Z can be expressed by the general formula (IIIc) 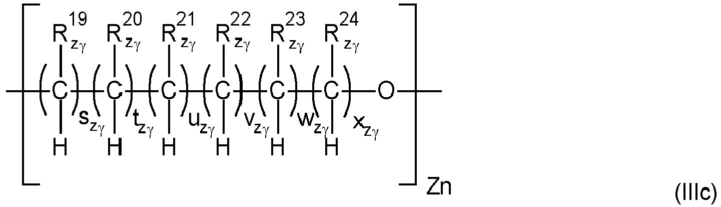 in which
- y represents an index from 1 to Zn specifying the running count for each repeating unit,
- R¹⁹_{zγ}, R²⁰_{zγ}, R²¹_{zγ}, R²²_{zγ}, R²³_{zγ}, R²⁴_{zγ}, represent independent of each other, and under consideration that y is a running count for each repeating unit, a hydrogen atom or a C₁₋₁₂ alkyl group,
- s_{zγ}, t_{zγ}, u_{zγ}, v_{zγ}, w_{zγ}, x_{zγ} represent independent of each other, and under consideration that γ is a running count for each repeating unit, an integer of 0 or 1, whereas the sum of s_{zγ}, to x_{zγ} is 2 to 6, and
- Zn represents an integer of 0 to 100.

The small letter z in the radicals in formula (IIIc), as for example in R¹⁹_{zγ}, and in the indices, as for example in s_{zγ}, indicate that they refer to unit Z. The same is indicated by the capital letter Z in the number of the repeating units Zn. Furthermore, the small letter γ in the radicals, as for example in R¹⁹_{zγ}, and in the indices, as for example in s_{zγ}, specify that each of the radicals and indices have their own sub-number, indicating that the radicals and indices may vary from one alkylene oxide unit to the other within a polyalkylene oxide unit Z. For example, radical R¹⁹_{z1} of the alkylene oxide unit with the running count 1 may be a hydrogen atom, whereas R¹⁹_{z2} of the alkylene oxide unit with the running count 2 may be methyl group, and so on. Similarly and also to be understood as an example, the index u_{z1} of the alkylene oxide unit with the running count 1 may be 0, whereas u_{z2} of the alkylene oxide unit with the running count 2 may be 1, and so on.

The C₁₋₁₂ alkyl group in the radicals R¹⁹_{zγ}, R²⁰_{zγ}, R²¹_{zγ}, R²²_{zγ}, R²³_{zγ}, R²⁴_{zγ}, in formula (Illc) can be linear or in case of C₃₋₁₂ alkyl be linear or branched. Preferred C₁₋₁₂ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, R²⁰_{zγ}, R²¹_{zγ}, R²²_{zγ}, R²³_{zγ}, R²⁴_{zγ}, represent a hydrogen atom, and R¹⁹_{zγ} a hydrogen atom or a C₁₋₁₂ alkyl group. More preferably, R¹⁹_{zγ} represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices s_{zγ}, t_{zγ}, u_{zγ}, v_{zγ}, w_{zγ}, x_{zγ} in formula (IIIc) represent independent of each other an integer of 0 or 1, whereas the sum of s_{zγ} to x_{zγ} is 2 to 6. Preferably, s_{zγ}, t_{zγ}, u_{zγ}, x_{zγ} are 1, and v_{zγ}, w_{zγ} are 0. More preferably, s_{zγ}, x_{zγ} are 1, and t_{zγ}, u_{zγ}, v_{zγ}, w_{zγ} are 0.

A specifically preferred unit Z is the unit of the general formula (IIId) 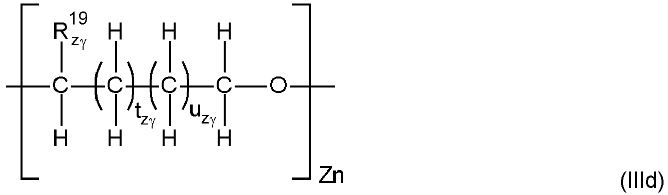 in which
- R¹⁹_{zγ} represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- t_{zγ}, u_{zγ} represent an integer of 0 or 1, whereas the sum of t_{zγ} to u_{zγ} is 0 or 2, and
- Zn represents an integer of 0 to 100.

A further specifically preferred unit Z based on formula (IIId) is the unit of the general formula (IIIe) 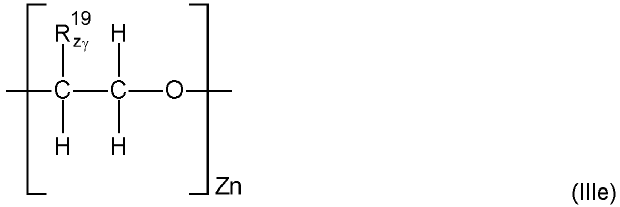 in which
- R¹⁹_{zγ} represents a hydrogen atom or a C₁₋₁₂ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- Zn represents an integer of 0 to 100.

The number of the repeating units Zn in formula (IIIc) is an integer of 0 to 100. It is preferably ≥ 2, more preferably ≥ 4, particularly preferably ≥ 8 and very particularly preferably ≥ 10, and preferably ≤ 75 and more preferably ≤ 50.

It is explicitly emphasized that the alkylene oxide units in unit Z can be the same within unit Z or differ from each other, in terms of different radicals R¹⁹_{zγ} to R²⁴_{zγ}, and in terms of different indices s_{zγ} to x_{zγ}. This is already clearly indicated by the indexes zγ in formula (IIIc) specifying sub-numbers for each radical, as for example in R¹⁹_{zγ}, and for each index, as for example in s_{zγ}, based on the running count for each repeating unit.

Moreover, it is explicitly emphasized that in the polyalkylene oxide ester polymer also each structural element (III), if more than one element (III) is present, can be identical to one or more of the others, or can differ from one or more of the others.

The different parts of the structural elements (II) and (III) such as the radicals, indices and the units X and Y including their general and preferred values have already been described above. The following paragraphs relate to preferred specific combinations of these parts.

Particularly preferred is a polyalkylene oxide ester polymer containing the structural elements (I), (II) and (III) in which
- R¹³, R¹⁹ represent independent of each other a hydrogen atom or a methyl group,
- R⁹, R¹⁰, R¹¹, R¹⁴, R¹⁵, R²⁰, R²¹, R²⁴ represent a hydrogen atom,
- g, h, p, q, v, w are 0,
- k, m, s, x are 1,
- i, j, n, o, t, u represent independent of each other an integer of 0 or 1, whereas the sum of i to j is 0 or 2, the sum of n to o is 0 or 2, and the sum of t to u is 0 or 2, and
- Y represents a polyalkylene oxide unit with 3 to 99 alkylene oxide units, and Z represents a polyalkylene oxide unit with 4 to 100 alkylene oxide units, whereby the alkylene oxide units are independent of each other and contain 2 or 4 carbon atoms in the direct chain between two ether groups, whereby in each alkylene oxide unit, and independent of each other, one of the carbon atoms in α-position to an -O- unit contain either two hydrogen atoms, or one hydrogen atom and one methyl group, and the remaining other one or three carbon atoms two hydrogen atoms each, whereby each -O- unit carries not more than one methyl group carrying carbon atom in α-position.

This particularly relates to a respective polymer in which the structural elements (II) and (III) are solely formed by C₂-units, solely formed by C₄-units or formed by a mixture thereof. Each C₂₋ and C₄₋unit may either carry only hydrogen atoms, or hydrogen atoms and one methyl group. If a methyl group in a C₂₋ or C₄₋unit is present, it is bound at a carbon atom in α-position to an -O- unit, whereby each -O- unit carries in its α-position not more than one methyl group carrying carbon atom.

Such elements are typically based on ethylene oxide monomers, propylene oxide monomers, tetrahydrofuran monomers or mixtures thereof. In case of propylene oxide based -CHCH₃-CH₂-O- and tetrahydrofuran based -CH₂-CH₂-CH₂-CH₂-O- units within formulas (II) and (III), it may be advantageous if the structural elements (II) and (III) contain at the border region of the respective element one or more C₂₋based units without methyl groups. This can be easily achieved by firstly polymerizing propylene oxide or tetrahydrofuran and later stop the addition of propylene oxide and tetrahydrofuran, respectively, and supply ethylene oxide to finish the polymerization, leading to C₂₋based units at both end sides. The obtained polyalkylene oxides can then be processed as described further down to form the structural units (II) and (III) in the polyalkylene oxide ester polymer. Due to the mentioned production process, ethylene oxide is co-polymerized with propylene oxide and tetrahydrofuran, respectively, causing an irregular structure in the border region in which -CHCH₃-CH₂-O- and -CH₂-CH₂-CH₂-CH₂-O- units, respectively, alternate with -CH₂-CH₂-O- units, so that the transition from -CHCH₃-CH₂-O- and -CH₂-CH₂-CH₂-CH₂-O- units, respectively, to -CH₂-CH₂-O- units might not be sharp. Such effect is well known in the art and the respective alternating structure also often called "dirty structures".

Another particularly preferred polyalkylene oxide ester polymer contains the structural elements (I), (II) and (III) in which
- R¹³, R¹⁹ represent independent of each other a hydrogen atom or a methyl group,
- R⁹, R¹⁰, R¹¹, R¹⁴, R¹⁵, R²⁰, R²¹, R²⁴ represent a hydrogen atom,
- g, h, i, j, n, o, p, q, t, u, v, w are 0,
- k, m, s, x are 1, and
- Y represents a polyalkylene oxide unit with 3 to 99 alkylene oxide units, and Z represents a polyalkylene oxide unit with 4 to 100 alkylene oxide units, whereby the alkylene oxide units are independent of each other and contain 2 carbon atoms in the direct chain between two ether groups, whereby in each alkylene oxide unit, and independent of each other, one of the carbon atoms in α-position to an -O- unit contain either two hydrogen atoms, or one hydrogen atom and one methyl group, and the remaining other carbon atom two hydrogen atoms, whereby each -O- unit carries not more than one methyl group carrying carbon atom in α-position.

This particularly relates to a respective polymer in which the structural elements (II) and (III) are solely formed by C₂-units based on ethylene oxide and propylene oxide.

The number of the structural elements (II) in the polyalkylene oxide ester polymer is 1 to 25, preferably ≥ 2, more preferably ≥ 3, particularly preferably ≥ 4, very particularly preferably ≥ 5 and most preferably ≥ 6, and preferably ≤ 23, more preferably ≤ 22, particularly preferably ≤ 20 and very particularly preferably ≤ 17. The total number of the elements (I) and (II) is adapted such that the total number of the ester groups does not exceed the maximum number of the ester groups specified for the polyalkylene oxide ester polymer.

Since the formation of ester groups by the elements (I), (II) and (III) require an -O- unit at the edge of one element and a -CO- unit at the edge of the other element, the total number of such -O- units and -CO- units in the elements from which the polyalkylene oxide ester polymer is formed is preferably adjusted such that the intended amount of ester groups are formed. A possible surplus of -O- units or -CO- units can, for example, be bound to end groups or to other structural element of the polymer. Since the numbers of -O- units and -CO- units in element (I) are already balanced and element (II) only provides -CO- units, element (III) is preferably present in a number suitable to form ester bonds with the -CO- units of the structural elements of the formulas (I) and (II). More preferably, the ratio between the number of elements (II) and the number of elements (III) is 0.8 to 1.2, particularly preferably ≥ 0.9 and very particularly preferably ≥ 0.95, and particularly preferably ≤ 1.1 and very particularly preferably ≥ 1.05, and most preferably 1. The surplus of -O- units or -CO- units can, for example, be bound to end groups or other structural elements.

Since the polyalkylene oxide ester polymers used in the invention are advantageously produced by esterification of monomers, it is favorable to use monomers which are easily available. Suitable monomers are particularly monomers which already comprise the structural element (I), in which, for example, the monomer of the element (I) contains a hydroxy group at the one edge, as a precursor for the -O- unit, and a carboxylic acid, carboxylic acid alkyl ester or carboxylate (such as for example -COONa) group at the one edge, as a precursor for the -CO- unit. Even though monomers of element (I) can be prepared in a high amount and high purity, it is easier to obtain a mixture of monomers of elements (I), (II) and (III). Consequently, polyalkylene oxide ester polymers based on such a mixture contain the elements (I), (II) and (III). Based on the composition of such monomer mixtures, a polyalkylene oxide ester polymer with a ratio of the number of the structural elements (I) to the number of the structural elements (II) of 0.5 to 8 is preferred, a ratio of 0.7 to 6 more preferred and a ratio of 0.85 to 4.7 particularly preferred.

As already mentioned before, the polyalkylene oxide ester polymer used in the invention can, beside end groups, also contain further polyalkylene oxide elements other than (I), (II) and (III), or even other structural elements. Further polyalkylene oxide elements other than (I), (II) and (III) may, for example, be elements with an alkylene unit which has more than six carbon atoms in the direct chain between two ether groups. Other structural elements can, for example, be based on diols other than structural element (III), on dicarboxylic acids other than structural element (II), or on alpha-hydroxy-omega carboxylic acids other than structural element (I), e.g. sebacic acid or terephthalic acid. The structural elements (I), (II) and (III) generally constitute 50 to 100%, preferably 70 to 100%, more preferably 80 to 100%, particularly preferably 90 to 100%, very particularly preferably 95 to 100%, and most preferably 98 to 100% of the number average molecular weight Mₙ of the polyalkylene oxide ester polymer. The nature of the structural elements, and thus the composition of the polyalkylene oxide ester polymer can, for example, be determined by hydrolyzing the ester bonds and analyzing the structural units with common analytical methods such as gas chromatography, HPLC, NMR and the like.

Due to the presence of end groups at both sides of the polymer, the amount of the structural elements (I), (II) and (III) is typically at least slightly below 100% of the number average molecular weight Mₙ of the polyalkylene oxide ester polymer, even if the polymer does not contain other elements than (I), (II) and (III). However, particularly in case of -OH groups as end groups, the numerical effect due to the very low molecular mass of the hydrogen atom compared with the molecular mass of the polyalkylene oxide ester polymer is so small that a 100% value can be achieved under consideration of the accuracy of the analytical measurement.

Although elements other than the elements (I), (II) and (III) may be present in the polyalkylene oxide ester polymer, it preferably contains only the elements (I), (II) and (III) plus two end groups.

Particularly preferred polyalkylene oxide ester polymers based on the structural elements (I), (II) and (III) are the following polymers, whereby their radicals and indices relate to the formulas (I), (Ic), (II), (IIc), (III) and (IIIc):

| | | | |
|---|---|---|---|
| A) | M_{w} [g/mol] | is | 500 to 50 000 |
| | number of ether groups | is | 10 to 560 |
| | number of ester groups | is | 2 to 51 |
| | a | is | 1 |
| | R¹ | is | H |
| | b, c, d, e | are | 0 |
| | a_{xα}, f_{xα} | are | 1 |
| | R¹_{xα}, R⁶_{xα} | are | H |
| | b_{xα}, c_{xα}, d_{xα}, e_{xα} | are | 0 |
| | Xn | is | 4 to 100 |
| | k, m | are | 1 |
| | R¹¹, R¹³ | are | H |
| | g, h, i, j, n, o, p, q | are | 0 |
| | g_{yβ}, l_{yβ} | are | 1 |
| | R⁷_{yβ}, R¹²_{yβ} | are | H |
| | h_{yβ}, i_{yβ}, j_{yβ}, k_{yβ} | are | 0 |
| | Yn | is | 3 to 99 |
| | s, x | are | 1 |
| | R¹⁹, R²⁴ | are | H |
| | t, u, v, w | are | 0 |
| | s_{zγ}, x_{zγ} | are | 1 |
| | R¹⁹_{zγ}, R²⁴_{zγ} | are | H |
| | t_{zγ}, u_{zγ}, v_{zγ}, w_{zγ} | are | 0 |
| | Zn | is | 4 to 100 |
| | ratio of number of (I) / number of (II) | is | 0.5 to 8 |
| | Percentage of molecular weight of (I)+(II)+(III) based on number average molecular weight Mₙ of polyalkylene oxide ester polymer | is | 95 to 100 |
| | End groups | | -OH or-COOH |

| | | | |
|---|---|---|---|
| B) | M_{w} [g/mol] | is | 500 to 50 000 |
| | number of ether groups | is | 10 to 560 |
| | number of ester groups | is | 2 to 51 |
| | a | is | 1 |
| | R¹ | is | H |
| | b, c, d, e | are | 0 |
| | a_{xα}, f_{xα} | are | 1 |
| | R¹_{xα} | are | H or methyl |
| | R⁶_{xα} | is | H |
| | b_{xα}, c_{xα}, d_{xα}, e_{xα} | are | 0 |
| | Xn | is | 4 to 100 |
| | k, m | are | 1 |
| | R¹¹, R¹³ | are | H |
| | g, h, i, j, n, o, p, q | are | 0 |
| | g_{yβ}, l_{yβ} | are | 1 |
| | R⁷_{yβ} | are | H or methyl |
| | R¹²_{yβ} | is | H |
| | h_{yβ}, i_{yβ}, j_{yβ}, k_{yβ} | are | 0 |
| | Yn | is | 3 to 99 |
| | s, x | are | 1 |
| | R¹⁹, R²⁴ | are | H |
| | t, u, v, w | are | 0 |
| | s_{zγ}, x_{zγ} | are | 1 |
| | R¹⁹_{zγ} | are | H or methyl |
| | R²⁴_{zγ} | is | H |
| | t_{zγ}, u_{zγ}, v_{zγ}, w_{zγ} | are | 0 |
| | Zn | is | 4 to 100 |
| | ratio of number of (I) / number of (II) | is | 0.5 to 8 |
| | Percentage of molecular weight of (I)+(II)+(III) based on number average molecular weight Mₙ of polyalkylene oxide ester polymer | is | 95 to 100 |
| | End groups | | -OH or-COOH |

| | | | |
|---|---|---|---|
| C) | M_{w} [g/mol] | is | 500 to 50 000 |
| | number of ether groups | is | 10 to 560 |
| | number of ester groups | is | 2 to 51 |
| | a | is | 1 |
| | R¹ | is | H |
| | b, c, d, e | are | 0 |
| | a_{xα}, f_{xα} | are | 1 |
| | R¹_{xα} | are | H or ethyl |
| | R⁶_{xα} | is | H |
| | b_{xα}, c_{xα}, d_{xα}, e_{xα} | are | 0 |
| | Xn | is | 4 to 100 |
| | k, m | are | 1 |
| | R¹¹, R¹³ | are | H |
| | g, h, i, j, n, o, p, q | are | 0 |
| | g_{yβ}, l_{yβ} | are | 1 |
| | R⁷_{yβ} | are | H or ethyl |
| | R¹²_{yβ} | is | H |
| | h_{yβ}, i_{yβ}, j_{yβ}, k_{yβ} | are | 0 |
| | Yn | is | 3 to 99 |
| | s, x | are | 1 |
| | R¹⁹, R²⁴ | are | H |
| | t, u, v, w | are | 0 |
| | s_{zγ}, x_{zγ} | are | 1 |
| | R¹⁹_{zγ} | are | H or ethyl |
| | R²⁴_{zγ} | is | H |
| | t_{zγ}, u_{zγ}, v_{zγ}, w_{zγ} | are | 0 |
| | Zn | is | 4 to 100 |
| | ratio of number of (I) / number of (II) | is | 0.5 to 8 |
| | Percentage of molecular weight of (I)+(II)+(III) based on number average molecular weight Mₙ of polyalkylene oxide ester polymer | is | 95 to 100 |
| | End groups | | -OH or-COOH |

| | | | |
|---|---|---|---|
| D) | M_{w} [g/mol] | is | 500 to 50 000 |
| | number of ether groups | is | 10 to 560 |
| | number of ester groups | is | 2 to 51 |
| | a, b, c | are | 1 |
| | R¹, R², R³ | are | H |
| | d, e | are | 0 |
| | a_{xα}, b_{xα}, x_{xα}, f_{xα} | are | 1 |
| | R¹_{xα}, R²_{xα}, R³_{xα}, R⁶_{xα} | are | H |
| | d_{xα}, e_{xα} | are | 0 |
| | Xn | is | 4 to 100 |
| | i, j, k, m, n, o | are | 1 |
| | R⁹, R¹⁰, R¹¹, R¹³, R¹⁴, R¹⁵ | are | H |
| | g, h, p, q | are | 0 |
| | g_{yβ}, h_{yβ}, i_{yβ}, l_{yβ} | are | 1 |
| | R⁷_{yβ}, R⁸_{yβ}, R⁹_{yβ}, R¹²_{yβ} | are | H |
| | j_{yβ}, k_{yβ} | are | 0 |
| | Yn | is | 3 to 99 |
| | s, t, u, x | are | 1 |
| | R¹⁹, R²⁰_{zγ}, R²¹_{zγ}, R²⁴ | are | H |
| | v, w | are | 0 |
| | s_{zγ}, t_{zγ}, u_{zγ}, x_{zγ} | are | 1 |
| | R¹⁹_{zγ}, R²⁰_{zγ}, R²¹_{zγ}, R²⁴_{zγ} | are | H |
| | v_{zγ}, w_{zγ} | are | 0 |
| | Zn | is | 4 to 100 |
| | ratio of number of (I) / number of (II) | is | 0.5 to 8 |
| | Percentage of molecular weight of (I)+(II)+(III) based on number average molecular weight Mₙ of polyalkylene oxide ester polymer | is | 95 to 100 |
| | End groups | | -OH or-COOH |

Regarding the polyalkylene oxide ester polymers mentioned under B) above, the radicals R¹_{xα}, R⁷_{yβ} and R¹⁹_{zγ} at or near the two borders of the X, Y and Z units are preferably H, whereas the radicals R¹_{xα}, R⁷_{yβ} and R¹⁹_{zγ} in the rest of the X, Y and Z units are preferably methyl. This is based on the preparation of such elements, which typically start with a polymerization of propylene oxide on which at the end ethylene oxide is co-polymerized.

Regarding the polyalkylene oxide ester polymers mentioned under C) above, the radicals R¹_{xα}, R⁷_{yβ} and R¹⁹_{zγ} at or near the two borders of the X, Y and Z units are preferably H, whereas the radicals R¹_{xα}, R⁷_{yβ} and R¹⁹_{zγ} in the rest of the X, Y and Z units are preferably ethyl. This is based on the preparation of such elements, which typically start with a polymerization of 1,2-butylene oxide on which at the end ethylene oxide is co-polymerized.

Both general structure definitions of PAG-ester / polyalkylene oxide ester polymers specified above as separate embodiments for use as the polymer backbone A for the graft polymers of this invention are an integral part of this invention; it is specifically pointed out that both definitions overlap to a large extent, with the second structure definition being more comprehensive and being defined in organic chemistry terms, whereas the first structure definition is more narrow and uses the language of polymer chemistry; this latter polymer language is also intended to serve for a clearer understanding of those readers more fluent in polymer chemistry terms than in organic chemistry terms. Nevertheless, graft polymers of the present invention include both structures, and it is by no means intended to limit the invention to either one of the structure definitions; moreover, both are embodiments of the polymer backbone (A) of this present invention.

The polyalkylene oxide ester polymer / PAG-ester polymer of the invention can easily be prepared by esterification of blocks of the respective structural elements of which the polymer is to be build, whereas the blocks to be esterified contain, if intended as end group in the polyalkylene oxide ester polymer, at least one esterifiable end group in the block, and, if intended as a middle group in the polyalkylene oxide ester polymer, two esterifiable end groups in the block. In principle, as esterifiable end groups, basically groups typically known as esterifiable groups can be used. However, esterifiable end groups forming the -O- part in the later -COO- ester group are, for example, -OH, and esterifiable end groups forming the -CO- part in the later -COO- ester group are, for example, -COOH, -COOR in which R is a hydrocarbon group with 1 to 12 C-atoms, as for example a -COOCH3 group, or carboxylates in which the cation are preferably alkali metals such as sodium or potassium, and preferably -COOH and -COONa.

For the sake of completeness, it is explicitly mentioned that in principal also polyalkylene oxide ester polymers with a weight average molecular weight Mw higher than 50 000 g/mol, such as 100 000 g/mol or even much higher, can easily be prepared by esterification of the respective blocks.

In that context, a preferred process for the preparation of a polyalkylene oxide ester polymer of the invention was found, in which polyalkylene oxide comprising the structural element (I) and having one primary OH and one COOH end group, or a mixture of such polyalkylene oxides, is esterified at a temperature of 50 to 250°C and a pressure of 0.1 kPa abs to 1 MPa abs in the presence of an esterification catalyst.

Polyalkylene oxides comprising the structural element (I) and having one primary OH and one COOH end group can be synthesized in different ways. One possibility is to partially oxidize the respective polyalkylene oxide having two primary OH end groups and to separate the polyalkylene oxide component having one primary OH and one COOH end group (called "monoacid" also called "PAG-MC" for "PAG-mono carbonic acid") for example by vacuum distillation from the unconverted polyalkylene oxide having two OH end groups (called "diol", "PAG-DO" for "PAG-diol") and the fully oxidized polyalkylene oxide having two COOH end groups (called "diacid"; also "PAG-DC" for "PAG-dicarbonic acid"). Another possibility is to specifically synthesize the polyalkylene oxide having one primary OH and one COOH end group, for example, by adding sodium metal and bromoacetic acid to polyalkylene oxide and processing the obtained sodium carboxylate end group to the respective carboxylic acid end group. However, both ways are elaborate in terms of their process steps, be it by a vacuum distillation or complex synthesis steps, but they may be justified if a polyalkylene oxide ester polymer with a high content of structural unit (I) is wanted.

Furthermore, another and more preferred process for the preparation of the polyalkylene oxide ester polymer of the invention was found, in which
a) a polyalkylene oxide comprising the structural element (I) and having one primary OH and one COOH end group, or a mixture of such polyalkylene oxides,
b) a polyalkylene oxide comprising the structural element (II) and having two COOH end groups, or a mixture of such polyalkylene oxides, and
c) a polyalkylene oxide comprising the structural element (III) and having two primary OH end groups, or a mixture of such polyalkylene oxides,
are esterified at a temperature of 50 to 250°C and a pressure of 0.1 kPa abs to 1 MPa abs in the presence of an esterification catalyst.

It was further recognized according to the invention that a mixture of the components a) to c) can easily be produced by partial oxidation of the respective polyalkylene oxide having two primary OH end groups. Such partial oxidation is described further below. For the sake of completeness, it is mentioned that the mixture of the components a) to c) can, of course, also be prepared by mixing of the individual components.

As the ester groups in the polyalkylene oxide ester polymer are typically formed by esterification of polyalkylene oxide blocks having esterifiable end groups, and each ester group requires one -O- containing end group such as an -OH group, and one -CO- containing end group such as a -COOH group, it is favorable that their amounts are equal or approximately equal. A small surplus of one type can, however, be absorbed by elements other than (I), (II) and (III) which are able to link to the -O- or -CO- groups. Additionally, the two end groups of the polyalkylene oxide ester polymer may also bind two of such groups. Based on this, the ratio of the number of the OH end groups to the number of the COOH end groups is preferably 0.9 to 1.1, more preferably ≥ 0.95, particularly preferably ≥ 0.98 and more particularly preferably ≥ 0.99, and more preferably ≤ 1.05, particularly preferably ≤ 1.02 and more particularly preferably ≤ 1.01.

The esterification of the respective polyalkylene oxide blocks can generally be performed in a manner industrially known and, for example, described in US 6,310,235 or US 5,324, 853. The educts are esterified in the presence of an esterification catalyst and the educts are preferably provided such that the ratio of the number of the OH end groups to the number of the COOH end groups is within the objected range.

Usually, different types of esterification catalysts can be used. They can roughly be divided into acidic, amphoteric and basic catalysts. As representatives of acidic catalysts, mineral acids such as sulfuric acid and phosphoric acids, and organic sulfonic acids such as methanesulfonic acid and p-toluenesulfonic acid, trifluormethansulfonsäure are mentioned. Further acidic catalysts can also be acidic solids such as zeolites, especially Ti-zeolites, diverse oxides, mixed metal oxides, sulfated oxides, acid ion exchange resins, protonic heteropolyoxoanions, salts of heteropolyoxoanions, acid clays and phosphates. Representatives of basic catalysts are, for example, ZnO, La₂O₃, ThO₂, ZrO₂, hydrotalcites, hydroxyapatites, alkali metal oxides, alkaline earth metal oxides, basic zeolites and solid superbases like Verkade bases or guanidines. As possible amphoteric catalysts oxides of zinc(II), tin (II) and tin(IV) are mentioned. Furthermore, lewis acidic catalysts derived from group 4 metal cations of the Periodic Table of the Elements, e.g. Ti and Zr compounds, such as Ti(VI) and Zr(IV), derived from group 3 metal cations of the Periodic Table of the Elements, e.g. Sc(lll) compounds, or group 5 metal cations of the Periodic Table of the Elements, e.g. AI(III) compounds, are also useful. However, also catalysts containing metal cations of group 12 and 15 of the Periodic Table of the Elements, such as Sn(IV), Sn(II), Zn(ll) and Bi(lll) are mentioned. The corresponding anions can typically be chosen from alkoxylates such as isopropoxylates and isobutyrates alkanoate, aralkylcarboxylates, halogen, sulfate, organic sulfonates such as p-toluolsulfonates or methansulfonate, amidomethansulfonate, trifluormethansulfonate or triflourmethansulfonimide.

The esterification catalysts are typically used in a customary amount in the range of 0.02 to 10 wt.-%, preferably ≥ 0.05 wt.-% and more preferably ≥ 0.1 wt.-%, and preferably ≤ 5 wt.-% and more preferably ≤ 2 wt.-%, based on the sum of the compounds to be esterified.

The esterification can be carried out in the absence or in the presence of a solvent. If it is carried out in the presence of a solvent, an organic solvent that is inert under the reaction conditions is preferably used. These include, for example, aliphatic hydrocarbons, halogenated aliphatic hydrocarbons, aromatic and substituted aromatic hydrocarbons or ethers. Preferably, the solvent is selected from pentane, hexane, heptane, ligroin, petroleum ether, cyclohexane, benzene, toluene, xylene, chlorobenzene, dichlorobenzenes, dibutyl ether, tetrahydrofuran, dioxane and mixtures thereof. Suitable solvents forming an azeotrope with water are aromatic hydrocarbons, e.g. benzene, alkyl aromates, toluene orxylenes. Also halogenated compounds with suitable high boiling points are useful.

The esterification is effected at a temperature of 50 to 250°C, preferably ≥ 70°C and more preferably ≥ 80°C, and preferably ≤ 220°C and more preferably ≤ 200°C. If the esterification catalyst is an organic acid or mineral acid, the esterification is usually carried out at a temperature range of 50 to 160°C. If the esterification catalyst is a metal containing catalyst, the esterification is usually carried out at a temperature range of 80 to 250°C. With regard to the pressure, the esterification can be performed at a wide pressure range from vacuum to a pressure above atmospheric pressure, ranging from 0.1 kPa abs to 1 MPa abs. Preferably, it is performed at ≤ 0.5 MPa abs and more preferably at ≤ 0.2 MPa abs.

The esterification can take place in the absence or in the presence of an inert gas. An inert gas is generally understood as meaning a gas which, under the stated reaction conditions, does not enter into any reactions with the starting materials, reagents, solvents or the resulting products involved in the reaction.

Suitable reactors for performance of the process of the esterification are in principle all reactors suitable for esterification reactions. Examples include stirred tanks.

Mainly depending on the nature of the educt, the type and amount of the catalyst and the reaction temperature, the esterification typically requires a reaction time of 1 to 24 hours, more typically 2 to 12 hours.

The obtained polyalkylene oxide ester polymer is typically but not necessarily worked up, depending on the intended purity. In case of a workup, components other than the polyalkylene oxide ester polymer are usually removed, particularly the esterification catalysts. Polyalkylene oxide ester polymer free of esterification catalysts are generally important for the product quality. Heterogenous catalysts can typically be removed by physical methods like filtration or centrifugation. Homogenous catalysts can typically be removed by the use of stationary ionic exchanging units.

In a preferred embodiment the catalyst is not removed but left in the polyalkylene oxide polymer. This embodiment is favorable in case the amounts of the catalyst employed are at the low to very low end of the range disclosed herein.

The molecular mass of the polyalkylene oxide ester polymer can be easily adjusted by the ratio of the OH to COOH end groups of the compounds to be esterified. Simply spoken, the more the ratio deviates from an exact 1:1 ratio, the fewer ester groups are formed in polyalkylene oxide ester polymer. Practically, this can, for example, be done by addition of a diol component or a diacid component, ideally of the one of the educts to the reaction mixture. However, the addition of other monools or monocarboxylic acid fulfill also the purpose.

The end groups of the polyalkylene oxide compounds which are not esterified with other polyalkylene oxide compounds typically form the end groups of the polyalkylene oxide ester polymer of the invention. Thus, not esterified -OH end groups of the polyalkylene oxide compounds lead to -OH end groups of the polyalkylene oxide ester polymer and not esterified -COOH, -COOR or -COOM end groups of the polyalkylene oxide compounds to -COOH, -COOR or -COOM end groups of the polyalkylene oxide ester polymer, whereby R is typically a hydrocarbon group with 1 to 12 C-atoms such as a methyl group, and M typically an alkali metal such as sodium or potassium.

For the sake of completeness, it is mentioned that beside the blocks containing the structural elements (I), or the structural elements (I) to (III), also other elements with esterifiable end groups can be present, particularly if a polyalkylene oxide ester polymer is to be produced which also shall contain such other elements. Examples of such other elements are polyalkylene oxide elements with an alkylene unit which has more than six carbon atoms in the direct chain between two ether groups.

As already mentioned before, mixtures of the components a) to c) comprising the so called "monoacid", "diacid" and "diol" can easily be produced by partial oxidation of the respective polyalkylene oxide having two primary OH end groups ("diol"). This also enables the way to obtain polyalkylene oxide comprising the structural element (I) and having one primary OH and one COOH end group (the so called "monoacid"), or a mixture of such polyalkylene oxides, in a higher concentration by separating off at least parts of the other components (the so called "diacid" and "diol"), if a polyalkylene oxide ester polymer with a higher content of the structural element (I) is sought and thus increases the flexibility.

In a preferred process, the polyalkylene oxide used in the esterification comprising the structural element (I) and having one primary OH and one COOH end group, or a mixture of such polyalkylene oxides, has been produced by partial oxidation of the respective polyalkylene oxide having two primary OH end groups, or a mixture of such polyalkylene oxides, with oxygen at a temperature of 20 to 100°C and a partial oxygen pressure of 0.01 to 2 MPa abs in the presence of water and a heterogeneous catalyst comprising platinum, palladium or gold.

Depending on the intended composition and structure of the polyalkylene oxide ester polymer, the polyalkylene oxide comprising the structural element (I) and having one primary OH and one COOH end group, or a mixture of such polyalkylene oxides, which has been prepared by partial oxidation as described above, can, of course, be blended with other components such as polyalkylene oxide comprising the structural element (II) and having two COOH end groups, polyalkylene oxide comprising the structural element (III) and having two OH end groups, any other polyalkylene oxides having OH and/or COOH groups, or any other esterifiable structural elements.

In a more preferred process, the mixture of the components a) to c) used in the esterification has been produced by partial oxidation of the respective polyalkylene oxide having two primary OH end groups, or a mixture of such polyalkylene oxides, with oxygen at a temperature of 20 to 100°C and a partial oxygen pressure of 0.01 to 2 MPa abs in the presence of water and a heterogeneous catalyst comprising platinum, palladium or gold, and the oxidation reaction been stopped after a ratio of the number of the OH end groups to the number of the COOH end groups in the range of 0.9 to 1.1 has been reached.

The respective polyalkylene oxide having two primary OH end groups to be used as starting material for the partial oxidation can easily be prepared by methods known in the art. The oxidation of a OH end group to a COOH end group requires the existence of a primary OH group. For example, polyethylene oxides can advantageously be prepared by polymerization of ethylene oxide. Similarly, polypropylene oxides and poly-1,2-butylene oxides can advantageously be prepared by polymerization of propylene oxide and 1,2-butylene oxide, respectively, but due to the existence of a secondary OH group at one end, ethylene oxide is usually copolymerized at the end of the polymerization to form ethylene oxide units at the outer region, whereas the inner region comprises propylene oxide and 1,2-butylene oxide units, respectively. Furthermore, polytetrahydrofuran can advantageously be prepared by polymerization of tetrahydrofuran.

The partial oxidation process is conducted in the presence of water. Water promotes the oxidation of the -OH end groups into -COOH end groups in various ways. For instance, water, in the case of use of a suspension catalyst, improves the suspension thereof in the reaction mixture and additionally also lowers the viscosity of the reaction mixture. The concentration of water in the liquid phase is preferably kept at 50 to 95 wt.-%, preferably ≥ 60 wt.-%, and preferably ≤ 90 wt.-% and more preferably ≤ 80 wt.-%.

The catalyst used in the partial oxidation process is a heterogeneous catalyst comprising platinum, palladium or gold, and preferably platinum as active component. Typically, the active metals are fixed on a support. A wide variety of different materials may be used as support. Examples include inorganic oxides, for instance aluminum oxide, zirconium oxide, titanium dioxide, silicon oxide, inorganic silicates, for instance aluminum silicate, or charcoal. It is of course also possible to use mixtures of different support materials. Preference is given to the use of charcoal as support.

The preferred catalyst with platinum as active component comprises generally 0.1% to 10% by weight, preferably ≥ 0.5% by weight, more preferably ≥ 1% by weight and even more preferably ≥ 4% by weight, and preferably ≤ 8% by weight and more preferably ≤ 6% by weight, of platinum, based in each case on the total mass of the heterogeneous catalyst. More preferably, a heterogeneous catalyst comprising 1 to 10 wt.-% and particularly 4 to 10 wt.-% of platinum on charcoal is used.

The catalyst to be used may also comprise further metals as well as platinum, palladium or gold. The term "further metals" is understood to mean metals from the fourth to sixth periods of groups 3 to 16 of the Periodic Table of the Elements, beginning with scandium (atomic number 21) and ending with polonium (atomic number 84). Preferably, the total content of further metals is 0 to 100 wt.-%, preferably 0 to 30 wt.-%, more preferably 0 to 10 wt.-%, even more preferably 0 to 1 wt.-% and especially 0 to 0.1 wt.-%, based on the mass of platinum. In particular, the total content of cadmium, lead and bismuth is preferably 0 to 1 wt.-%, more preferably 0 to 0.5 wt.-%, especially preferably 0 to 0.1 wt.-%, even more preferably 0 to 0.05 wt.-% and especially 0 to 0.01 wt.-%, based on the mass of platinum. The catalyst is thus preferably prepared without deliberate addition of further metals.

The heterogeneous supported catalyst can be used in various geometric shapes and sizes, for instance as powder or shaped bodies. Pulverulent catalysts may be operated, for example, in suspension mode. In the case of a fixed bed mode, preference is given to using shaped bodies, for example pellets, cylinders, hollow cylinders, spheres or extrudates or tablets. The shaped bodies in that case are typically fixed in the reactor by the known methods. In the case of shaped catalyst bodies, these preferably have an average particle size of 1 to 10 mm.

However, preference is given to using the catalyst in the form of a powder. In that case, the pulverulent catalyst is in suspension in the reactor. In order to prevent discharge from the reaction system, a filter is typically used here to retain the suspension catalyst. One example of a customarily used filter is the crossflow filter.

Irrespective of the geometric shape and size of the catalyst particles, the platinum is generally in the form of particles having an average diameter of 0.1 to 50 nm, measured via x-ray diffraction. However, there may also be smaller or larger particles.

In the production of the heterogeneous supported catalyst, the platinum is generally applied to the support by suitable methods such as those described in US 2020/017,745.

The heterogeneous supported catalyst generally has a BET surface area of ≥ 1 m2/g and ≤ 10 000 m2/g, determined to DIN ISO 9277:2014-01. When carbon is used as support, the BET surface area is preferably in the range of ≥ 500 m2/g and ≤ 10 000 m2/g.

The preferred platinum based catalyst is typically applied in an amount of 0.1 to 50 mg platinum per g of the polyalkylene oxide to be partially oxidized, preferably ≥ 1 mg and preferably ≤ 20 mg.

Since the polyalkylene oxide feedstock is pH-neutral in aqueous solution, the pH on commencement of the oxidation is typically at or close to 7. As a result of the formation of the COOH groups, there is a gradual fall in the pH, and so there is generally a value of 1 or 3 toward the end of the oxidation.

However, the partial oxidation can also be performed in the presence of a base, such as sodium or potassium hydroxide. A basic condition increases the oxidation potential and leads to the formation of carboxylic acid salts (carboxylates) instead of carboxylic acids. As already mentioned before in the description of the esterification process, also carboxylates can be directly used in the esterification.

In case of the absence of basic compounds, there is direct formation of the carboxylic acids. This saves (i) the use of additional chemicals (base and extraneous acid), and (ii) the disposal of the salt formed from the base and the extraneous acid.

The oxidation medium used in the partial oxidation process is molecular oxygen. Oxygen is added either in pure form or diluted with other gases, for example in the form of air or an O2/N2 mixture. Preferably an oxygen gas having a content of ≥ 90% by volume, more preferably of ≥ 95% by volume, even more preferably of ≥ 99% by volume and especially of ≥ 99.5% by volume is used. The use of very highly concentrated or pure oxygen makes it possible to keep the amount of offgas relatively small.

In order to promote the distribution of the oxygen in the reactor, it may be advantageous to meter it in in the form of fine bubbles, for example through a frit.

The partial oxygen pressure present in the oxidation is 0.01 to 2 MPa, preferably ≥ 0.02 MPa and more preferably ≥ 0.05 MPa, and preferably ≤ 1 MPa and more preferably ≤ 0.3 MPa.

The oxidation is effected at a temperature of 20 to 100°C, preferably ≥ 30°C and more preferably ≥ 40°C, and preferably ≤ 80°C and more preferably ≤ 70°C.

Suitable reactors for performance of the partial oxidation process are in principle all reactors suitable for the performance of exothermic gas/liquid reactions. Examples include stirred tanks, trickle bed reactors and bubble column reactors. In order to remove the heat of reaction, the reactors are typically equipped with a cooling device. According to the reactor type and nature of the catalyst, the cooling device advantageously comprises cooling elements within the reactor or cooling elements in an external circuit outside the reactor. For example, a stirred tank preferably comprises internal cooling elements, whereas it is more advantageous in a bubble column, for example, to integrate the cooling elements in the external circuit.

If the catalyst is in the form of a shaped body, this is typically fixed in the reactor in the form of a fixed bed. For this purpose, the trickle bed reactor is a particularly useful option, in which the catalyst can be introduced in the form of a bed. But it is possible to use shaped catalyst bodies in a stirred tank reactor. In this case, it is then advantageous to fix the shaped catalyst bodies in a compartment, for example a wire basket.

In the case of the preferred use of a pulverulent catalyst, it is advantageously in suspended form in the reaction mixture. Preferred reactors for the purpose are, for example, stirred tanks or bubble columns. In order to prevent the pulverulent catalyst from settling out, corresponding mixing of the liquid reaction mixture is required. In a stirred tank, this is typically achieved by use of a stirrer. In the case of a bubble column, the mixing is usually achieved via an external circuit with a conveying pump. In principle, the bubble column, with regard to the liquid circuit, can be operated either in upward direction or in downward direction, but operation in downward direction is typically more advantageous.

In the partial oxidation process, either semicontinuous or continuous operation is possible. In both cases, the oxygen, for assurance of the desired partial pressure, is fed to the reactor continuously or at least intermittently, but preferably continuously.

In the semicontinuous mode of operation, prior to commencement of the reaction, the reactor is initially charged with the complete amount of aqueous reactant mixture together with catalyst and, during the oxidation reaction, no fresh reactant is supplied, nor is any liquid reaction mixture withdrawn. The reactor is not emptied until after the oxidation reaction has ended.

In the continuous mode of operation, there is likewise liquid reaction mixture together with catalyst present in the reactor, but there is constant withdrawal of a small amount of liquid reaction and supply of corresponding amount of aqueous reactant. If a suspension catalyst has been used here, the liquid reaction mixture is advantageously removed from the reactor via a filter device, for example a crossflow filter.

As the partially oxidized polyalkylene oxide shall in any event contain polyalkylene oxide having one primary OH and one COOH end group, the oxidation reaction has to be conducted in a way that a portion of the primary OH groups remains unoxidized whereas others are already oxidized to COOH groups. This can easily be achieved by stopping the oxidation reaction at a degree of oxidation in which the desired amount of the partially oxidized polyalkylene oxide is present. Except for low molecular weight polyalkylene oxides with a molecular weight of only a very few hundred g/mol, the probability that a primary OH group is oxidized to a COOH group is independent of whether the other end group of the polyalkylene oxide has already been oxidized or not. At the beginning of the oxidation, polyalkylene oxide having one primary OH and one COOH end group (called "monoacid") is primarily formed. With an increasing amount of it, the probability that also the other OH group is oxidized increases, so that then also polyalkylene oxide having two COOH end groups (called "diacid") is formed.

In case of a semicontinuous mode of operation, the easiest way to stop a further oxidation is to timely stop the supply of oxygen. The oxygen present in the reactor would at least be consumed. Additional actions which can be combined with such a stop of the oxygen supply are, for example, the additional supply of an inert gas in order to replace a part of the oxygen in the reactor, the lowering of the total pressure in the reactor which automatically causes a decrease of the partial oxygen pressure, or the cooling of the reaction liquid, e.g. by withdrawing it from the reactor through a cooling unit. However, the most effective measure is to stop the oxygen supply.

Such an interference in the progress of the oxidation reaction is very easily controllable since the oxidation reaction takes many hours to proceed, so that there is a sufficiently long time frame in which the "monoacid" is present in a large concentration. The time frame in which the partial oxidation reaction is to be stopped, can be determined in various ways. Firstly, the required time for the partial oxidation under specified conditions, such as temperature, oxygen partial pressure, nature and amount of catalyst, etc., can be determined in preliminary tests in which the oxidation is stopped at different times and the reaction product analyzed for its composition. The oxidation time which is required for obtaining the intended composition can then be estimated. Another possibility to control the partial oxidation is to measure the amount of oxygen provided to the reactor as a measure of the oxygen absorbed by the oxidation. The degree of oxidation can then be calculated by the amount of OH groups present in the educt polyalkylene oxide and the stoichiometry of their oxidation to COOH groups. A further way is to take samples over time and to analyze them, e.g. by determining the acid number by titration as a measure of the COOH groups already formed. And last but not least, also physical in-situ measurements like the measurement of the electrical conductivity, of the dielectric constant or of the impedance are mentioned, which, of course, have to be calibrated in advance.

In case of a continuous mode of operation, the degree of oxidation can easily be adjusted by the residence time of the mixture in the reactor under reaction conditions.

As already mentioned above, oxidation reaction takes many hours. For a partial oxidation of around 50% of the OH groups, the typical reaction time is around 3 to 20 hours, preferably ≥ 4 hours and more preferably ≥ 5 hours, and preferably ≤ 18 hours and more preferably ≤ 15 hours.

For the sake of completeness, it is to mention that beside the oxidation of the OH groups to COOH groups as the main reaction also an oxidative degradation takes place in a small degree. In such an oxidative degradation a small amount of alkylene oxide units may be totally oxidized. This inevitably causes a small decrease of the medium chain length of the partially oxidized alkylene oxide compared with the educt alkylene oxide before the partial oxidation.

After the end of the reaction, the reaction mixture is typically removed from the reactor and separated from the catalyst. In the case of use of a suspension catalyst, the removal is sensibly by filtration. Alternatively, it is also possible to allow the suspension catalyst to settle out at the reactor base after the end of the reaction and to remove the supernatant liquid. It is also possible to separate the catalyst by use of a centrifuge. The catalyst removed can generally be reused without further workup. The water or at least a major portion of the water is typically removed by distillation, for example over a wiped film evaporator. The partially oxidized polyalkylene oxide can then be used in the esterification step.

The polyalkylene oxide ester polymer of the invention can broadly substitute conventional polyalkylene oxide polymers in their applications.

The products containing such polyalkylene oxide ester polymers or produced with such polyalkylene oxide ester polymers are significantly better biodegradable than similar products containing, or produced with conventional polyalkylene oxide polymers.

The polyalkylene oxide ester polymer as employed as polymer backbone A in the invention is a new class of polymers which are able to substitute polyalkylene oxides, particularly polyethylene oxides, polypropylene oxides, poly-1,2-butylene oxides and polytetrahydrofuran, in their typical applications such as for the encapsulation of fragrances, and in the preparation of graft polymers for its use in homecare and laundering applications. Some of the application properties of the polyalkylene oxide ester polymers are even better than those of the conventional polyalkylene oxides. The greatest advantage of the new type of polymers is their significantly better biodegradability which can be an important contribution in protecting the environment, particularly since the polyalkylene oxide ester polymers can be easily substitute the conventional polyalkylene oxides in homecare and laundering applications. The polyalkylene oxide ester polymer are safe and durable in their applications.

Moreover, the polyalkylene oxide ester polymer of the invention can be easily produced in high yields from easily available starting materials in a two-step process.

The same applies to the graft polymers based on such polyalkylene oxide ester polymers, the graft polymers being detailed in the following:

### Graft Polymers

The graft polymer of the invention includes - as the first structural unit of the graft polymer - a polymer backbone (A) as defined before by the two structure definitions of PAG-ester / polyalkylene oxide ester polymers, and - as second structural unit of the graft polymers - polymeric side chains (B), which are grafted onto the polymer backbone (A), wherein said polymeric sidechains (B) are obtainable by polymerization of at least one monomer selected from (B1) and (B2), with the monomers (B2) being selected from at least one monomer (B2a) and optionally at least one further monomer (B2b).

Monomers (B1) are being selected from at least one vinyl ester monomer, preferably at least one monomer (B1) being selected from vinyl acetate, vinyl propionate and vinyl laurate and any other known vinyl ester monomer, more preferably from vinyl acetate and vinyl laurate, and most preferably vinyl acetate. The remaining amounts of vinyl ester monomer (B1) may be any other known vinyl ester monomer, such as vinyl valerate, vinyl pivalate, vinyl neodecanoate (such as VEOVA9 and VEOVA 10), vinyl decanoate or vinyl benzoate.

It is preferred that as vinyl ester only vinyl acetate and/or vinyl propionate, and more preferably at least 80 weight percent, even more preferably at least 90 weight percent, and most preferably essentially only (i.e. about 100wt.% or even 100 wt.%) vinyl acetate is employed as vinyl ester.

Monomers (B2) are being selected from at least one monomer from the group (B2a) and optionally also at least one monomer from the group (B2b).

At least one monomer (B2a) is to be used for preparing the polymeric side chains (B) of the inventive graft polymer, with at least one monomer (B2a) being an olefinically unsaturated amine-containing monomer, being preferably 1-vinylimidazole and/or its derivatives such as alkyl-substituted derivatives of 1-vinylimidazole such as 2-methyl-1-vinylimidazole, more preferably being only 1-vinylimidazole.

As optional further monomers (B2b) at least one monomer (B2b) may be used in addition to (B2a) and/or (B1) for preparing the polymeric side chains (B) of the inventive graft polymer, such at least one monomer (B2b) being a nitrogen-containing monomer, selected from N-vinyllactams, such as N-vinylpyrrolidone, N-vinylpiperidone, N-vinylcaprolactam, derivatives thereof substituted with C1- to C8-alkyl groups, such as 3-methyl-, 4-methyl- or 5-methyl-N-vinylpyrrolidone; N-Vinylamides, such as N-vinylformamide and the N-vinylamine thereof obtainable following polymerization by hydrolysis; N-vinyl acetamide, N-vinyl-N-methylacetamide; 1-vinyl oxazolidinone and other vinyl oxazolidinones, 4-vinyl pyridine-N-oxide; preferably N-vinyllactams, even more preferably N-vinylpyrrolidone and/or N-vinylcaprolactam, and most preferably N-vinylpyrrolidone.

Further- not preferred - monomers (B2b) may be any one or more of olefinically unsaturated monomers polymerizable with monomers B1, B2a and B2b; such further monomers preferably being used in amounts less than the other monomers (B2b), such as up to 50, preferably up to 30, more preferably up to 10 and even more preferably up to 5 weight percent based on the weight of the other monomers (B2b) employed, and most preferably are not being employed at all. Typically, such further monomers are not employed deliberately but are present only as impurities within the monomers B1, B2a and the desired B2b-monomers, or are derived as decomposition or reaction products from such deliberately added monomers during polymerisation and/or work-up.

Hence, in a more preferred embodiment of the invention, the graft polymer as defined herein does not include other monomers (B2b) other than vinyllactams-monomers, preferably N-vinylpyrrolidone and/or N-vinylcaprolactam, and most preferably N-vinylpyrrolidone.

Within the context of the present invention, it is preferred that no other monomers besides those as defined above as (B1), (B2a) and (B2b) are employed within the respective polymerization process for obtaining the polymeric sidechains (B). However, if any further monomers besides the defined monomers according to (B1), (B2a) and (B2b) are present, such further monomers may be present in an amount of less than 3% of the total amount of monomers employed for obtaining the polymeric sidechains (B), and are preferably present only as impurities but not deliberately added for polymerization. Preferably, the amount of said further monomers is less than 1, more preferably less than 0.5% by weight, even more preferably less than 0.01% by weight, most preferably, there is essentially no or even a total absence of any further monomer besides the monomers (B1), (B2a) and (B2b).

In a preferred embodiment, polymeric sidechains (B) grafted onto the polymer backbone (A), are obtainable by co-polymerization of at least one monomer of (B1) and at least one monomer of (B2) with the monomers
(B1) being at least one vinyl ester monomer, being preferably selected from vinyl acetate, vinyl propionate and vinyl laurate, more preferably from vinyl acetate and vinyl laurate, and even more preferably vinyl acetate, and most preferably only vinyl acetate, and wherein the remaining amount of vinyl ester may be any other known vinyl ester
And (B2) with
   (B2a) at least one olefinically unsaturated amine-containing monomer, preferably being 1-vinylimidazole or its derivatives such as alkyl-substituted derivatives of 1-vinylimidazole such as 2-methyl-1-vinylimidazole, more preferably 1-vinylimidazole
      and
   (B2b) optionally at least one further nitrogen-containing monomer, being preferably a vinyllactame-monomer, being preferably selected from N-vinyllactams, such as N-vinylpyrrolidone, N-vinylpiperidone, N-vinylcaprolactam, more preferably N-vinylpyrrolidone, N-vinylcaprolactam, and most preferably N-vinylpyrrolidone,

The inventive graft polymers as detailed before in their composition contain the first and the second structural unit in the following amounts:
The amount of the polymer backbone (A) is from 30 to 90, preferably 50 to 90, more preferably 50 to 80, even more preferably 50 to 70; and
the amount of polymeric side chains (B) is from 10 to 70, preferably 10 to 50, more preferably 20 to 50, even more preferably 30 to 50; and
the amount of (B1) is from 0 to 50, preferably 1 to 50, more preferably 1 to 30, even more preferably 10 to 30; and
the amount of (B2) is from 10 to 60, preferably 10 to 50, more preferably 10 to 40, even more preferably 10 to 30;
each of the amounts before in weight percent based on the total WEIGHT OF THE GRAFT POLYMER;
   and
the amount of (B2a) in weight percent based on the total amount of monomers (B2) is 5 to 100, preferably at least 7,5, more preferably at least 10, even more preferably 20 to 80, even further more preferably 30 to 70 and most preferably 30 to 50; and
the amount of (B2b) in weight percent is equal to [100 % of the amount of (B2)] minus [the amount of (B2a)].

Preferably, the molecular weight of (A) employed for the previous embodiment is the molecular weight of the polymer backbone (B) as MW in g/mol being within 500 to 50000 and preferably at least 1000, and preferably at most 25000, more preferably at most 10000.

It is clear that all amounts of the required parts of the graft polymer, i.e. the amount of the polymer backbone (A) and all monomers (B1), (B2a) and (B2b) actually employed, have to add up to 100 percent per weight of the total graft polymer.

Likewise it is clear that the total amount for the backbone has to add up to "100%" of the total backbone employed; Likewise the total amount of all monomers (B) has to add up to "100%" of (B). The same applies for (B1), and as well for (B2), respectively.

Preferably, the amounts detailed before for (B1), (B2a) and (B2b) are combined with the amounts for (A) and (B). It is to be understood that the amounts for (A) and (B) may be selected from the various detailed ranges given independently from the various amounts and ranges given for (B1), (B2a) and (B2b): e.g. the most preferred range for (A) and (B) may be chosen and combined with the broadest possible ranges given for (B1) / (B2a) / (B2b), and any other possible combination. Preferably, for all selections possible to be made for (A)/(B) and (B1) / (B2a) / (B2b) the same selections are to be made, e.g. all "preferred" ranges are chosen, or - more preferably - all "more preferred" ranges are chosen, or - most preferably - all "most preferable" ranges are chosen.

Hence, in a more preferred embodiment the following amounts are chosen:
The inventive graft polymers as detailed before in their composition contain the first and the second structural unit in the following amounts:
The amount of the polymer backbone (A) is from 50 to 80, even more preferably 50 to 70; and
the amount of polymeric side chains (B) is from 20 to 50, even more preferably 30 to 50; and
the amount of (B1) is from 1 to 30, even more preferably 10 to 30; and
the amount of (B2) is from 10 to 40, even more preferably 10 to 30;
each of the amounts before in weight percent based on the total WEIGHT OF THE GRAFT POLYMER;
   and
the amount of (B2a) in weight percent based on the total amount of monomers (B2) is 7,5 to 100, more preferably at least 10 weight percent being based on the total WEIGHT OF THE GRAFT POLYMER; and
the amount of (B2b) in weight percent is equal to [100 % of the amount of (B2)] minus [the amount of (B2a)],
wherein preferably the polymer backbone (A) is a polyalkylene oxide comprising more than 70, preferably more than 80, even more preferably more than 90 weight percent of ethylene oxide based on total alkylene oxide, and most preferably only ethylene oxide, and
(B1) is vinyl acetate, (B2a) is vinylimidazole, and (B2b) is a vinyl lactame, preferably vinyl pyrrolidone.
IN an alternative embodiment of the one before, the monomers employed are (B2a) vinylimidazole, and (B2b) is a vinyl lactame, preferably vinyl pyrrolidone, and no monomer (B19 is employed.

In a more preferred embodiment the following amounts are chosen:
The inventive graft polymers as detailed before in their composition contain the first and the second structural unit in the following amounts:
The amount of the polymer backbone (A) is from 50 to 70; and
the amount of polymeric side chains (B) is from 30 to 50; and
the amount of (B1) is from 10 to 30; and
the amount of (B2) is from 10 to 30;
each of the amounts before in weight percent based on the total WEIGHT OF THE GRAFT POLYMER;
   and
the amount of (B2a) in weight percent based on the total amount of monomers (B2) is 5 to 100, preferably at least 7,5, more preferably at least 10, even more preferably 20 to 80, even further more preferably 30 to 70 and most preferably 30 to 50; and
the amount of (B2b) in weight percent is equal to [100 % of the amount of (B2)] minus [the amount of (B2a)].
wherein preferably the polymer backbone (A) is a polyalkylene oxide comprising more than 70, preferably more than 80, even more preferably more than 90 weight percent of ethylene oxide based on total alkylene oxide, and most preferably only ethylene oxide,
and wherein (B1) is vinyl acetate, (B2a) is vinylimidazole, and (B2b) is a vinyl lactame, preferably vinyl pyrrolidone.

In another more preferred but alternative embodiment the following amounts are chosen: The inventive graft polymers as detailed before in their composition contain the first and the second structural unit in the following amounts:
The amount of the polymer backbone (A) is from 50 to 70; and
the amount of polymeric side chains (B) is from 30 to 50; and
(B1) is not present; and
the amount of (B2) is from 10 to 30;
each of the amounts before in weight percent based on the total WEIGHT OF THE GRAFT POLYMER;
   and
the amount of (B2a) in weight percent based on the total amount of monomers (B2) is 5 to 100, preferably at least 7,5, more preferably at least 10, even more preferably 20 to 80, even further more preferably 30 to 70 and most preferably 30 to 50; and; and
the amount of (B2b) in weight percent is equal to [100 % of the amount of (B2)] minus [the amount of (B2a)],
wherein preferably the polymer backbone (A) is a polyalkylene oxide comprising more than 70, preferably more than 80, even more preferably more than 90 weight percent of ethylene oxide based on total alkylene oxide, and most preferably only ethylene oxide,
and wherein
   (B2a) is vinylimidazole, and (B2b) is a vinyl lactame, preferably vinyl pyrrolidone.

In a preferred embodiment, the graft polymer as detailed herein before is made from a polymer backbone (A) which itself is comprises only ethylene oxide as monomer and/or, preferably "and" the polymeric side chains (B) consist of vinyl acetate as the only monomer (B1), 1-vinyl imidazole as the only monomer (B2a), and (B2b) is a N-vinyllactame, preferably is N-vinylpyrrolidone, with the amount of the monomers as defined in any of the embodiments before.

In another preferred embodiment, the graft polymer as detailed herein before is made from a polymer backbone (A) which itself is comprises only ethylene oxide as monomer and/or, preferably "and" the polymeric side chains (B) consist of vinyl acetate as the only monomer (B1) and 1-vinyl imidazole as the only monomer (B2a), with no monomer (B2b) being present, with the amount of the monomers as defined in any of the embodiments before.

In another embodiment, the graft polymer as detailed herein before is made from a polymer backbone (A) which itself is comprises only ethylene oxide as monomer and/or, preferably "and" the polymeric side chains (B) consist of 1-vinyl imidazole as the only monomer (B2a), and (B2b) is a N-vinyllactame, preferably is N-vinylpyrrolidone, with the amount of the monomers as defined in any of the embodiments before.

In another embodiment, the graft polymer as detailed herein before is made from a polymer backbone (A) which itself is comprises only ethylene oxide as monomer and/or, preferably "and" the polymeric side chains (B) consist of 1-vinyl imidazole as the only monomer (B2a), with no monomer (B2b) nor (B1) being present, with the amount of the monomers as defined in any of the embodiments before.

In a more preferred embodiment the graft polymer as detailed before is made from a polymer backbone (A) as defined in any of the embodiments before wherein itself comprises only ethylene oxide as monomer and the polymeric side chains (B) consist of vinyl acetate as the only monomer (B1), 1-vinyl imidazole as the only monomer (B2a), and (B2b) is a N-vinyllactame, preferably is N-vinylpyrrolidone.

In an even more preferred embodiment, the preferred selections for the monomers as detailed before and the preferred selections for the amounts as detailed before are combined.

The inventive graft polymer as detailed before has a polydispersity (PDI) Mw/Mn of less than 7, preferably less than 5, more preferably less than 4, and most preferably in the range from 1 to 3 (with Mw = weight average molecular weight in g/mol, and Mn = number average molecular weight in g/mol; with the PDI being unitless), with lower numbers being preferred, but depending on the Mn of the polymer backbone employed (the higher the Mn of (A) also typically the higher the PDI) and also on the amount of (B) (the higher the amount of (B) relative to the amount of (A) typically the higher the PDI).

The respective values of Mw and Mn can be determined as described within the experimental section below.

The graft polymers of the invention may contain a certain amount of ungrafted polymers ("ungrafted side chains") made of vinyl ester(s), e.g. polyvinylacetate, and/or- depending on the employed monomers and their respective reactivities towards co-polymerisation - copolymers of vinyl ester(s) with the other monomers or even small amounts of copolymers of the other monomers employed. The amount of such ungrafted polymers may be high or low, depending on the reaction conditions, but is preferably to be lowered and thus is more preferably low. By this lowering, the amount of grafted side chains is preferably increased. Such lowering can be achieved by suitable reaction conditions, such as dosing of vinyl ester and radical initiator and their relative amounts and also in relation to the amount of backbone being present. This is generally known to a person of skill in the present field. Keeping such amounts of vinyl ester-polymers not being grafted low, also improves the clarity of the polymer solution , as especially homopolymers of vinyl esters such as vinyl acetate are known to impart cloudiness in aqueous solutions when present in amounts as low as 500 ppm.

In another embodiment of the present invention, the vinyl acetate polymerized within the polymeric sidechains (B) may be fully or partially hydrolyzed after the graft polymer as such is obtained. This means that the full or at least partial hydrolyzation of the polymeric sidechains (B) of the graft polymer is carried out after the polymerization process of the polymeric sidechains (B) is finished.

Due to this full or partial hydrolyzation the respective sidechain units originating from the at least one vinyl ester monomer (B1) are changed from the respective ester function into the alcohol function within the polymeric sidechain (B). It has to be noted that the corresponding vinyl alcohol is not suitable to be employed as monomer within the polymerization process of the polymeric sidechains (B) as the "vinyl alcohol" is not stable as such. In order to obtain an alcohol function (hydroxy substituent) within the polymeric sidechains (B) of the graft polymers according to the present invention, the alcohol function thus is typically introduced by hydrolyzing the ester function of the sidechains.

From a theoretical point of view, each ester function of the polymeric sidechain (B) may be replaced by an alcohol function (hydroxy group). In such a case, the polymeric sidechain is fully hydrolyzed (saponified) with respect to the amount of vinyl ester. It is to be noted that neither vinylimidazole nor in case N-vinylpyrrolidone is employed as further monomer, typically no hydrolyzation takes place at those units of the polymeric sidechain (B) which originates from vinyl-imidazole nor N-pyrrolidone employed as further monomers.

The hydrolysis can be carried out by any method known to a person skilled in the art. For example, the hydrolysis can be induced by addition of a suitable base, such as sodium hydroxide or potassium hydroxide.

However, within this embodiment of the present invention it is preferred that the hydrolyzation of the polymeric sidechains (B) with respect to the amount of vinyl ester is only carried out partially, for example, to an extend of up to 20wt.%, 40wt.% or 60wt.% (in relation to the total weight of the polymeric sidechains).

Within this embodiment, it is preferred that the polymeric sidechains (B) with respect to the amount of vinyl ester are fully or partially hydrolyzed after polymerization, preferably to an extent of up to 50% in relation to the amount of the at least one vinyl ester monomer (B1) employed within the polymerization.

However, in a preferred embodiment of this invention, the polymeric sidechains (B) of the graft polymer as detailed in extenso before are not hydrolyzed after polymerization.

It has been found that the inventive graft polymers as detailed herein before exhibit an improved bio-degradability which is at least 30, even more preferably at least 40 % within 28 days when tested under OECD301F, and may be at least 45, 50, 55, 60 or even 65, and all numbers in between and above.

The inventive graft polymers maybe characterized by their degree of grafting (number of graft sites of the polymeric sidechains (B) on the polymer backbone (A)). The degree of graft may be high or low, depending on the reaction conditions. Preferably, the degree of grafting is low.

This adjustment of the degree of grafting and the amount of ungrafted polymers can be used to optimize the performance in areas of specific interest, e.g. certain (e.g. detergent-) formulations, application areas or desired cleaning etc. performance.

As further criteria of course the individual performance of a specific graft polymer needs to be evaluated and thus ranked for each individual formulation, preferably for use as DTIpolymer.

One such criteria for the area of home care and especially fabric care of course it the performance upon washing, e.g. subjecting a certain material exhibiting colours on certain materials to a defined washing procedure and evaluate the binding properties of the inventive graft polymers towards those colours.

The examples give some guidance for the application for washing of fabrics, i.e. the general area of fabric care.

Depending on the individual needs for a polymer exhibiting a defined degree of biodegradation, water solubility and viscosity (i.e. handling properties) the general and specific teachings herein - without being intended to be limited to the specific examples being given - will guide on how to obtain such polymer.

### Process of Production of Graft Polymer

The invention also encompasses a process for obtaining a graft polymer as detailed herein before, wherein the process comprise a step of polymerizing the monomers (B1), (B2a) and optional (B2b) in the presence of at least one polymer backbone (A) as detailed herein before, to obtain the polymeric sidechains (B) grafted onto the polymer backbone (A) and thus the "graft polymer" of the invention.

It has to be noted that the "grafting process" as such, wherein a polymeric backbone, such as the polymer backbone (A) described herein above, is grafted with polymeric sidechains, is known to a person skilled in the art. Any process known to the skilled person in this respect can in principle be employed within the present invention.

The invention also encompasses a process for obtaining a graft polymer as detailed herein before, wherein the at least one monomer selected from (B1), (B2a), and (B2b) with at least one of (B2a) being present, are polymerized in the presence of at least one polymer backbone (A), wherein the polymeric sidechains (B) are obtained by radical polymerization, using radical forming compounds to initiate the radical polymerization, with all of (A), (B), (B1), (B2a) and (B2b) as being defined in any of the embodiments before.

The radical polymerization as such is also known to a skilled person. That person also knows that the inventive process can be carried out in the presence of a radical-forming initiator (C) and/or at least one solvent (D). The skilled person knows the respective components as such. The term "radical polymerization" as used within the context of the present invention comprises besides the free radical polymerization also variants thereof, such as controlled radical polymerization. Suitable control mechanisms are RAFT, NMP or ATRP, which are each known to the skilled person, including suitable control agents.

In a preferred embodiment the process to obtain the graft polymer of the invention as detailed herein comprising the polymerization of at least one monomer (B2a) and optionally at least one monomer (B1) and or (B2b), in the presence of at least one polymer backbone (A), a free radical-forming initiator (C) and, optionally but preferred, at least one solvent (D) in amounts of up to 50% by weight, based on the sum of components (A), (B), (C), and solvent (D), at a mean polymerization temperature at which the initiator (C) has a decomposition half-life of from 40 to 500 min, in such a way that the fraction of unconverted graft monomers (B) and initiator (C) in the reaction mixture is constantly kept in a quantitative deficiency relative to the polymer backbone (A), - with B1, B2a, B2b and A as detailed herein in any of the embodiments before in their respective ranges including the respective "preferred", "more preferred" etc "most preferred" ranges, amounts and selections and the combinations thereof as described in detail above.

The amount of ((free) radical-forming) initiator (C) is preferably from 0.1 to 5% by weight, in particular from 0.3 to 3.5% by weight, based in each case on the polymeric sidechains (B).

For the process according to the invention, it is preferred that the steady-state concentration of radicals present at the mean polymerization temperature is substantially constant and the graft monomers (B1) or (B2) are present in the reaction mixture constantly only in low concentration (for example of not more than 5% by weight). This allows the reaction to be controlled, and graft polymers can be prepared in a controlled manner with the desired low polydispersity.

The term "mean polymerization temperature" is intended to mean here that, although the process is substantially isothermal, there may, owing to the exothermicity of the reaction, be temperature variations which are preferably kept within the range of +/- 10°C, more preferably in the range of +/- 5°C.

According to the invention, the (radical-forming) initiator (C) at the mean polymerization temperature should have a decomposition half-life of from 40 to 500 min, preferably from 50 to 400 min and more preferably from 60 to 300 min.

According to the invention, the initiator (C) and the graft monomers (B1), (B2a) and (B2b) - the monomers as applicable as defined before - are advantageously added in such a way that a low and substantially constant concentration of undecomposed initiator and graft monomers (B1), (B2a) and (B2b) is present in the reaction mixture. The proportion of undecomposed initiator in the overall reaction mixture is preferably up to 15% by weight, in particular up to 10% by weight, based on the total amount of initiator metered in during the monomer addition. "Low concentration of graft monomers" means in this respect a concentration of up to 20, preferably up to 15, more preferably up to 10, most preferably up to 5 weight percent of the total amount of each monomer to be added.

At the end of the polymerization the amount of residual monomers preferably is very low, such as below 0,5 weight percent, more preferably below 0,1, even more preferably below 0,05 and most preferably of below 0,01 or even 0,005 weight percent based on the polymer solids. This can be achieved by suitable long polymerization duration, addition of additional radical inititiator at the end, increase of polymerization temperature, or any combination of those measures.

In a preferred embodiment the steady-state concentration of radicals present at the mean polymerization temperature is substantially constant.

To assure a safe temperature control although - especially when a polymerization starting in bulk and/or with a large amount of monomers being present from the start on - it is advisable, and thus preferred, to use an additional and efficient measure to control the temperature. This can be done by external or internal cooling; such cooling can be done by internal and/or external coolers such as heat exchangers, and/or using reflux condensers when working at the boiling temperature of the solvent or the solvent mixture.

The same measure could of course be used for for an embodiment wherein the monomers are added over a prolongend period of time, and thus the monomer concentration in the reaction volume being contantly low over time, this is usually not a crucial point, as the temperature is at least partially controlled also by the propagation of the polymerization reaction by controlling the radical concentration and the available amount of polyerizable monomers.

Of course, depending on the scale of the polymerisation reaction, such additional cooling as described before may become necessary for both variants - batch reaction or bulk reactions with large amounts of monomer present from the start or semi-continuous or continuous polymerization reactions with typically constantly low monomer concentrations - when the scale gets large enough that the ratio from volume to surface of the polymerization mixture becomes very large.

This however is generally known to a person of skill in the art of commercial scale polymerisations, and thus can be adapted to the needs.

The mean polymerization temperature is appropriately in the range from 50 to 140°C, preferably from 60 to 120°C and more preferably from 65 to 110°C.

Examples of suitable initiators (C) whose decomposition half-life in the temperature range from 50 to 140°C is from 20 to 500 min are:
- O-C₂-C₁₂-acylated derivatives of tert-C₄-C₁₂-alkyl hydroperoxides and tert-(C₉-C₁₂aralkyl) hydroperoxides, such as tert-butyl peroxyacetate, tert-butyl monoperoxymaleate, tert-butyl peroxyisobutyrate, tert-butyl peroxypivalate, tert-butyl peroxyneoheptanoate, tert-butyl peroxy-2-ethylhexanoate, tert-butyl peroxy-3,5,5-trimethylhexanoate, tert-butyl peroxyneodecanoate, tert-amyl peroxypivalate, tert-amyl peroxy-2-ethylhexanoate, tert-amyl peroxyneodecanoate, 1,1,3,3-tetramethylbutyl peroxyneodecanoate, cumyl peroxyneodecanoate, tert-butyl peroxybenzoate, tert-amyl peroxybenzoate and di-tert-butyl diperoxyphthalate;
- di-O-C₄-C₁₂-acylated derivatives of tert-C₈-C₁₄-alkylene bisperoxides, such as 2,5-dimethyl-2,5-di(2-ethylhexanoylperoxy)hexane, 2,5-dimethyl-2,5-di(benzoylperoxy)hexane and 1,3-di(2-neodecanoylperoxyisopropyl)benzene;
- di(C₂-C₁₂-alkanoyl) and dibenzoyl peroxides, such as diacetyl peroxide, dipropionyl peroxide, disuccinyl peroxide, dicapryloyl peroxide, di(3,5,5-trimethylhexanoyl) peroxide, didecanoyl peroxide, dilauroyl peroxide, dibenzoyl peroxide, di(4-methylbenzoyl) peroxide, di(4-chlorobenzoyl) peroxide and di(2,4-dichlorobenzoyl) peroxide;
- tert-C₄-C₅-alkyl peroxy(C₄-C₁₂-alkyl)carbonates, such as tert-amyl peroxy(2-ethylhexyl)carbonate;
- di(C₂-C₁₂-alkyl) peroxydicarbonates, such as di(n-butyl) peroxydicarbonate and di(2-ethylhexyl) peroxydicarbonate.

Depending on the mean polymerization temperature, examples of particularly suitable initiators (C) are:
- at a mean polymerization temperature of from 50 to 60°C:
   tert-butyl peroxyneoheptanoate, tert-butyl peroxyneodecanoate, tert-amyl peroxypivalate, tert-amyl peroxyneodecanoate, 1,1,3,3-tetramethylbutyl peroxyneodecanoate, cumyl peroxyneodecanoate, 1,3-di(2-neodecanoyl peroxyisopropyl)benzene, di(n-butyl) peroxydicarbonate and di(2-ethylhexyl) peroxydicarbonate;
- at a mean polymerization temperature of from 60 to 70°C:
   tert-butyl peroxypivalate, tert-butyl peroxyneoheptanoate, tert-butyl peroxyneodecanoate, tert-amyl peroxypivalate and di(2,4-dichlorobenzoyl) peroxide;
- at a mean polymerization temperature of from 70 to 80°C:
   tert-butyl peroxypivalate, tert-butyl peroxyneoheptanoate, tert-amyl peroxypivalate, dipropionyl peroxide, dicapryloyl peroxide, didecanoyl peroxide, dilauroyl peroxide, di(2,4-dichlorobenzoyl) peroxide and 2,5-dimethyl-2,5-di(2-ethylhexanoylperoxy)hexane;
- at a mean polymerization temperature of from 80 to 90°C:
   tert-butyl peroxyisobutyrate, tert-butyl peroxy-2-ethylhexanoate, tert-amyl peroxy-2-ethylhexanoate, dipropionyl peroxide, dicapryloyl peroxide, didecanoyl peroxide, dilauroyl peroxide, di(3,5,5-trimethylhexanoyl) peroxide, dibenzoyl peroxide and di(4-methylbenzoyl) peroxide;
- at a mean polymerization temperature of from 90 to 100°C:
   tert-butyl peroxyisobutyrate, tert-butyl peroxy-2-ethylhexanoate, tert-butyl monoperoxymaleate, tert-amyl peroxy-2-ethylhexanoate, dibenzoyl peroxide and di(4-methylbenzoyl) peroxide;
- at a mean polymerization temperature of from 100 to 110°C:
   tert-butyl monoperoxymaleate, tert-butyl peroxyisobutyrate and tert-amyl peroxy(2-ethylhexyl)carbonate;
- at a mean polymerization temperature of from 110 to 120°C:
   tert-butyl monoperoxymaleate, tert-butyl peroxy-3,5,5-trimethylhexanoate and tert-amyl peroxy(2-ethylhexyl)carbonate.

Preferred initiators (C) are O-C₄-C₁₂-acylated derivatives of tert-C₄-C₅-alkyl hydroperoxides, particular preference being given to tert-butyl peroxypivalate and tert-butyl peroxy-2-ethylhexanoate.

Particularly advantageous polymerization conditions can be established effortlessly by precise adjustment of initiator (C) and polymerization temperature. For instance, the preferred mean polymerization temperature in the case of use of tert-butyl peroxypivalate is from 60 to 80°C, and, in the case of tert-butyl peroxy-2-ethylhexanoate, from 80 to 100°C.

The inventive polymerization reaction can be carried out in the presence of, preferably small amounts of, an solvent (D). It is of course also possible to use mixtures of different solvents (D). Preference is given to using water-soluble or water-miscible organic solvents. In an alternative but not preferred embodiment the solvent used is water, with organic solvents being present in smaller amounts compared to water.

When a solvent (D) is used as a diluent, generally from 1 to 40% by weight, preferably from 1 to 35% by weight, more preferably from 1.5 to 30% by weight, most preferably from 2 to 25% by weight, based in each case on the sum of the components (A), (B1), optionally (B2), and (C), are used.

Examples of suitable solvents (D) include:
- monohydric alcohols, preferably aliphatic C₁-C₁₆-alcohols, more preferably aliphatic C₂-C₁₂-alcohols, most preferably C₂-C₄-alcohols, such as ethanol, propanol, isopropanol, butanol, sec-butanol and tert-butanol;
- polyhydric alcohols, preferably C₂-C₁₀-diols, more preferably C₂-C₆-diols, most preferably C₂-C₄-alkylene glycols, such as ethylene glycol, 1,2-propylene glycol and 1,3-propylene glycol;
- alkylene glycol ethers, preferably alkylene glycol mono(C₁-C₁₂-alkyl) ethers and alkylene glycol di(C₁-C₆-alkyl) ethers, more preferably alkylene glycol mono- and di(C₁-C₂-alkyl) ethers, most preferably alkylene glycol mono(C₁-C₂-alkyl) ethers, such as ethylene glycol monomethyl and -ethyl ether and propylene glycol monomethyl and - ethyl ether;
- polyalkylene glycols, preferably poly(C₂-C₄-alkylene) glycols having 2-20 C₂-C₄-alkylene glycol units, more preferably polyethylene glycols having 2-20 ethylene glycol units and polypropylene glycols having 2-10 propylene glycol units, most preferably polyethylene glycols having 2-15 ethylene glycol units and polypropylene glycols having 2-4 propylene glycol units, such as diethylene glycol, triethylene glycol, dipropylene glycol and tripropylene glycol;
- polyalkylene glycol monoethers, preferably poly(C₂-C₄-alkylene) glycol mono(C₁-C₂₅-alkyl) ethers having 2-20 alkylene glycol units, more preferably poly(C₂-C₄-alkylene) glycol mono(C₁-C₂₀-alkyl) ethers having 2-20 alkylene glycol units, most preferably poly(C₂-C₃-alkylene) glycol mono(C₁-C₁₆-alkyl) ethers having 3-20 alkylene glycol units;
- carboxylic esters, preferably C₁-C₈-alkyl esters of C₁-C₆-carboxylic acids, more preferably C₁-C₄-alkyl esters of C₁-C₃-carboxylic acids, most preferably C₂-C₄-alkyl esters of C₂-C₃-carboxylic acids, such as ethyl acetate and ethyl propionate;
- aliphatic ketones which preferably have from 3 to 10 carbon atoms, such as acetone, methyl ethyl ketone, diethyl ketone and cyclohexanone;
- cyclic ethers, in particular tetrahydrofuran,
- water

The solvents (D) are advantageously those solvents, which are also used to formulate the inventive graft polymers for use (for example in washing and cleaning compositions) and can therefore remain in the polymerization product.

Preferred examples of these solvents are polyethylene glycols having 2-15 ethylene glycol units, polypropylene glycols having 2-6 propylene glycol units and in particular alkoxylation products of C₆-C₈-alcohols (alkylene glycol monoalkyl ethers and polyalkylene glycol monoalkyl ethers).

Particular preference is given here to alkoxylation products of C₈-C₁₆-alcohols with a high degree of branching, which allow the formulation of polymer mixtures which are free-flowing at 40-70°C and have a very low polymer content at comparatively low viscosity. The branching may be present in the alkyl chain of the alcohol and/or in the polyalkoxylate moiety (copolymerization of at least one propylene oxide, butylene oxide or isobutylene oxide unit). Particularly suitable examples of these alkoxylation products are 2-ethylhexanol or 2-propylheptanol alkoxylated with 1-15 mol of ethylene oxide, C₁₃/C₁₅ oxo alcohol or C₁₂/C₁₄ or C₁₆/C₁₈ fatty alcohol alkoxylated with 1-15 mol of ethylene oxide and 1-3 mol of propylene oxide, preference being given to 2-propylheptanol alkoxylated with 1-15 mol of ethylene oxide and 1-3 mol of propylene oxide.

In the process according to the invention, polymer backbone (A), graft monomer (B1), (B2a) and optional (B2b), initiator (C) and, if appropriate, solvent (D) are usually heated to the selected mean polymerization temperature in a reactor.

In a preferred embodiment, essentially no solvent (D) is added for the polymerization reaction except for the radical initiator being dissolved in small amounts of organic solvents as disclosed hereinafter.

In case almost essentially no solvent or no solvent at all is added, the reaction proceeds in the liquid state. This liquid state is either already present - in case when the backbone is a liquid - or the reaction is performed when the backbone is molten.

Depending on the amounts of monomers being present right from the start of the polymerization reaction, liquid monomers may help to achieve such liquid state.

Small amounts of organic solvents may be used, and preferably are used, for introducing for example the radical initiator as well as the graft monomers (B1) and/or (B2) which might be soluble to a reasonable extent only in such organic solvents but not necessarily in water. Suitable organic solvents may be isopropanol, ethanol, 1,2-propandiol and/or tripropylene glycol, and/or other suitable alcohols or organic solvents like 1-methoxy-2-propanol which are considerably inexpensive and available for large-scale uses, or solvents like ethyl acetate, methyl ethyl ketone, and the like, with isopropanol, 1,2-propandiol, 1-Methoxy-2-propanol, ethyl acetate and/or tripropylene glycol being preferred solvents, preferably only introduced in the reaction as solvents for the radical initiator and/or the graft monomers (B1) and/or (B2) in as low amounts as possible, more preferably only for the radical initiator(s). In case the radical initiator is soluble in water, then of course it is possible to use water as solvent for intrioducing the readical initiator, or mixtures of organic solvent and water.

The radical initiator (C) is preferably employed in the form of a concentrated solution in one of the solvents mentioned before. The concentration of course depends on the solubility of the radical initiator. It is preferred, that the concentration is as high as possible to allow to introduce as little as possible of the solvent into the polymerization reaction.

In such cases of low overall amounts of solvent(s), such solvents may be left in the final polymer, preferably may be left when the overall amount based on total solvents is less than 1, preferably less than 0,5, more preferably less than 0,1 weight percent. In case of using water as one of the solvents, larger amounts are of course acceptable - depending on the intended use.

The monomers are preferably employed in their pure form, or - not preferred - in the form of a 10 to 95% by weight solution in one of the solvents mentioned before. Here again, it is preferred, that the concentration is as high as possible to allow to introduce as little as possible of the organic solvent into the polymerization reaction.

For solvents having a boiling point of approximately less than 110-120 °C at atmospheric pressure, such solvents may - as a purification step - be removed partially or essentially complete by thermal or vacuum distillation or stripping with a gas such as steam or nitrogen, such as stripping with steam made from water, all at ambient or reduced pressure, preferably vacuum distillation, whereas higher boiling solvents will usually stay in the polymer products obtained. When mercaptoethanol is employed as chain transfer regulator, steam distillation is the preferred step of purification. Hence, higher boiling solvents like 1-methoxy-2-propanol, 1 ,2-propandiol and tripropylene glycol will stay in the polymer product, and thus their amounts should be minimized as far as possible by using as high as possible concentrations of the radical initiator when such solvents are used only for introducing the initiator, unless such solvents form also part of the formulation the graft polymer will be used within.

According to the invention, the polymerization is carried out in such a way that an excess of polymer (polymer backbone (A) and formed graft polymer (B)) is constantly present in the reactor. The quantitative ratio of polymer to ungrafted monomer and initiator is generally > 10:1, preferably > 15:1 and more preferably ≥ 20:1.

The polymerization process according to the invention can in principle be carried out in various reactor types.

The reactor used is preferably a stirred tank in which the polymer backbone (A), if appropriate together with portions, of generally up to 15% by weight of the particular total amount, of graft monomers (as applicable according to the previous embodiments on the graft polymer: (B1), (B2a) and/or (B2b)), initiator (C) and solvent (D), are initially charged fully or partly and heated to the polymerization temperature, and the remaining amounts of (B1), (B2a) and (B2b), (C) and, if appropriate, (D) are metered in, preferably separately. The remaining amounts of (B1), (B2a) and optional (B2b), (C) and, if appropriate, (D) are metered in preferably over a period of > 2 h, more preferably of ≥ 4 h and most preferably of > 5 h.

In the case of the particularly preferred, substantially solvent-free process variant, the entire amount of polymer backbone (A) is initially charged as a melt (if solid at ambient temperatures) or as pre-heated liquid (in case it is a viscous liquid with unsuitable high viscosity for handling) and the graft monomers (as applicable according to the previous embodiments on the graft polymer: (B1), (B2a) and/or (B2b)), and also the initiator (C) present preferably in the form of a from 10 to 50% by weight solution in one of the solvents (D), are metered in, the temperature being controlled such that the selected polymerization temperature, on average during the polymerization, is maintained within a range of especially +/- 10°C, in particular+/- 5°C.

In a further particularly preferred, low-solvent process variant, the procedure is as described above, except that solvent (D) is metered in during the polymerization in order to limit the viscosity of the reaction mixture. It is also possible to commence with the metered addition of the solvent only at a later time with advanced polymerization, or to add it in portions.

In an alternative process of this invention, water is used as the only solvent for the polymerization, specifically for such polymerisations where no monomers (B1) are present, and more specifically when only (B2a) and (B2b) are present as defined herein before; for such case, the reaction conditions, amounts of ingredients, concentrations at the start, scheme of addition, concentrations at the end of the polymerization, concentration of monomers at the start and during the reaction deviate from those being described herein before; such conditions for using water are however defined within the **unpublished** patent application EP 22186190.9, on page 9, line 55 to page 16, line 5, disclosed therein as preferred process using water as the only solvent except for smaller amounts of organic solvents used for dissolving and introducing the radical inititator (see especially e.g. page 14, line 19ff of that disclosure).

However, for the present invention such process as in **unpublished** EP22186190.9 using water as the only solvent and optionally only small amounts of organic solvents used for dissolving and introducing the radical inititator is not a preferred embodiment herein.

The polymerization can be affected under standard pressure or at reduced or elevated pressure. When the boiling point of the monomers (B1), (B2a) and optional (B2b) or of any diluent (D) used is exceeded at the selected pressure, the polymerization is carried out with reflux cooling.

A post-polymerization process step may be added after the main polymerization reaction. For that a further amount of initiator (dissolved in the solvent(s)) can be added over a period of 0,5 hour and up to 3 hours, preferably about 1 to 2 hours, more preferably about 1 hour, with the radical initiator and the solvent(s) for the initiator typically - and preferred - being the same as the ones for the main polymerization reaction. Of course a different radical initiator and/or different solvent(s) may be employed as well.

In between the post-polymerisation and the main polymerization a certain period of time may be waited, where the main polymerization reaction is left to proceed, before the post-polymerisation reaction is started by starting the addition of further radical initiator. Such period for watiting typically is from about 0,1 hour and up to 3 hours, preferably about 0,2 to 2 hours, more preferably up to about 1 hour.

The temperature of the post-polymerisation process step may be the same as in the main polymerization reaction (which is preferred in this invention), or may be increased. In case increased, it may be typically higher by about 5 to 40°C, preferably 10 to 20°C. In an alternative embodiment the post-polymerisation temperature can be the same as employed for the main polymerization step.

The graft polymer of this invention, i.e. the polymer solution obtained from the process, may be also subjected to a means of concentration or drying to remove part of or almost all of the remaining solvent(s) (as far as they are removable due to their boiling points).

The graft polymer solution obtained may be concentrated by removing part of the solvent(s) to increase the solid polymer concentration. This may be achieved by distillation processes such as thermal or vacuum distillation, and/or applying stripping with gas such as steam or inert gas such as nitrogen, preferably vacuum distillation, which is performed until the desired solid content is achieved. Such process can be combined with the purification step as disclosed before wherein the graft polymer solution obtained is purified by removing part or all of the volatile components such as volatile solvents and/or unreacted, volatile monomers, by removing the desired amount of solvent.

The graft polymer solution may be also after the main and/or the optional post-polymerization step and the optional purification step further concentrated or dried by subjecting the graft polymer solution to a means of removing the volatiles partially or fully, such as drying such as roller-drum drying, spray-drying, vacuum drying or freeze-drying, preferably - mainly for cost-reasons - spray-drying. Such drying process may be also combined with an agglomeration or granulation process such as spray-agglomeration, spray-granulation or drying in e.g. a fluidized-bed dryer. All such methods are in principle known and are in principle applicable to this present graft polymer.

The graft polymer obtained form the inventive process resembles that as detailed above describing the polymer structure in all of its embodiments, variations, and preferred, more preferred et. Embodiments, and including also the detailed embodiments as further described in the "Embodiment 1/2/3 etc." as listed at the end of the description herein below.

### Uses

In principle the graft polymers of this invention can be employed in any application to replace known graft polymers of similar composition either comprising a nitrogen-containing monomer as defined herein as (B2a), in terms of relative amounts of polymer backbone and grafted monomers especially when the type and amounts of grafted monomers is comparable, such as graft polymers being also referenced in the prior art section of this disclosure.

The graft polymers according to the present invention thus can be used, for example, within cleaning compositions and/or fabric and home care products, agrochemical formulations, treatment of textiles and fibres during or after production, treatment of leather during or after production, as additive for the handling and/or formulation of colours, pigments, inorganic salts such silver-salts as silver nitrate and the like, the production of metals, purification of dirty water such as sewage liquids from households, industry and mining activities, use in production in the metal industry such as semi-conductor production, metal quenching.

The graft polymers lead - the degree of it depending on the actual composition and amounts of grafted monomers and backbone within the inventive graft polymers - to an at least comparable and preferably even improved performance within such compositions or products or uses, for example in respect of redeposition of soils and removing of stains, avoiding or reducing re-soiling or greying or depositioning of solids, dispersion of actives in formulations of agrochemicals, pigments, colours, inorganic salts etc., inhibiting crystal growth including for inhibiting gas hydrate formation and/or reducing sedimentation and/or agglomeration, improve pigment dispersion stability, hydrophobisation of surfaces, reduction of growth of microbes on surfaces, and/or odor control etc., all compared to corresponding polymers or graft polymers according to the prior art. At least they can improve the overall bio-degradation ratio of such formulation, compositions and products by replacing nonbiodegradable polymers of similar structures or properties. They may thus be advantageously used - partly also depending on the monomer(s) B employed for grafting and thus adjusted in their performance to the specific needs of the specific applications; such monomer substitution pattern as possibly also derivable from the prior art of analogous graft polymers based on simple PEGs and polyalkylene glycols.

Beyond the performance in a certain type of application, the graft polymers according to the present invention lead to an improved biodegradability when being employed within such compositions or products, compared to the previously known graft polymers.

Graft polymers with enhanced biodegradation according to the current invention can be used advantageously in washing and cleaning compositions; due to the present of the nitrogen-containing monomers (B2a) and optional (B2b), and especially of the presence of (B2a), such graft polymers show a dye transfer inhibiting property, and thus are advantageously used as dye transfer inhibitors within fabric treating compositions, preferably laundry compositions, formulations and products, improve the washing and cleaning performances of the formulations. Moreover, they can provide as additional property at least some better dispersion of the removed soil in the washing or cleaning liquor and prevent its redeposition onto the surfaces of the washed or cleaned materials compared to formulations not using such graft polymers.

In another embodiment they can be employed in agrochemical formulations containing agrochemical active ingredients; in such agrochemical formulations the graft polymers serve to disperse, avoid sedimentation, emulsify and/or stabilize such formulations, by e-g- acting on the agrochemical active such as avoiding or reducing the crystal growth of (semi)crystalline actives and/or the formulation ingredients as such or in the formulation as such. In another embodiment, they can be employed to provide better properties in the treatment of fabrics during and after production, the treatment of leather during and after production.

Such applications are also for example:
Technical applications: Such compositions and formulations include glues of any kind, non-water and - preferably - water-based liquid formulations or solid formulations, the use as dispersant in dispersions of any kind, such as in oilfield applications, automotive applications, typically where a solid or a liquid is to be dispersed within another liquid or solid.

Lacquer, paints and colorants formulations: Such compositions and formulations include non-water- and - preferably - water-based lacquer and colourants, paints, finishings. Agricultural Formulations: Such compositions and formulations include formulations and compositions containing agrochemical actives within a liquid, semi-solid, mixed-liquid-solid or solid environment.

Aroma Chemical-formulations: Such compositions and formulations include formulations which dissolve or disperse aroma chemicals in liquid or solid compositions, to evenly disperse and/or retain their stability, so as to retain their aroma profile over extended periods of time; encompassed are also compositions that show a release of aroma chemicals over time, such as extended release or retarded release formulations.

Hence, another subject matter of the present invention is the use of the graft polymers of the invention and/or obtained by or obtainable by a process of the invention and/or as detailed before in any of in this chapter before-mentioned applications, such as fabric care and home care products, in cosmetic and personal care formulations, as crude oil emulsion breaker, in technical applications including in pigment dispersions for ink jet inks, in formulations for electro plating, in cementitious compositions, in agrochemical formulations as e.g. dispersants, crystal growth inhibitor and/or solubilizer, in lacquer and colorants formulations, textile and leather treatment products for use during or after production, formulations containing inorganic salts such as especially silver salts, mining, metal production and treatment including metal refining and metal quenching, purification of liquids such as waste water from industry, production or consumers, preferably in agrochemical compositions and cleaning compositions and in fabric and home care products, in particular cleaning compositions for improved oily and fatty stain removal, removal of solid dirt such as clay, prevention of greying of fabric surfaces, and/or anti-scale agents and most preferably - for inhibiting the transfer of dyes, wherein the cleaning composition is preferably a laundry detergent formulation, more preferably a liquid laundry detergent formulation.

Another subject-matter of the present invention is, therefore, also a cleaning composition, fabric care and home care product, industrial and institutional cleaning product, agrochemical formulations, or a formulation or product for any of the previously mentioned applications and application fields, preferably in laundry detergents, in cleaning compositions and/or in fabric and home care products, each comprising at least one graft polymer as defined above or obtained by or obtainable by a process of the invention and/or as detailed herein.

Hence, a preferred subject matter of this invention is also the use of at least one inventive graft polymer and/or at least one graft polymer obtained or obtainable by the inventive process in fabric care and home care products, industrial and institutional cleaning product, agrochemical formulations, or a formulation or product for any of the previously mentioned applications and application fields, preferably in cleaning compositions and in laundry treatment, laundry care products and laundry washing products, more preferably a laundry detergent formulation, even more preferably a liquid laundry detergent formulation. In particular, the inventive graft polymer is employed in such composition/product/formulation for improved dye transfer inhibition.

Such inventive uses and inventive compositions/products encompass the use of the graft polymer as detailed herein and/or as obtainable from or obtained from the inventive process, such graft polymer resembling that as detailed above describing the polymer structure in any of its embodiments disclosed herein before, including any variations mentioned, and more specifically any of the preferred, more preferred etc. embodiments.

In one embodiment it is also preferred that the cleaning composition, fabric care and home care product, preferably laundry cleaning composition, a laundry treatment product or laundry care product or laundry washing product, more preferably liquid laundry detergent formulation or liquid laundry detergent product, containing at least one graft polymer of the invention and/or at least one graft polymer obtained or obtainable by the inventive process, such composition or product preferably exhibiting improved dye transfer inhibition properties, additionally comprises at least one enzyme, preferably selected from one or more lipases, hydrolases, amylases, proteases, cellulases, mannanases, xylanases, DNases, dispersins, pectinases, oxidoreductases, hemicellulases, phospholipases, esterases, pectinases, cutinases, lactases and peroxidases, and combinations of at least two of the foregoing types, preferably at least one protease.

The phrase "fabric care composition" is meant to include compositions and formulations designed for treating fabric. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, unit dose formulation, delayed delivery formulation, detergent contained on or in a porous substrate or nonwoven sheet, and other suitable forms that may be apparent to one skilled in the art in view of the teachings herein and detailed herein below when describing the compositions. Such compositions may be used as a pre-laundering treatment, a post- laundering treatment, or may be added during the rinse or wash cycle of the laundering operation, and as further detailed herein below when describing the use and application of the inventive graft polymers and compositions comprising such graft polymers.

At least one graft polymer as described herein and/or the at least one graft polymer obtained or obtainable by the inventive process as detailed before is present in said inventive compositions and products at a concentration of from about 0.05% to about 20%, preferably 0,05 to 10%, more preferably from about 0,1% to 8%, even more preferably from about 0.2% to about 6%, and further more preferably from about 0,2% to about 4%, and most preferably in amounts of up to 2%, each in weight % in relation to the total weight of such composition or product, and further including all ranges resulting from selecting any of the lower limits and any of the upper limits and all numbers in between those mentioned. Such composition or product in the area of cleaning may - and preferably does - further comprise from about 1% to about 70% by weight of the composition or product of a surfactant system; said compositions and products for cleaning are preferably exhibiting dye transfer inhibitor properties due to the presence of the inventive graft polymers.

Even more preferably, the cleaning compositions or fabric and home care products of the present invention as detailed herein before comprising at least one inventive graft polymer as detailed before and/or at least one graft polymer obtained or obtainable by the inventive process as detailed before, and optionally further comprising at least one surfactant or a surfactant system in amounts from about 1% to about 70% by weight of the composition or product, are those for primary cleaning (i.e. removal of stains) within laundry applications, and may additionally comprise at least one enzyme, preferably selected from one or more lipases, hydrolases, amylases, proteases, cellulases, mannanases, xylanases, DNases, dispersins, pectinases, oxidoreductases, hemicellulases, phospholipases, esterases, pectinases, cutinases, lactases and peroxidases, and combinations of at least two of the foregoing types, preferably at least one protease.

In one preferred embodiment, the cleaning composition of the present invention is a liquid or solid laundry detergent composition, preferably a liquid laundry detergent composition.

In one embodiment, the inventive graft polymers may be utilized in cleaning compositions or products comprising a surfactant system comprising C10-C15 alkyl benzene sulfonates (LAS) as the primary surfactant and one or more additional surfactants selected from nonionic, cationic, amphoteric, zwitterionic or other anionic surfactants, or mixtures thereof.

In a further embodiment, the inventive graft polymers may be utilized in the cleaning compositions or fabric and home care product, preferably a laundry cleaning composition, a laundry care product or laundry treatment product or laundry washing product, preferably a liquid laundry detergent formulation or liquid laundry detergent product, comprising C8-C18 linear or branched alkyl ethersulfates with 1-5 ethoxy-units as the primary surfactant and one or more additional surfactants selected from non-ionic, cationic, amphoteric, zwitterionic or other anionic surfactants, or mixtures thereof.

In a further embodiment the inventive graft polymers may be utilized in cleaning compositions or fabric and home care product, preferably a laundry cleaning composition, a laundry care product or laundry washing product, preferably a liquid laundry detergent formulation or liquid laundry detergent product, comprising C12-C18 alkyl ethoxylate surfactants with 5-10 ethoxy-units as the primary surfactant and one or more additional surfactants selected from anionic, cationic, amphoteric, zwitterionic or other non-ionic surfactants, or mixtures thereof.

In one embodiment of the present invention, the graft polymer is a component of a cleaning compositions or fabric and home care product, preferably a laundry cleaning composition, a laundry care product or laundry treatment product or laundry washing product, preferably a liquid laundry detergent formulation or liquid laundry detergent product, that each additionally comprise at least one surfactant, preferably at least one anionic surfactant.

In a further embodiment, this invention also encompasses a composition comprising a graft polymer and/or a polymer backbone each as descried herein before, further comprises an antimicrobial agent as disclosed hereinafter, preferably selected from the group consisting of 2-phenoxyethanol, more preferably comprising said antimicrobial agent in an amount ranging from 2ppm to 5% by weight of the composition; even more preferably comprising 0.1 to 2% of phenoxyethanol.

In a further embodiment, this invention also encompasses a method of preserving an aqueous composition against microbial contamination or growth, such composition comprising a graft polymer and/or a polymer backbone each as described herein before, such composition being preferably a detergent composition, such method comprising adding at least one antimicrobial agent selected from the disclosed antimicrobial agents as disclosed hereinafter, such antimicrobial agent preferably being 2-phenoxyethanol.

In a further embodiment, this invention also encompasses a composition, preferably a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether in a concentration from 0.001 to 3%, preferably 0.002 to 1%, more preferably 0.01 to 0.6%, each by weight of the composition.

In a further embodiment, this invention also encompasses a method of laundering fabric or of cleaning hard surfaces, which method comprises treating a fabric or a hard surface with a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether.

The selection of the additional surfactants in these embodiments may be dependent upon the application and the desired benefit.

### Description of cleaning compositions, formulations and their ingredients

Hence, another subject matter of the present invention is the use of the graft polymer of this invention and/or obtained by or obtainable by a process of the invention and/or as detailed before, in fabric and home care products, in particular cleaning compositions for improved oily and fatty stain removal, removal of solid dirt such as clay, prevention of greying of fabric surfaces, and/or anti-scale agents, wherein the cleaning composition is preferably a laundry detergent formulation and/or a dish wash detergent formulation, more preferably a liquid laundry detergent formulation and/or a liquid manual dish wash detergent formulation.

Another subject-matter of the present invention is, therefore, also a cleaning composition, fabric and home care product, industrial and institutional cleaning product, preferably in laundry detergents, in cleaning compositions and/or in fabric and home care products, each comprising at least one graft polymer as defined above or obtained by or obtainable by a process of the invention and/or as detailed herein.

A further subject-matter of the present invention is a fabric and home care product, cleaning composition, industrial and institutional cleaning product, preferably a laundry detergent, a cleaning composition and/or a fabric and home care product, each containing at least one graft polymer of the invention and/or as described above.

In a preferred embodiment, it is a cleaning composition and/or fabric and home care product and/or industrial and institutional cleaning product, comprising at least one graft polymer as defined above. In particular, it is a cleaning composition for improved cleaning performance, especially improved primary washing, preferably a laundry detergent formulation and/or a manual dish wash detergent formulation, more preferably a liquid laundry detergent formulation and/or a liquid manual dish wash detergent formulation.

In a preferred embodiment, the cleaning composition of the present invention is a liquid or solid laundry detergent composition, preferably a liquid laundry detergent composition.

In another embodiment, the cleaning composition of the present invention is a liquid or solid (e.g. powder or tab/unit dose) detergent composition for manual or automatic dish wash, preferably a liquid manual dish wash detergent composition. Such compositions are known to a person of skill in the art.

In another embodiment, the cleaning composition of the present invention is a hard surface cleaning composition that may be used for cleaning various surfaces such as hard wood, tile, ceramic, plastic, leather, metal, glass.

In a preferred embodiment of the present invention, the inventive graft polymer is a component of a cleaning compositions or fabric and home care product, preferably a laundry cleaning composition, a laundry care product or laundry treatment product or laundry washing product, preferably a liquid laundry detergent formulation or liquid laundry detergent product, that each additionally comprise at least one surfactant, preferably at least one anionic surfactant.

In one embodiment, the inventive graft polymer may be utilized in cleaning compositions comprising a surfactant system comprising C10-C15 alkyl benzene sulfonates (LAS) as the primary surfactant and one or more additional surfactants selected from non-ionic, cationic, amphoteric, zwitterionic or other anionic surfactants, or mixtures thereof.

In a further embodiment the inventive graft polymer may be utilized in cleaning compositions or fabric and home care product, preferably a laundry cleaning composition, a laundry care product or laundry washing product, preferably a liquid laundry detergent formulation or liquid laundry detergent product, comprising C12-C18 alkyl ethoxylate surfactants with 5-10 ethoxy-units as the primary surfactant and one or more additional surfactants selected from anionic, cationic, amphoteric, zwitterionic or other non-ionic surfactants, or mixtures thereof.

In a further embodiment, the inventive graft polymer may be utilized in the cleaning compositions or fabric and home care product, preferably a laundry cleaning composition, a laundry care product or laundry treatment product or laundry washing product, preferably a liquid laundry detergent formulation or liquid laundry detergent product, comprising C8-C18 linear or branched alkyl ethersulfates with 1-5 ethoxy-units as the primary surfactant and one or more additional surfactants selected from non-ionic, cationic, amphoteric, zwitterionic or other anionic surfactants, or mixtures thereof.

In one embodiment of the present invention, the graft polymer is a component of a cleaning composition, such as preferably a laundry or a dish wash formulation, more preferably a liquid laundry or manual dish wash formulation, that each additionally comprise at least one surfactant, preferably at least one anionic surfactant.

In a further embodiment, this invention also encompasses a composition comprising at least one graft polymer as described herein before, further comprises an antimicrobial agent as disclosed hereinafter, preferably selected from the group consisting of 2-phenoxyethanol, more preferably comprising said antimicrobial agent in an amount ranging from 2ppm to 5% by weight of the composition; even more preferably comprising 0.1 to 2% of phenoxyethanol.

In a further embodiment, this invention also encompasses a composition, preferably a cleaning composition, more preferably a liquid laundry detergent composition or a liquid hand dish composition, even more preferably a liquid laundry detergent composition, or a liquid softener composition for use in laundry, such composition comprising a graft polymer in the amounts detailed before as described herein before, such composition further comprising 4,4'-dichoro 2-hydroxydiphenylether in a concentration from 0.001 to 3%, preferably 0.002 to 1%, more preferably 0.01 to 0.6%, each by weight of the composition.

In a further embodiment, this invention also encompasses a composition, specifically a cleaning composition, more preferably a cleaning composition in liquid, solid or semi-solid form, preferably being a concentrated liquid detergent formulation, single mono doses laundry detergent formulation, liquid hand dish washing detergent formulation or solid automatic dish washing formulation, more preferably a laundry detergent formulation, comprising a graft polymer as described herein before and in the amounts as detailed before, such composition being preferably a detergent composition, such composition further comprising an antimicrobial agent as disclosed hereinafter, preferably selected from the group consisting of 2-phenoxyethanol, more preferably comprising said antimicrobial agent in an amount ranging from 2ppm to 5% by weight of the composition; even more preferably comprising 0.1 to 2% of phenoxyethanol.

In a further embodiment, this invention also encompasses a method of preserving an aqueous composition against microbial contamination or growth, such composition, specifically a cleaning composition, more preferably a cleaning composition in liquid, solid or semi-solid form, preferably being a concentrated liquid detergent formulation, single mono doses laundry detergent formulation, liquid hand dish washing detergent formulation or solid automatic dish washing formulation, more preferably a laundry detergent formulation, comprising a graft polymer as described herein before and in the amounts detailed before, such composition being preferably a detergent composition, such method comprising adding at least one antimicrobial agent selected from the disclosed antimicrobial agents as disclosed hereinafter, such antimicrobial agent preferably being 2-phenoxyethanol.

In a further embodiment, this invention also encompasses a method of laundering fabric or of cleaning hard surfaces, which method comprises treating a fabric or a hard surface with a cleaning composition, more preferably a liquid laundry detergent composition or a liquid hand dish composition, even more preferably a liquid laundry detergent composition, or a liquid softener composition for use in laundry, such composition comprising a graft polymer in the amounts detailed before, such composition further comprising 4,4'-dichoro 2-hydroxydiphenylether.

As used herein the phrase "cleaning composition" as used for the inventive compositions and products includes compositions and formulations designed for cleaning soiled material. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the rinse or wash cycle of the laundering operation. The cleaning compositions may have a form selected from liquid, powder, single-phase or multi-phase unit dose, pouch, tablet, gel, paste, bar, or flake.

The cleaning compositions of the invention comprise a surfactant system in an amount sufficient to provide desired cleaning properties. In some embodiments, the cleaning composition comprises, by weight of the composition, from about 1% to about 70% of a surfactant system. In other embodiments, the liquid cleaning composition comprises, by weight of the composition, from about 2% to about 60% of the surfactant system. In further embodiments, the cleaning composition comprises, by weight of the composition, from about 5% to about 30% of the surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material.

Even more preferably, the compositions or products of the present invention as detailed herein before comprising at least one inventive graft polymer obtained or obtainable by the inventive process as detailed herein and in the amounts as specified in the previous paragraph, optionally further comprising at least one surfactant or a surfactant system in amounts from about 1% to about 70% by weight of the composition or product, are preferably those for primary cleaning (i.e. removal of stains) and more preferably within laundry applications, and may additionally comprise at least one enzyme selected from lipases, hydrolases, amylases, proteases, cellulases, mannanases, hemicellulases, phospholipases, esterases, xylanases, DNases, dispersins, pectinases, oxidoreductases, cutinases, lactases and peroxidases, more preferably at least two of the aforementioned types.

The phrase "cleaning composition" as used herein includes compositions and formulations and products designed for cleaning soiled material. Such compositions, formulations and products include those designed for cleaning soiled material or soiled surfaces of any kind.

Compositions for "industrial and institutional cleaning" includes such cleaning compositions being designed for use in industrial and institutional cleaning, such as those for use of cleaning soiled material or surfaces of any kind, such as hard surface cleaners for surfaces of any kind, including tiles, carpets, PVC-surfaces, wooden surfaces, metal surfaces, lacquered surfaces.

"Compositions for Fabric and Home Care" include cleaning compositions including but not limited to laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the rinse or wash cycle of the laundering operation, preferably during the wash cycle of the laundering or dish washing operation.

The cleaning compositions of the invention may be in any form, namely, in the form of a liquid; a solid such as a powder, granules, agglomerate, paste, tablet, pouches, bar, gel; an emulsion; types delivered in dual- or multi-compartment containers; single-phase or multiphase unit dose; a spray or foam detergent; premoistened wipes (i.e., the cleaning composition in combination with a nonwoven material such as that discussed in US 6,121,165, Mackey, et al.); dry wipes (i.e., the cleaning composition in combination with a nonwoven materials, such as that discussed in US 5,980,931, Fowler, et al.) activated with water by a user or consumer; and other homogeneous, non-homogeneous or single-phase or multiphase cleaning product forms.

The liquid cleaning compositions of the present invention preferably have a viscosity of from 50 to 10000 mPa*s; liquid manual dish wash cleaning compositions (also liquid manual "dish wash compositions") have a viscosity of preferably from 100 to 10000 mPa*s, more preferably from 200 to 5000 mPa*s and most preferably from 500 to 3000 mPa*s at 20 1/s and 20°C; liquid laundry cleaning compositions have a viscosity of preferably from 50 to 3000 mPa*s, more preferably from 100 to 1500 mPa*s and most preferably from 200 to 1000 mPa*s at 20 1/s and 20°C.

The cleaning compositions may also contain adjunct cleaning additives. Suitable adjunct cleaning additives include builders, structurants or thickeners, clay soil removal/antiredeposition agents, polymeric soil release agents, polymeric dispersing agents, polymeric grease cleaning agents, enzymes, enzyme stabilizing systems, bleaching compounds, bleaching agents, bleach activators, bleach catalysts, brighteners, dyes, hueing agents, dye transfer inhibiting agents, chelating agents, suds suppressors, softeners, and perfumes.

All such cleaning compositions, their ingredients including (adjunct) cleaning additives, their general compositions and more specific compositions are known, as for example illustrated in the publications 800542 and 800500 as published by Protegas, Liechtenstein, and also from WO 2022/136409 and WO 2022/136408, wherein in any of the before prior art documents the COMPOUND within the general compositions and also each individualized specific cleaning composition disclosed in the beforementioned publications may be replaced partially or completely by the graft polymer of this present invention. In those beforementioned documents, also various types of formulations for cleaning compositions are disclosed; all such composition types - the general compositions and also each individualized specific cleaning composition - can be equally applied also to those cleaning compositions contemplated herein.

Hence, the present invention also encompasses any and all of such disclosed compositions of the before-mentioned prior art-disclosures but further comprising at least one of the inventive graft polymer in addition to or as a replacement for any already ins such prior artcomposition contained graft polymer or any such compound, which can be replaced by such inventive graft polymer - such replacements known to a person of skill in the art - , with the content of the inventive graft polymer being present in said formulations at a concentration of generally from 0,05 to 20 wt.%, preferably 0.05 to 10%, more preferably from about 0.1% to 8%, even more preferably from about 0.2% to about 6%, and further more preferably from about 0.2% to about 4%, and most preferably in amounts of up to 2%, each in weight % in relation to the total weight of such composition or product..

The liquid cleaning compositions of the present invention may have any suitable pH-value. Preferably the pH of the composition is adjusted to between 4 and 14. More preferably the composition has a pH of from 6 to 13, even more preferably from 6 to 10, most preferably from 7 to 9. The pH of the composition can be adjusted using pH modifying ingredients known in the art and is measured as a 10% product concentration in demineralized water at 25°C. For example, NaOH may be used and the actual weight% of NaOH may be varied and trimmed up to the desired pH such as pH 8.0. In one embodiment of the present invention, a pH >7 is adjusted by using amines, preferably alkanolamines, more preferably triethanolamine.

The selection of the additional surfactants and further ingredients in these embodiments may be dependent upon the application and the desired benefit.

It is preferred, that within the respective laundry detergent, cleaning composition and/or fabric and home care product, the at least one graft polymer as described in this invention is present at a concentration of from about 0.1% to about 10%, preferably from about 0.2% to 5%, more preferably from about 0.5% to about 5%, all in relation to the total weight of such composition or product in relation to the total weight of such composition or product, and all numbers in between, and including all ranges resulting from selecting any of the lower limits mentioned and including further 0.2, 0.3, 0.4, 1, 1,5, 2, 2.5, 3, 3.5 and 4, and combing with any of the upper limits mentioned and including 19, 18, 17, 16, 14, 13, 12, 11, 9, 8, 7, and 6.

The specific embodiments as described throughout this disclosure are encompassed by the present invention as part of this invention; the various further options being disclosed in this present specification as "optional", "preferred", "more preferred", "even more preferred" or "most preferred" options of a specific embodiment may be individually and independently (unless such independent selection is not possible by virtue of the nature of that feature or if such independent selection is explicitly excluded) selected and then combined within any of the other embodiments (where other such options and preferences can be also selected individually and independently), with each and any and all such possible combinations being included as part of this invention as individual embodiments.

The following examples shall further illustrate the present invention without restricting the scope of the invention.

### Examples

### Polymer measurements

K-value measures the relative viscosity of dilute polymer solutions and is a relative measure of the average molecular weight. As the average molecular weight of the polymer increases for a particular polymer, the K-value tends to also increase. The K-value is determined in a 3% by weight NaCl solution at 23°C and a polymer concentration of 1% polymer according to the method of H. Fikentscher in "Cellulosechemie", 1932, 13, 58.

The number average molecular weight Mn, the weight average molecular weight Mw and the polydispersity Mw/Mn of the polalkylene oxide polymers (the esterified mixtures) for use as polymer backbone A were determined by gel permeation chromatography in tetrahydrofuran. As mobile phase (eluent), tetrahydrofuran comprising 0.035 mol/L diethanolamine was used. The concentration of the esterified polymers in tetrahydrofuran was 2.0 mg per mL. After filtration (pore size 0.2 µm), 100 µL of this solution were injected into a GPC system. Four different columns (heated to 60°C) were used for separation (SDV precolumn, SDV 1000A, SDV 100 000A, SDV 1 000 000A). The GPC system was operated at a flow rate of 1 mL per min. A DRI Agilent 1100 was used as the detection system. Polyethylene glycol) (PEG) standards (PL) having a molecular weight Mn from 106 to 1 378 000 g/mol were used for the calibration.

The biodegradation of the polyalkylene oxide polymers for use as polymer backbone A was tested in waste water in triplicate using the OECD 301B manometric respirometry method. 30 mg/mL test substance is inoculated into waste water taken from the waste water treatment plant of Mannheim (Germany) and incubated in a closed flask at 25°C for 28 days. The consumption of oxygen during this time is measured as the change in pressure inside the flask using an OxiTop C (WTW). Evolved CO2 is absorbed using an NaOH solution. The amount of oxygen consumed by the microbial population during biodegradation of the test substance, after correction using a blank, is expressed as percentage of the theoretical oxygen demand ("ThOD").

### Polyalkylene oxide polymers for use as polymer backbone A - Synthesis

### Examples 1 to 3 - Oxidation of PAG

In examples 1 to 3, polyalkylene oxides with two primary OH end groups (called "diol") were oxidized to mixtures containing at least a polyalkylene oxide with two COOH end groups (called "diacid") and a polyalkylene oxide with one primary OH and one COOH end group (called "monoacid"), and, optionally, also remaining polyalkylene oxide with two primary OH end groups. The mixtures were prepared as follows.

Platinum on charcoal (5.0 wt.-% Pt on C, water content: 59.7 wt.-%, 283 g, 29.2 mmol Pt) was suspended in a mixture of polyalkylene oxide comprising two primary OH end groups (details see table 1) and water (details see table 1), heated to 52°C and stirred at 800 rpm. Oxygen was passed through the stirred mixture (20 nL/h) via a glass tube, equipped with a glass frit and the temperature was allowed to rise to 60°C. Oxygen dosage and temperature were maintained for the period mentioned in table 1, the oxygen dosage was then stopped and the mixture was allowed to cool down to room temperature. Solids were separated from the liquid phase by filtration and the filter cake was washed with 500 mL of warm water. The washing water was mixed with the filtrate. Water was removed from the liquid mixture by distillation over a wiped film evaporator (overall height: 87.2 cm, diameter: 3.54 cm, wiped height: 43 cm, feed: 4.0 mL/min, 44°C, 1.8 kPa abs, 600 rpm). The sump product from the wiped film evaporator was analyzed. The content of OH-groups determined by determination of the hydroxy number, and the content of COOH-groups determined by determination of the acid number. The conversion of the polyalkylene oxides in the partial oxidation was derived from the acid number resp. by ¹H NMR.

### Examples 4 and 5 - Esterification

Examples 4 and 5 relate to the esterification of the oxidized polyalkylene oxide mixtures obtained by examples 1 to 3.

In examples 4 and 5, a mixture of polyalkylene oxides (see table 2) obtained by the oxidation procedures described in examples 1 to 3, the diol (see table 2) and the esterification catalyst (see table 2) were mixed and heated for a period of time mentioned in table 2 under vacuum at a pressure of 1 kPa abs, whereby the temperature was slowly increased from 125°C at the beginning to 145°C at the end.

The obtained esterified mixture was then analyzed, and the K-value, the number average molar mass Mn and the molecular weight distribution Mw determined as described above.

**Polymer backbone-Table 1 - Oxidation of PAG Examples 1 to 3**

| Example | Ex. 1 | Ex. 2 | Ex. 3 |
|---|---|---|---|
| Type ^{#1} and molecular average molecular weight M_{w} [g/mol] of polyalkylene oxide | EO 600 | EO 600 | EO 1450 |
| Number average of number of ether groups | 12 | 12 | 33 |
| Amount of polyalkylene oxide [g] | 1500 | 1750 | 1500 |
| Amount of water [g] | 3500 | 4083 | 3500 |
| Oxidation time [h] | 72 | 8,33 | 11 |
| Ratio of oxidized OH groups [%] ^{#2} | >99^{#2} | 51^{#2} | 55^{#3} |
| Acid number [mg KOH/g] | 55 | 28 | - |
| Physical property | solid | solid | solid |

| | | | |
|---|---|---|---|
| ^{#1} EO = polyethylene oxide / EOPOEO = polypropylene oxide with -CH₂CH₂OH end groups ^{#2} Calculated on basis of acid number of reaction solution ^{#3} Calculated on basis of ¹H NMR | | | |

**Polymer backbone-Table 2 - Esterification to PAG-Ester Examples 4 to 5**

| Example | Ex. 4 | Ex. 5 |
|---|---|---|
| Polymer backbone descriptor | A1 | A2 |
| Educt | Ex. 1 (76.0 g) + Ex. 2 (1100 g) | Ex. 3 (732 g) |
| Esterification catalyst ^{#1,2} | 0.83 wt.-% TIB Kat 620^{#2} | 0.07 wt-% TIB Kat 620^{#2} |
| Further diol ^{#3} | PEG 600 (136 g) | PEG 1500 (7.32 g) |
| Reaction time [h] | 68 | 117 |
| K-value | 27.0 | 23.0 |
| Mₙ [g/mol] | 2720 | 4260 |
| M_{w} [g/mol] | 6910 | 7010 |
| PD (= M_{w}/Mₙ) | 2.54 | 1.64 |

Annotation to Polymer backbone-Table 2:
^{#1} cat = Zn-octanoate
^{#2} wt.-% relates to the educt mixture plus water.
^{#3} PEG = polyethylene glycol = polyethylene oxide with two primary OH end groups.

### Graft Polymer examples

The following (general) procedures were performed using the starting material ("Educt") and ratios and amounts as further indicated in Graft Polymer-Table 1.

### Synthesis Procedures for comparative examples:

| | |
|---|---|
| Comp. Ex. I: | Copolymer of N-vinylpyrrolidone and 1-N-vinylimidazole, weight ratio 1:1; K-value approximately 30; obtainable as e.g. Sokalan HP 56 from BASF. |
| Comp. Ex. II: | Graft polymerization of vinyl acetate (30 wt.-%) and vinyl pyrrolidone (20 wt.-%) on PEG (Mₙ 6000 g/mol; 50 wt.-%) Experimental procedure was performed according to US 2019/0390142 A1 Example 1K. |
| Comp. Ex. III: | "Graft" polymerization of vinyl imidazole (40 wt.-%) and vinyl pyrrolidone (40 wt.-%) in the presence of PEG (Mₙ 600 g/mol; 20 wt.-%) Experimental procedure was performed according to Example 6 in WO 03/042264 A2. |

Comp. Ex. IV: Graft polymerization of vinyl acetate (20 wt.%), vinyl imidazole (2 wt.%) and vinyl pyrrolidone (13 wt.%) on EO/PO backbone (MW 1950 g/mol; 50% EO; 65 wt%)

| Example | Polymer Backbone Mₙ [g/mol] | Polymer Backbo ne %EO | Polymer Backbon e Structure | Sidechain Monomers (B) | Weight Ratio of Polymer Backbone to Sidechain Monomers (A):(B1):(B2a):(B2b ) | Biodegrada tion [%], 28d |
|---|---|---|---|---|---|---|
| ***Comp. Ex. I*** | - | - | - | VI / VP | 0:0:50:50 | < 5 |
| ***Comp. Ex. II*** | 6000 | 100 | C | VAc / VP | 50:30:0:20 | 15 |
| **Comp. Ex. III** | 600 | 100 | C | VP | 15:0:30:55 | 12 |
| **Comp. Ex. IV** | 1950 | 50 | A2 | VAc / VI / VP | 65:20:2:13 | 35 |

### Graft polymers - general synthesis for Ex. 6 to 9 (details as shown in the Graft-Polymer-Table 3 below) (process using organic solvent for initiator; no additional solvent for polymerization)

In each of the examples 6 to 9, 65.0 g of the polymer backbone (A1 or A2) are added in a vessel equipped with a stainless steel anchor stirrer (and 2 other necks) and heated to 90°C.

Dosage of the vinyl-acetate was started and continued over 6 h with constant feed rate. Dosage of vinylimidazole and vinylpyrrolidone were started simultaneously and dosed within 5:30 h with a constant feed rate. At the same time a initiator solution (50.0 g) t-butylperoxy-2-ethylhexanoate was dosed as a 5.2% solution in tripropylene glycol with a feed rate of 6.09 g/h for the first 10 min, additional 5:50 h with a feed rate of 5.14 g/h and afterwards, the remaining amount was added within 1 h. After the completion of the feeds, the reaction mixture is stirred for another 60 minutes at 90 °C. Finally, volatile components were stripped for 90 minutes at 100°C with nitrogen at a feed rate of 6 L N2/h, followed by vacuum distillation at 60°C and 40 mbar for approximately 1 hour for completion of volatile removal.

### Graft polymers - general synthesis for Ex. 10 and 11 (details as shown in the GraftPolymer-Table 3 below) (process using water as main solvent)

In each of the examples 10 and 11, 56.3 g of the polymer backbone A1 and 56.3 g of demineralized water were added in a vessel equipped with a stainless steel anchor stirrer (and 2 other necks) and heated to 80°C. Dosage of the vinylimidazole, vinylpyrrolidone and an aqoueous solution of 0.3 g 2-mercaptoethanol in 15.3 g demineralized water was started and continued over 6 h with constant feed rate. At the same time an initiator solution (6.65 g) of t-butylperoxy-peroxypivalate was dosed as a 21.0% solution in tripropylene glycol over 6:30 h with a constant feed rate of 0.73 g/h. The remaining initiator solution is added within 1 h. After the completion of the feeds, the reaction mixture is stirred for another 60 minutes at 80 °C. Finally, volatile components were stripped for 3 h at 125°C by using steam distillation.

**Graft polymer -Table 3 - Examples 6 to 9**

| Exampl e | Backbon e (A) | Monome r VM 1 | Monomer VM 2 | Monomer VM 3 | Ratio A/VM1/VM2/V M3 | Mn g/mo l | Mw g/mol |
|---|---|---|---|---|---|---|---|
| Ex. 6 | A1 | Vinyl acetate | Vinylimidaz ol | Vinylpyrrolido n | 50/30/10/10 | 9340 | 5880 0 |
| Ex. 7 | A1 | Vinyl acetate | Vinylimidaz ol | Vinylpyrrolido n | 60/10/15/15 | 6840 | 3940 0 |
| Ex. 8 | A2 | Vinyl acetate | Vinylimidaz ol | Vinylpyrrolido n | 50/30/10/10 | 7470 | 3840 0 |
| Ex. 9 | A2 | Vinyl acetate | Vinylimidaz ol | Vinylpyrrolido n | 60/10/15/15 | 6450 | 3120 0 |

**Graft polymer -Table 4 - comparison of example 6 to 11 with Comp. Ex. I and II**

| Example | Back bone (A) | Back bone (A) MW | Monome r | Monomer | Monomer | Ratio | Biodeg. |
|---|---|---|---|---|---|---|---|
| | | | VM 1 | VM 2 | VM 3 | A/VM1/VM2/ VM3 | [%] |
| **Comp. Ex. I** | - | - | Vinylimid azol | Vinyl pyrrolidon | - | 0/50/50 | 0 |
| **Comp. Ex. II** | PEG 6000 | 6000 | Vinylacet ate | Vinyl pyrrolidon | - | 50/30/20 | 15 |
| Ex. 6 | A1 | 6910 | Vinyl acetate | Viny limidazol | Vinyl pyrrolidon | 50/30/10/10 | 45 |
| Ex. 7 | A1 | 6910 | Vinyl acetate | Viny limidazol | Vinyl pyrrolidon | 60/10/15/15 | 47 |
| Ex. 8 | A2 | 7010 | Vinyl acetate | Viny limidazol | Vinyl pyrrolidon | 50/30/10/10 | 42 |
| Ex. 9 | A2 | 7010 | Vinyl acetate | Viny limidazol | Vinyl pyrrolidon | 60/10/15/15 | 45 |
| Ex. 10 | A1 | 6910 | Vinylimid azol | Vinyl pyrrolidon | - | 70/20/10 | 46 |
| Ex. 11 | A1 | 6910 | Vinylimid azol | Vinyl pyrrolidon | - | 75/12.5/12.5 | 51 |

### Performance tests of graft polymer

Performance evaluations of the graft polymers can be obtained by laundry- and cleaningexperiments. Laundry experiments can be performed in washing machines or alternatively in equipment to perform model laundry experiments like Launderometer or Tergotometer.

### Evaluation of DTI performance (laundry experiments)

### Wash results:

Selected color fabric (EMPA 130 and EMPA 133 as dye donor) was washed at 60° C in the presence of white test fabric and polyester ballast fabric with addition of the dye transfer inhibitor. The liquid detergent based upon a mixture of anionic and noninonic surfactants (LAS; AES, AEO). After the wash cycle, the fabric was rinsed, spun and dried. In order to determine the dye transfer inhibiting effect, the staining of the white test fabric was ascertained photometrically. The color values in L*a*b was determined with a Colour Consult b.v. , Mach 5+, a camera-based multispectral color measurement instrument. Color Shift calculated in ΔΔE.

### Composition of the liquid detergent ("ES1_C")

| **Ingredient** | **[% by weight]** |
|---|---|
| Linear dodecylbenzenesulfonic acid | 5,5 |
| C12C14 fatty alcohol ether sulfate, Na salt | 5,4 |
| C13C15 oxo process alcohol with 7 EO | 5,4 |
| Coconut fatty acid K 12-18 | 2,4 |
| 1,2 propylene glycol | 6,0 |
| Ethanol | 2,0 |
| NaOH | 2,2 |
| Sodium citrate | 3,0 |
| DTI additive | 0,5 / 1,0 active material |
| Water | to 100 |

| | |
|---|---|
| DTI-additive / DTi polymer = at least one graft polymer of this invention | |

### Wash conditions

| | |
|---|---|
| Machine | Launder-o-meter, LP2 type, SDL Atlas Inc., USA |
| Detergent dosage | 1,7 g/L |
| Wash liquor | 250 ml water |
| Water hardness | Ca²⁺ : Mg²⁺ : HCO3⁻ 4:1:8 |
| Wash cycle | 1 |
| Fabric/liquor ratio | 1 : 12,5 |
| Wash duration | 20 min |
| Wash temperature | 60 °C |
| Color fabric | 1 g EMPA 130 |
| | 1 g EMPA 133 |
| Test fabric | 10 g wfk 10 A |
| | 5 g wfl 20 A |
| Ballast fabric | 5 g wfk 30 A, polyester fabric |

Explanation of abbreviations in previous table:
wfk 10 A: cotton fabric
wfk 20 A: polyester-cotton fabric
EMPA 130: cotton fabric dyed with Direct Red 83.1
EMPA 133: cotton fabric dyed with Direct Blue71
Manufacturer/supplier: wfk Testgewebe GmbH, Bruggen, Germany; EMPA Testmaterialien AG, Sankt Gallen, Switzerland

### Wash result for EMPA 130 color fabric (red colour) (evaluation in ΔΔE = ΔE (without) - Δ E (polymer))

| | Dosage DTI (two examples per DTI-polymer) | ΔΔE wfk 10 A | ΔΔE wfk 20 A |
|---|---|---|---|
| No DTI | | 0.0 | 0.0 |
| Comp. Ex I | 0,5 wt.% | 12.00 | 10.50 |
| | 1,0 wt.% | 12.24 | 10.65 |
| Comp. Ex. II | 0,5 wt.% | 0.16 | -0.14 |
| | 1,0 wt.% | 0.45 | 0.65 |
| Ex.6 PEG600-Acidester Graftpolymer with Vac / VI / VP (50:30:10:10 wt%) | 0,5 wt.% | 10.64 | 8.73 |
| | 1,0 wt.% | 11.09 | 8.96 |
| Ex. 7 PEG600-Acidester Graftpolymer with Vac / VI / VP (60:10:15:15wt%) | 0,5 wt.% | 11.38 | 8.98 |
| | 1,0 wt.% | 11.81 | 8.81 |
| Ex. 8 PEG1500-Acidester Graftpolymer with Vac / VI / VP (50:30:10:10 wt%) | 0,5 wt.% | 10.73 | 9.24 |
| | 1,0 wt.% | 11.00 | 9.62 |
| Ex.9 PEG1500-Acidester Graftpolymer with Vac / VI / VP (60:10:15:15wt%) | 0,5 wt.% | 11.35 | 9.28 |
| | 1,0 wt.% | 11.82 | 9.64 |
| Ex.10 PEG-Ester 600 / VI / VP (70 / 20 / 10) | 0,5 wt.% | 11.86 | 9.70 |
| | 1,0 wt.% | 12.01 | 9.21 |
| Ex. 11 PEG-Ester 1500 / VI / VP (75 / 12.5 / 12.5) | 0,5 wt.% | 9.58 | 9.66 |
| | 1,0 wt.% | 10.11 | 10.03 |

### Wash result for EMPA 133 color fabric (blue color) (evaluation in ΔΔE = ΔE (without) - Δ E (polymer))

| | Dosage DTI (two examples per DTI-polymer) | ΔΔE wfk 10 A | ΔΔE wfk 20 A |
|---|---|---|---|
| No DTI | | 0.0 | 0.0 |
| Comp. Ex I | 0,5 wt.% | 20.44 | 18.35 |
| | 1,0 wt.% | 22.49 | 19.24 |
| Comp. Ex. II | 0,5 wt.% | 4.11 | 4.48 |
| | 1,0 wt.% | 5.66 | 7.19 |
| Ex.6 PEG600-Acidester Graftpolymer with Vac / VI / VP (50:30:10:10 wt%) | 0,5 wt.% | 5.25 | 5.05 |
| | 1,0 wt.% | 8.85 | 9.15 |
| Ex. 7 PEG600-Acidester Graftpolymer with Vac / VI / VP (60:10:15:15wt%) | 0,5 wt.% | 9.34 | 9.06 |
| | 1,0 wt.% | 16.47 | 14.89 |
| Ex. 8 PEG1500-Acidester Graftpolymer with Vac / VI / VP (50:30:10:10 wt%) | 0,5 wt.% | 5.10 | 5.78 |
| | 1,0 wt.% | 9.12 | 10.14 |
| Ex.9 PEG1500-Acidester Graftpolymer with Vac / VI / VP (60:10:15:15wt%) | 0,5 wt.% | 8.91 | 8.31 |
| | 1,0 wt.% | 16.05 | 15.52 |
| Ex.10 PEG-Ester 600 / VI / VP (70 / 20 / 10) | 0,5 wt.% | 9.66 | 8.99 |
| | 1,0 wt.% | 17.80 | 15.92 |
| Ex. 11 PEG-Ester 1500 / VI / VP (75 / 12.5 / 12.5) | 0,5 wt.% | 1.28 | 1.23 |
| | 1,0 wt.% | 2.47 | 1.49 |

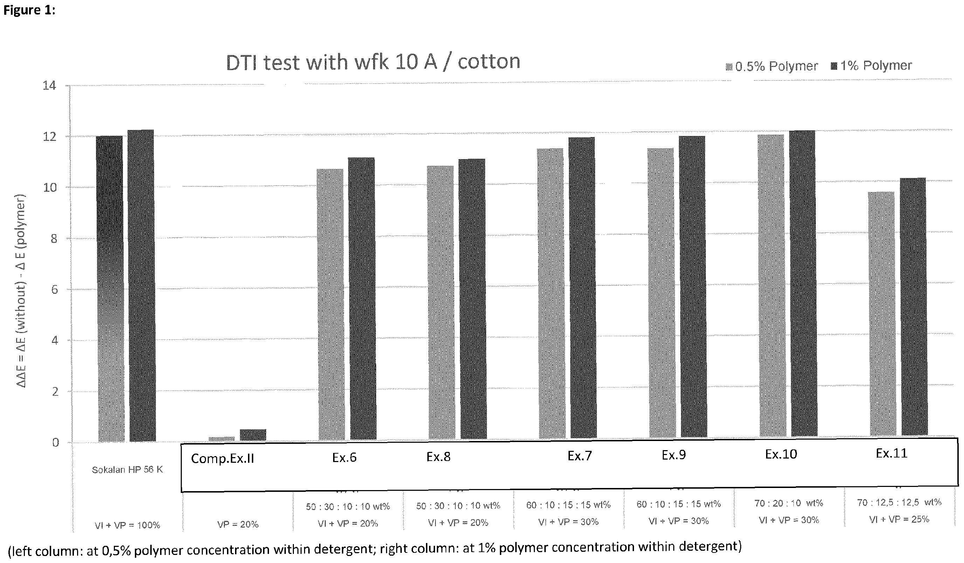

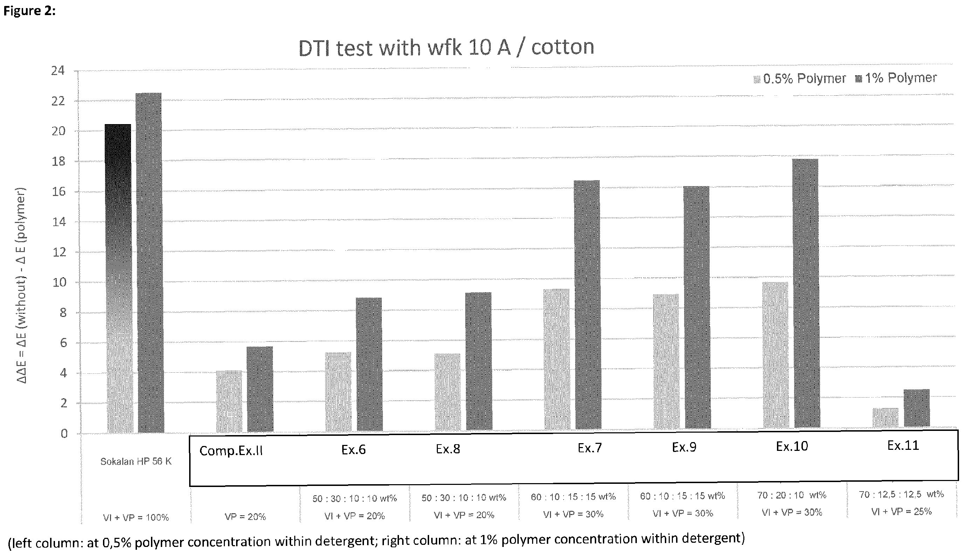

See also the results shown in Figure 1 and Figure 2.

## Claims

1. Graft polymer comprising
(A) a polymer backbone as a graft base, wherein said polymer backbone (A) is obtainable by condensation comprising
i) diols of poly alkylene oxides (PAG-DO),
ii) di-carboxylic acids of PAG (PAG-DC), and/or
iii) mono-carbonic acid mono-ols of PAG (PAG-MC),
wherein either at least a compound selected from iii) is present, or - when only i) and ii) are present - at least two internal ester-groups are present, and
with the PAG being obtained by polymerization of at least one monomer being selected from 1,2-alkylene oxides such as ethylene oxide, 1,2-propylene oxide, 1,2-butylene oxide, 2,3-butylene oxide, 1,2-pentene oxide or2,3-pentene oxide; from 1,4-diols or their cyclic or oligomeric analogs, or the PAG being based on polymeric ethers of such 1,4-diols; from 1,6-diols or their cyclic or oligomeric analogs, or the PAG being based on polymeric ethers of such 1,6-diols; or any of their mixtures in any ratio, either as blocks of certain polymeric units, or as statistical polymeric structures, or a polymers comprising one or more homo-blocks of a certain monomer and one or more statistical blocks comprising more than one monomer, and any combination thereof such as polymers having several different blocks of different monomers, or blocks of two different monomers, blocks of statistical mixtures of two or more monomers etc.,
and optionally other non-polymeric di-carboxylic acid compounds which may be present in addition to compound ii), and
and
(B) polymeric sidechains grafted onto the polymer backbone (A), wherein said polymeric sidechains (B) are obtainable by polymerization of at least one monomer (B2a) and optionally at least one of (B1) and (B2b), with the monomers
(B1) being at least one vinyl ester monomer, being preferably selected from vinyl acetate, vinyl propionate and vinyl laurate, more preferably from vinyl acetate and vinyl laurate, and even more preferably vinyl acetate, and most preferably only vinyl acetate, and wherein the remaining amount of vinyl ester may be any other known vinyl ester
and
(B2) with
(B2a) at least one olefinically unsaturated amine-containing monomer, preferably being 1-vinylimidazole or its derivatives such as alkyl-substituted derivatives of 1-vinylimidazole such as 2-methyl-1-vinylimidazole, more preferably 1-vinylimidazole
and
(B2b) optionally at least one further nitrogen-containing monomer, being preferably a vinyllactame-monomer, being preferably selected from N-vinyllactams, such as N-vinylpyrrolidone, N-vinylpiperidone, N-vinylcaprolactam, more preferably N-vinylpyrrolidone, N-vinylcaprolactam, and most preferably N-vinylpyrrolidone,
wherein
- optionally the molecular weight of the polymer backbone (A) as MW in g/mol is within 500 to 50000 and preferably at least 1000, and preferably not more than 25000, even more preferably not more than 10000,
- the amount of the polymer backbone (A) is from 30 to 90, preferably 50 to 90, more preferably 50 to 80, even more preferably 50 to 70; and
- the amount of polymeric side chains (B) is from 10 to 70, preferably 10 to 50, more preferably 20 to 50, even more preferably 30 to 50; and
- the amount of (B1) is from 0 to 50, preferably 1 to 50, more preferably 1 to 30, even more preferably 10 to 30; and
- the amount of (B2) is from more than 10 to 60, preferably 10 to 50, more preferably 10 to 40, even more preferably 10 to 30;
each of the amounts before in weight percent based on the total WEIGHT OF THE GRAFT POLYMER;
and
- the amount of (B2a) in weight percent based on the total amount of monomers (B2) is 5 to 100, preferably at least 7,5, more preferably at least 10, even more preferably 20 to 80, even further more preferably 30 to 70 and most preferably 30 to 50; and
- the amount of (B2b) in weight percent is equal to [100 % of the amount of (B2)] minus [the amount of (B2a)].

2. Graft polymer according to claim 1, comprising 10 to 560 ether groups and 2 to 51 ester groups, which are interconnected with alkylene groups, and wherein further low molecular weight di-carbonic acids may be contained in addition to the compounds iii).

3. Graft polymer according to any of claims 1 to 2, wherein the polymer backbone (A) is obtainable from at least one, preferably at least two, and more preferably at least three different polymer subunits linked by covalent ester-bonds, and optionally containing further low-molecular weight di-carboxylic acid compounds, wherein the polymer backbone is obtainable from the esterification reaction of
a) at least one mono-ol mono-carbonic acid of poly alkylene oxide (PAG) (PAG-MC) being reacted with itself
b) at least one di-ol of poly alkylene oxide (PAG) (PAG-DO) with at least one PAG containing two carbonic acids as end-group, i.e. a carbonic acid-group at both ends of the PAG) (PAG-DC); or
c) at least one mono-ol mono-carbonic acid of poly alkylene oxide (PAG) (PAG-MC) with at least one di-ol of poly alkylene oxide (PAG) (PAG-DO)and at least one PAG containing two carbonic acids as end-group, i.e. a carbonic acid-group at both ends of the PAG (PAG-DC);
wherein optionally within each a), b) and c) at least one low molecular weight dicarbonic acids may be contained in addition to the compounds "PAG-DC".

4. Graft polymer according to claim 3, wherein the polymer backbone is obtained from the reaction according to option c).

5. Graft polymer according to any of claims 1 to 4,
wherein the PAG of the PAG-DO, PAG-DC and PAG-MC may be independently selected from PAG-units consisting of one, two, three, four or more different alkylene oxide-monomer, preferably only three, more preferably only two, and most preferably only one, and
wherein in case of more than one alkylene oxide monomer being comprised the structure of the PAG is a block copolymer, a random polymer, or a polymer comprising mixed structures of block units (with each block being a homo-block or a random block itself) and statistical /random parts comprised of two or more alkylene oxides, and wherein the alkylene oxides preferably being selected from the group of ethylene oxide, 1,2-propylene oxide, 1,2-butylene oxide, 2,3-butylene oxide, 1,2-pentene oxide, 2,3-pentene oxide or C5- to C10-alkylene oxides, preferably C2 to C4, more preferably C2 and C3, and most preferably only C2, and
wherein each PAG-unit can be a block polymer, a random polymer or a polymer of mixed block-random-structure, and
wherein in case more than one PAG-DO, PAG-DC and/or PAG-MC are employed each PAG-DO, PAG-DC and PAG-MC may be independently selected from those described structures of the PAG-units.

6. Graft polymer according to any of claims 1 to 5, comprising
more than 0.2%, preferably more than 1% by weight of the polymeric sidechains (B) (in relation to the total weight of the graft polymer).

7. Graft polymer according to any of claims 1 to 6, the polymer backbone consisting only of ethylene oxide as PAG-units.

8. Graft polymer according to any of claims 1 to 7,
with a weight average molecular weight Mw of from 500 to 500 000 g/mol, preferably from 2 000 to 200 000 g/mol, more preferably from 2 000 to 100 000 g/mol, and even more preferably from 2 500 to 30 000 g/mol, or - if measured as defined herein in the experimental section - 2 000 to 200 000, more preferably 2 000 to 100 000, even more preferably 2 500 to 60 000 .

9. Graft polymer according to any of claims 1 to 8,
wherein the polymeric side chains (B) consist essentially of the following monomers:
i) (B1) is vinyl acetate, (B2a) is 1-vinyl imidazole, and (B2b) is a N-vinyllactame, preferably is N-vinylpyrrolidone; or
ii) (B1) is vinyl acetate, (B2a) is 1-vinyl imidazole, and (B2b) is not present; or
iii) (B1) is not present, (B2a) is 1-vinyl imidazole, and (B2b) is a N-vinyllactame, preferably is N-vinylpyrrolidone,
With i) and ii) being preferred, and i) being more preferred.

10. Graft polymer according to any of claims 1 to 9 with the following amounts:
(A) the amount of the polymer backbone is from 50 to 70; and
(B) the amount of polymeric side chains (B) is from 30 to 50; and
the amount of (B1) is from 10 to 30 (wherein only for claim 21 iii) this amount is zero); and
the amount of (B2) is from 10 to 30;
each of the amounts before in weight percent based on the total WEIGHT OF THE GRAFT POLYMER;
and
the amount of (B2a) in weight percent based on the total amount of monomers (B2) is 5 to 100, preferably at least 7,5, more preferably at least 10, even more preferably 20 to 80, even further more preferably 30 to 70 and most preferably 30 to 50; and the amount of (B2b) in weight percent is equal to [100 % of the amount of (B2)] minus [the amount of (B2a)].

11. The graft polymer according to any of claims 1 to 10, wherein wherein (B1) is vinyl acetate (wherein only for claim 21 iii) (B1) is not present), (B2a) is vinylimidazole, and (B2b) is a vinyl lactame, preferably vinyl pyrrolidone.

12. A process for obtaining a graft polymer according to any one of claims 1 to 11, wherein the at least one monomer selected from (B1), (B2a), and (B2b) with at least one of (B2a) being present, are polymerized in the presence of at least one polymer backbone (A), wherein the polymeric sidechains (B) are obtained by radical polymerization, using radical forming compounds to initiate the radical polymerization.

13. The process according to claim 12, comprising the polymerization of at least one monomer (B2a) and optionally at least one monomer (B1) and or (B2b), in the presence of at least one polymer backbone (A), a free radical-forming initiator (C) and, optionally at least one solvent (D) in amounts of up to 50% by weight, based on the sum of components (A), (B), (C), and solvent (D), at a mean polymerization temperature at which the initiator (C) has a decomposition half-life of from 40 to 500 min, in such a way that the fraction of unconverted graft monomers (B) and initiator (C) in the reaction mixture is constantly kept in a quantitative deficiency relative to the polymer backbone (A).

14. Process according to any of claims 12 to 13, wherein
a. solvent is employed only for introducing the radical initiator into the reaction mixture, and no further solvent is added; or
b. water is employed as solvent for the polymerization and organic solvent for introducing the radical initiator, and chain transfer agent, preferably mercaptoethanol, is employed, being preferably added as dilution in water;
with a. being preferred.

15. Process according to claim 14, wherein the process comprises at least one further process step selected from (a) and (b), with
(a) a post-polymerization process step (i.e step i)) that is performed after the main polymerization reaction, wherein preferably a further amount of initiator (optionally dissolved in the solvent(s)) is added over a period of 0,5 hour and up to 3 hours, preferably about 1 to 2 hours, more preferably about 1 hour, with the radical initiator and the solvent(s) for the initiator typically - and preferred - being the same as the ones for the main polymerization reaction;
and wherein after the polymerization reaction and before the post-polymerisation reaction preferably a period is waited when the main polymerization reaction is left to proceed, before the post-polymerisation reaction is started by starting the addition of further radical initiator, such period being preferably from 10 minutes and up to 4 hours, preferably up to 2 hours, even more preferably up to 1 hour, and most preferably up to 30 minutes;
and wherein the temperature of the post-polymerisation process step is - preferably - the same as in the main polymerization reaction, or is increased, such increase being preferably higher by about 5 to 40°C, preferably 10 to 20°C compared to the temperature of the main polymerisation reaction; and
(b) a step of subjecting the graft polymer as obtained from the main polymerization orif performed, the post-polymerisation process - to a means of ii) purification, iii) concentration and/or iv) drying or a combined step of such proceses steps to remove part of or almost all of the remaining solvent(s) (as far as they are removable due to their boiling points) and/or volatiles such as residual monomers, wherein
(b1) the concentration (step iii)) is performed by removing part of the solvent(s) and optionally also volatiles to increase the solid polymer concentration, by preferably applying a distillation process such as thermal or vacuum distillation, and/or applying stripping with gas such as steam or inert gas such as nitrogen, preferably vacuum distillation, which is performed until the desired solid content is achieved, preferably is performed until the desired part or all of the volatile components such as volatile solvents and/or unreacted, volatile monomers, are removed;
(b2) the drying (step iv)) is performed by subjecting the graft polymer containing at least residual amounts of volatiles such as remaining solvent and/or unreacted monomers etc. to a means of removing the volatiles, such as drying using a roller-drum, a spray-dryer, vacuum drying or freeze-drying, preferably - mainly for cost-reasons - spray-drying; and optionally combining such drying process step with a means of agglomeration or granulation to obtain agglomerated or granulated graft polymer particles, such process being preferably selected from spray-agglomeration, granulation or drying in a fluidized-bed dryer, spray-granulation device and the like;
and/or
(b3) such previous step(s) (i.e. steps iii) and/or iv)) also serve as a purification means (step ii)).

16. Use of at least one graft polymer according to any of claims 1 to 11 or obtained by or obtainable by the process according to any of claims 12 to 15 in a composition, that is a fabric and home care product, a cleaning composition, or an industrial and institutional cleaning product, a personal care product, an agrochemical formulation, a product for the treatment of fabric or leather during or after production of the fabric or leather, a composition containing metal inorganic salts, a composition used in mining or metal production or metal treatment such as quenching, a composition for use in semiconductor production, an aroma-chemical formulation.

17. The use according to claim 16, the composition being a fabric and home care product, a cleaning composition, or an industrial and institutional cleaning product, wherein the composition additionally comprises at least one enzyme, preferably selected from one or more lipases, hydrolases, amylases, proteases, cellulases, mannanases, hemicellulases, phospholipases, esterases, xylanases, DNases, dispersins, pectinases, oxidoreductases, cutinases, lactases and peroxidases, more preferably at least two of the aforementioned types, preferably using the graft polymer for inhibiting the transfer of dyes, and wherein the at least one graft polymer is present at a concentration of from about 0.05% to about 10% in weight % in relation to the total weight of such composition or product, and wherein such product or composition further comprising from about 1% to about 70% by weight of a surfactant system, and optionally further comprising at least one antimicrobial agent.

18. A laundry detergent, a cleaning composition or a fabric and home care product containing at least one graft polymer according to any of claims 1 to 11 or obtained by or obtainable by the process according to any of claims 12 to 15, preferably exhibiting dye transfer inhibition properties, wherein the at least one graft polymer is present at a concentration of from about 0.05% to about 10% in weight % in relation to the total weight of such composition or product, further comprising from about 1% to about 70% by weight of a surfactant system, optionally comprising at least one antimicrobial agent and/or at least one enzyme, optionally further comprising 2-phenoxyethanol as antimicrobial agent, preferably in an amount ranging from 2 ppm to 5%, more preferably comprising 0.1 to 2%, all by weight of the composition, and optionally comprising 4,4'-dichloro 2-hydroxydiphenylether in a concentration from 0.001 to 3%, preferably 0.002 to 1%, more preferably 0.01 to 0.6%, each by weight of the composition.
